Europäisches Patentamt

European Patent Office

Office européen des brevets

(19)

(11) **EP 1 199 678 A1**

(12) **DEMANDE DE BREVET EUROPEEN**

(43) Date de publication:
**24.04.2002 Bulletin 2002/17**

(51) Int Cl.$^7$: **G06N 5/04**

(21) Numéro de dépôt: **00402875.9**

(22) Date de dépôt: **17.10.2000**

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur: **Naillon, Martine**
**92330 Sceaux (FR)**

(72) Inventeur: **Naillon, Martine**
**92330 Sceaux (FR)**

(74) Mandataire: **Berger, Helmut**
**Cabinet WEINSTEIN**
**56 A, rue du Faubourg Saint-Honoré**
**75008 Paris (FR)**

(54) **Procédé de pilotago de processus décisionnel lors de la poursuite d'un but dans un domaine d'application déterminé, tel qu'économique, technique, organistionnel ou analogue**

(57) La présente invention concerne un procédé de pilotage de processus décisionnel lors de la poursuite d'un but dans un domaine d'application déterminé, tel qu'économique, technique ou analogue.

Le procédé est caractérisé en ce que l'on crée un système d'agents comportant des agents cognitifs créateurs d'objets de connaissances portables et des agents constructeurs d'objets de connaissances par ajout aux objets de connaissances créés, d'éléments de connaissances supplémentaires, on fait déclencher par le système le processus décisionnel à la suite de la constatation d'une anormalité dans des données réelles dudit domaine d'application par la création d'un premier objet de connaissance représentatif d'un indice d'alarme et fait établir plusieurs chemins décisionnels liés à cet objet, sous des points de vue différents par des agents différents, chacun dans son domaine, et on fait prendre la décision à la suite d'une fusion des chemins décisionnels.

L'invention s'applique dans le domaine de l'intelligence collective et de la gestion des connaissances.

Fig. 7

**Description**

La présente invention concerne un procédé de pilotage de processus décisionnel lors de la poursuite d'un but dans un domaine d'application déterminé, tel qu'économique, technique, organisationnel ou analogue et un système pour la mise en oeuvre du procédé.

Actuellement, dans le domaine de la gestion des connaissances la collecte d'informations relatives à des connaissances provenant de sources internes ou externes, telles qu'Intranet ou Internet, et leurs échanges entre différents services organisés pour les analyser et prendre des décisions dans un but poursuivi prédéterminé, nécessitent systématiquement l'intervention des personnes ou utilisateurs des services considérés.

Cette procédure connue de traitement d'informations a pour inconvénient d'être peu souple d'utilisation puisqu'elle nécessite obligatoirement la présence et l'intervention d'utilisateurs pour l'analyse et l'échange des connaissances et pour les prises de décision et de ne pas utiliser systématiquement l'ensemble des connaissances personnelles et/ou collectives disponibles.

De plus, chaque utilisateur qui collecte et analyse les données est noyé sous une avalanche d'information et d'outils pour la traiter.

La présente invention a pour but d'éliminer les inconvénients ci-dessus des systèmes connus en proposant un procédé de pilotage de processus décisionnel lors de la poursuite d'un but global dans un domaine d'application déterminé, tel qu'économique, technique, organisationnel ou analogue, et qui est caractérisé en ce que l'on crée un système d'agents comportant des agents cognitifs créateurs d'objets de connaissances portables et des agents constructeurs d'objets de connaissances par ajout, aux objets de connaissances créés, d'éléments de connaissances supplémentaires, on fait déclencher par le système le processus décisionnel à la suite de la constatation d'une anormalité dans des données réelles dudit domaine d'applicaton par la création d'un premier objet de connaissance représentatif d'un indice d'alarme et fait établir plusieurs chemins décisionnels liés à cet objet, sous des points de vue différents par des agents différents, chacun dans son domaine, et on fait prendre la décision à la suite d'une fusion des chemins décisionnels.

Selon une caractéristique de l'invention on crée un système décisionnel comprenant un agent de groupe constituant un gestionnaire de connaissance collectif appelé CKM et plusieurs agents constituant des gestionnaires de connaissance individuels IKM, chacun dans un domaine de connaissance spécifique établi en fonction du but global poursuivi, qui sont associés à l'agent CKM et dont chacun dispose d'une structure d'agents créateurs et d'agents constructeurs d'objets de connaissances portables.

Selon une autre caractéristique de l'invention on fait établir par au moins certains des agents individuels des chemins décisionnels individuels précités.

Selon encore une autre caractéristique de l'invention l'agent CKM est adapté pour fusionner les chemins décisionnels individuels précités établis par les agents IKM, créant ainsi un chemin décisionnel collectif.

Selon encore une autre caractéristique de l'invention les chemins décisionnels sont établis au cours de plusieurs phases décisionnelles appelées invariants.

Selon encore une autre caractéristique de l'invention après la recherche d'objets de connaissance représentatifs d'indices d'alarme et d'objets de connaissance représentant des points d'appui corrélés à ceux-ci, on recherche des événements importants constituant des accidents, qui sont liés à un objet d'indice d'alarme et crée pour chaque accident un objet de connaissance portable.

Selon toujours une autre caractéristique de l'invention, on reconnaît si deux objets portables différents, créés par deux agents différents selon deux points de vue, sont le même objet du monde.

Selon encore une autre caractéristique de l'invention, on reconnaît si deux objets portables différents ont une proximité de caractéristiques telles qu'ils sont considérés comme duaux l'un de l'autre.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

- la figure 1 représente la structure hiérarchisée d'un réseau d'agents de création d'objets de connaisances et d'agents constructeurs d'objets de connaissances, pour la mise en oeuvre du procédé de pilotage de processus décisionnel ;
- les figures 2, 3 et 5 illustrent trois exemples de structuration des connaissances sous forme d'arbres de données ou de concepts ;
- les figures 4 et 6 illustrent schématiquement la création et la construction des objets de connaissances dans le cadre de l'invariant cognitif 1 et de l'invariant cognitif 2 ;
- les figures 7 et 8 illustrent schématiquement la mise en oeuvre de l'invariant 3 de recherche d'accidents par les agents respectivement $U_{tech}$ et $U_{mark}$ ;
- la figure 9 illustre schématiquement la situation des agents GM et $U_{fin}$, $U_{mark}$ et $U_{tech}$ à la fin de l'invariant 3 ;

- la figure 10 illustre schématiquement la mise en oeuvre par $U_{tech}$ de l'invariant 4 de fusion-connexion ;
- la figure 11 illustre schématiquement le traitement local de précision sur l'objet $O_{10}$ fait par l'agent $U_{tech}$ dans le cadre de l'invariant 4 ;
- la figure 12 illustre schématiquement la base de connaissances structurées $DM_{presse}$ ;
- la figure 13 illustre schématiquement le traitement délocalisé par $U_{fin}$ sur les objets $O_{10}$ et $O_2$ ; et
- les figures 14A et 14B illustrent schématiquement l'état des agents GM, $U_{fin}$, $U_{mark}$ et $U_{tech}$ à la fin de l'invariant 5, avec leurs chemins décisionnels.

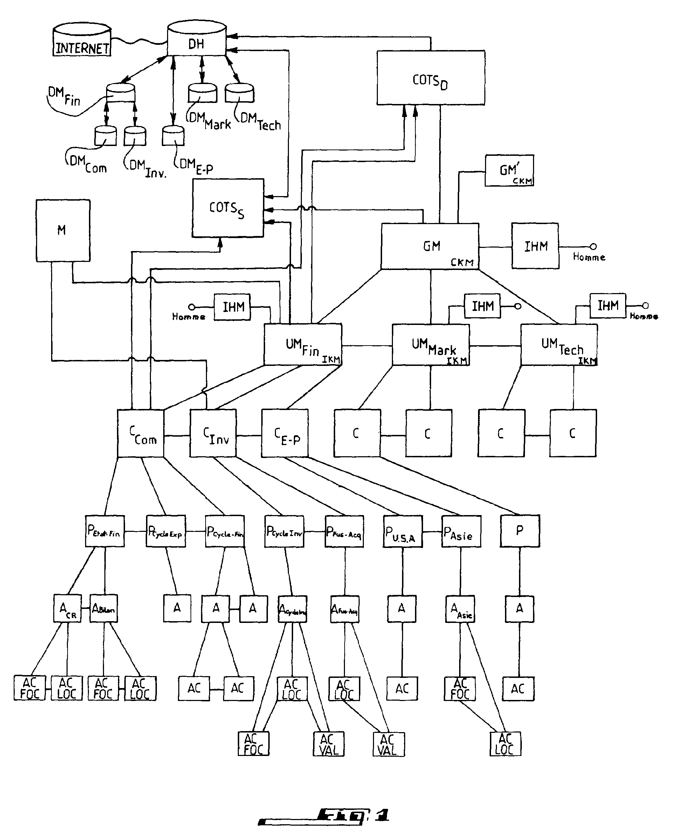

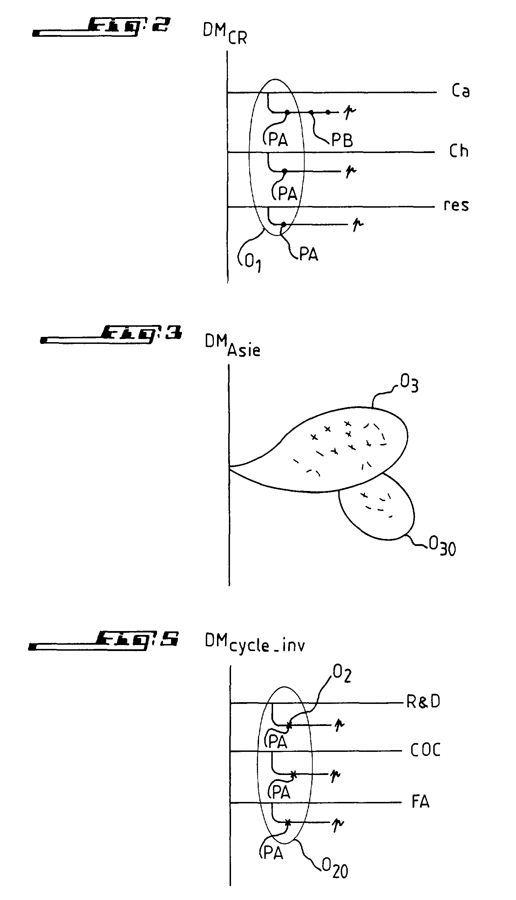

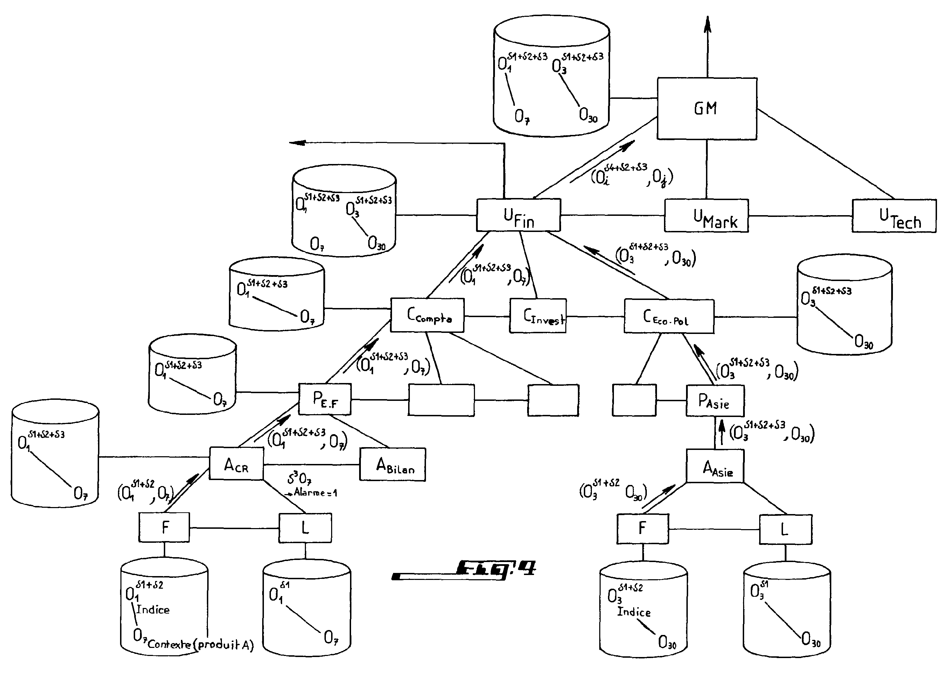

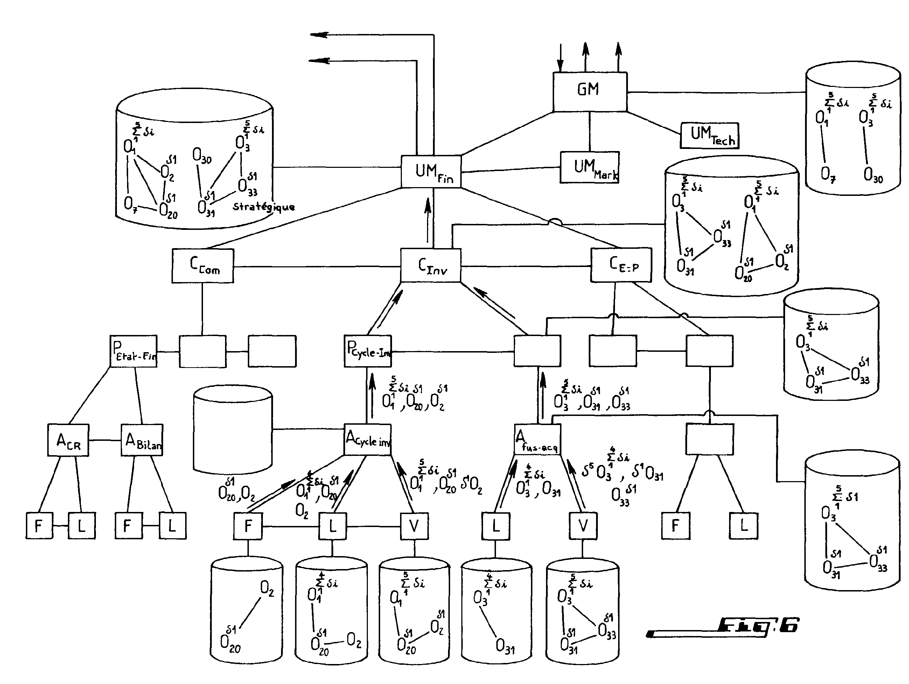

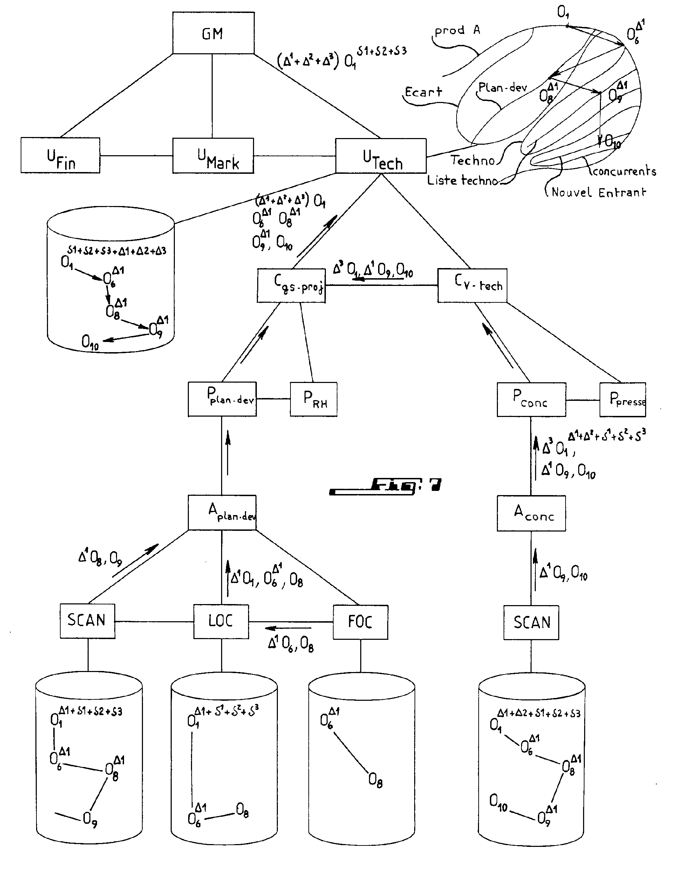

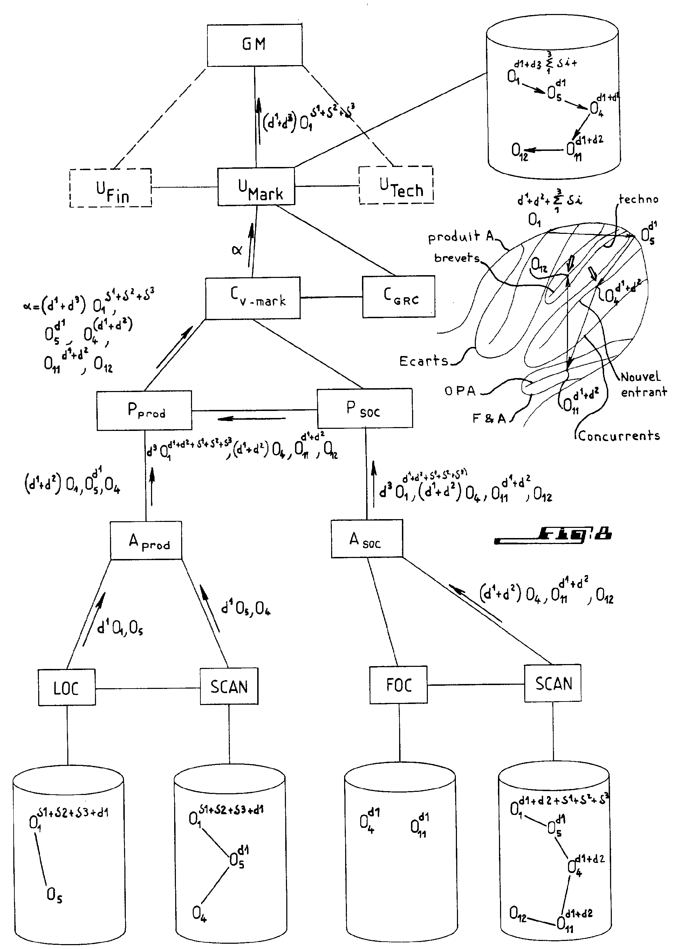

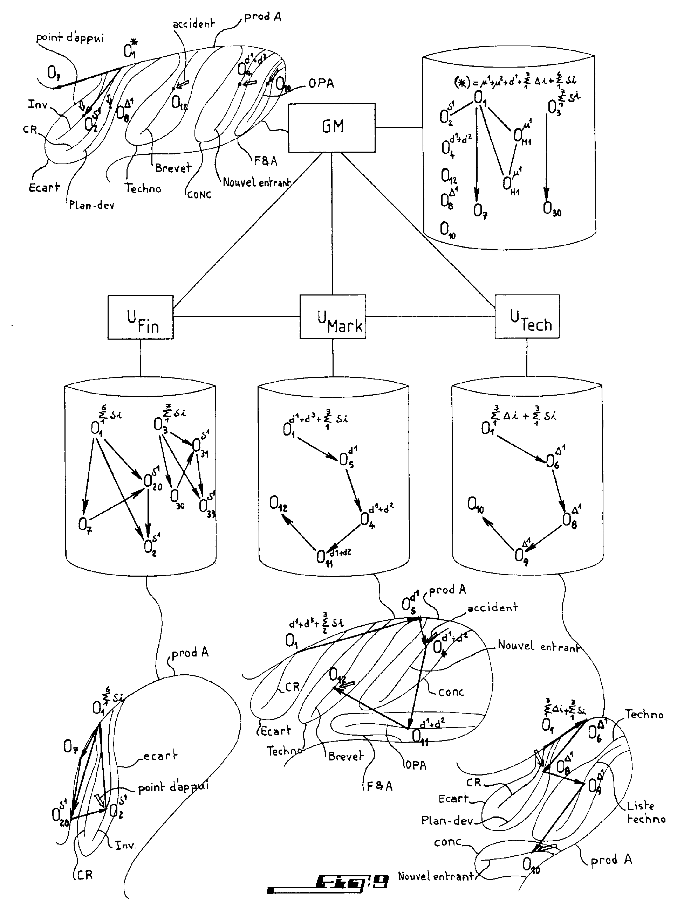

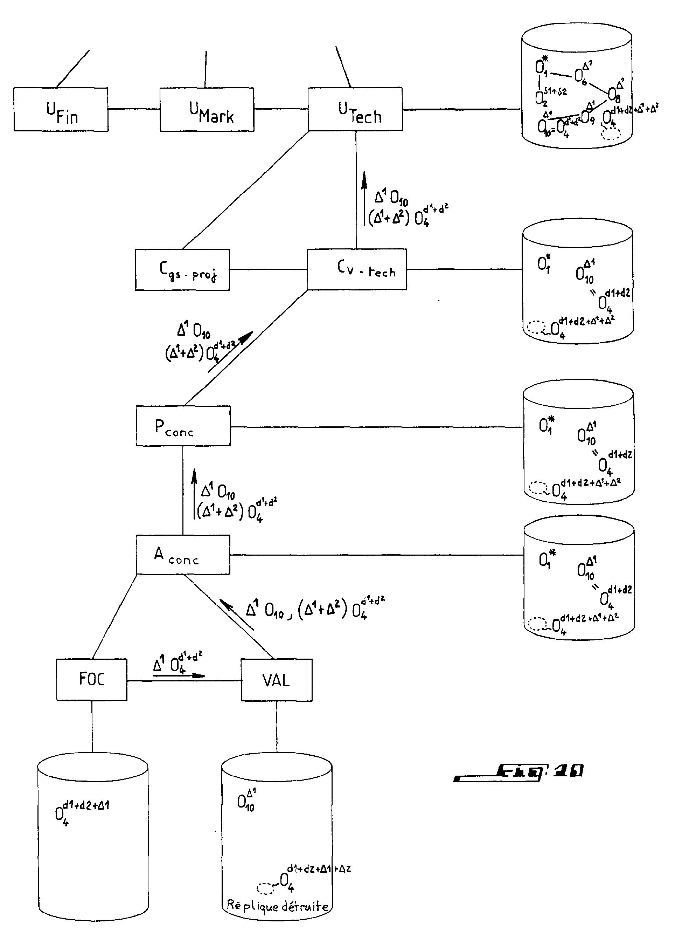

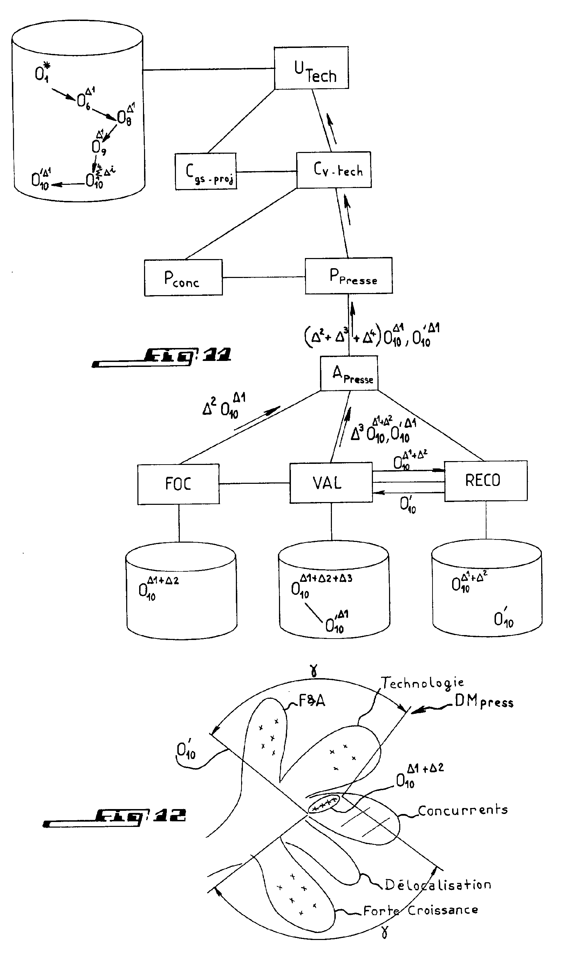

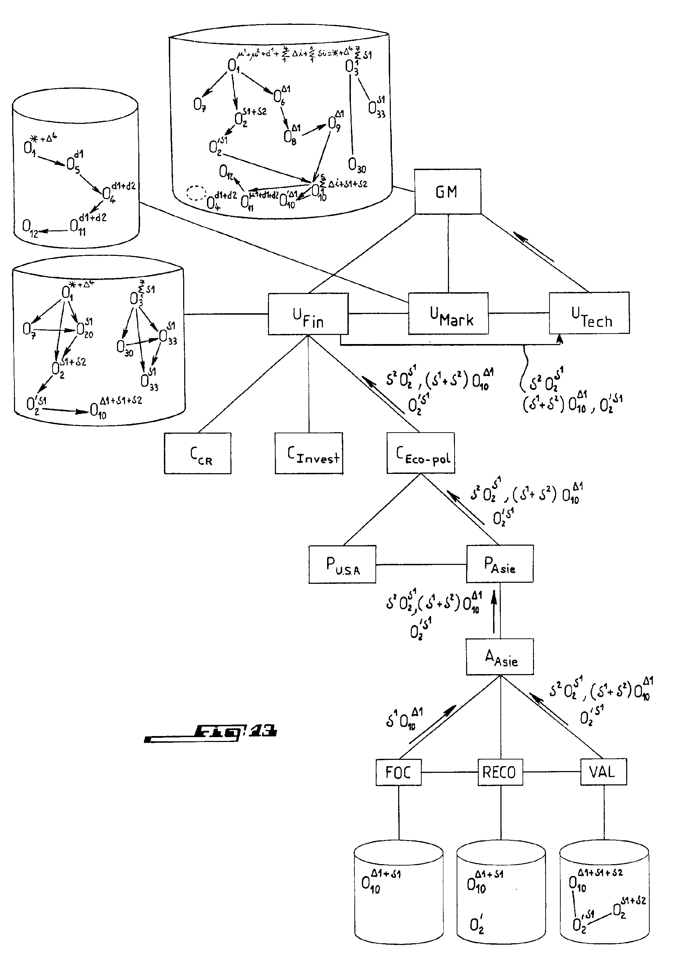

La figure 1 montre le principe de la structure d'un système de pilotage de processus décisionnel lors de la poursuite d'un but dans un domaine d'application déterminé, tel qu'économique, technique, organisationnel ou analogue.

Le système se présente sous forme d'un réseau d'une multitude d'agents de traitement d'informations organisés, dans une structure hiérarchisée en forme d'une pyramide, en boucles dont chacune comporte un agent maître et au moins un agent fils, ce dernier constituant l'agent maître d'une boucle d'un niveau inférieur.

Plus précisément, la pyramide sur la figure 1 comporte au sommet formant le niveau n un agent maître de groupe GM auquel sont associés dans l'exemple représenté trois agents fils, appelés agents utilisateurs maîtres UM qui forment le niveau inférieur n-1. Chaque agent UM pilote un certain nombre d'agents canal C formant le niveau n-2. A chaque agent C est associé au moins un agent de piste P alors du niveau n-3. Chaque agent P dispose d'au moins un agent d'analyse A du niveau n-4. A chaque agent d'analyse A sont associés un ou plusieurs agents appelés agents cognitifs AC qui ont pour fonction de capter ou détecter des informations contenues dans la scène représentative de l'application considérée, qu'ils observent.

La figure 1 montre un système entièrement structuré. Il est à noter qu'un but global pourrait ne pas nécessiter tous les agents présentés. L'exemple qu'on donnera plus loin se contente d'un réseau plus limité. Sur la figure 1, les agents réellement utilisés sont indiqués par des termes en indice. Cependant, comme il sera aussi expliqué plus loin, une des particularités essentielles de l'invention réside dans le fait que le système se structure lui-même au fur et à mesure que le processus décisionnel progresse, sous forme d'une séquence d'opérations se déroulant selon des règles de but, de stratégie et de plan d'action, qui sont prédéterminées et adaptables par l'utilisateur, mais choisis pour l'accomplissement d'une opération en fonction des résultats des opérations précédentes. A cette fin, chaque agent lors de la structuration des boucles est pourvu, pour lui permettre d'accomplir sa fonction dans le processus décisionnel dans le cadre de la poursuite du but global, de règles de but, de stratégie ou de plan d'action.

De façon générale le processus décisionnel se décompose en étapes décisionnelles, appelées invariants cognitifs. A chaque étape décisionnelle, le but global est décomposé en stratégies et en buts individuels qui se propagent dans le réseau de haut en bas.

Plus précisément, la structuration des agents se fait d'un niveau de la pyramide au niveau inférieur par décomposition successives du but global, pour chaque étape décisionnelle, en stratégies et buts individuels, la stratégie d'un niveau d'agents donnés devenant le but des agents du niveau inférieur. Le réseau en forme de pyramide présente alors la configuration fractale représentée, dans la mesure où chaque boucle se reproduira structurellement de niveau en niveau.

Pour que le réseau puisse se construire de cette manière en fonction d'un but global, le système selon l'invention comporte des agents de structuration des services et des données appelés respectivement $COTS_S$ et $COTS_D$. L'agent de structuration des services $COTS_S$ est conçu pour pouvoir déterminer les services qui sont à la disposition d'un agent maître de niveau i, qui constitueront les agents de niveau i-1, et qui sont nécessaires pour la contribution à la réalisation du but global et des buts individuels, selon des règles prédéterminées. En fonction des services nécessaires pour la mise en oeuvre d'un but et des services qui sont disponibles, l'agent de structuration organisera les services des boucles. L'agent de structuration de données enverra à chaque service les données qui sont nécessaires pour l'accomplissement de la fonction octroyée. Les données sont stockées dans un entrepôt de données DH sous forme de paquets de données structurées multimédia, numériques, textuelles, images, sons, ..., qui sont structurées en fonction des services de l'agent de structuration de services. L'entrepôt est un réservoir de connaissances multimédia, capitalisées par exemple sur des serveurs privés du type Intranet ou Extranet, qui sont reliés en permanence au réseau de communication Internet de façon qu'ils puissent acquérir des données dont ils ne disposent pas, et ainsi mettre continuellement à jour les informations qui vont être utilisées pour la réalisation du but.

Le système selon l'invention comporte encore un dispositif de mémoire M de services et de données, qui est en mesure de mémoriser la structure d'un réseau qui a été construit auparavant pour la poursuite d'un but global. Grâce à cette mémoire, l'invention permet la reconstruction rapide d'un réseau auparavant établi pour le même but global. Pendant la réalisation d'un but global, la mémoire M stocke toutes les données structurées correspondant à chaque agent.

Il est encore à noter que l'invention permet notamment au niveau de l'agent maître de groupe GM et des agents utilisateurs UM, d'interagir avec l'extérieur par l'intermédiaire d'une interface homme-machine IHM. En particulier, l'homme, le cas échéant, en se substituant aux COTS, peut, à tout moment, entrer de nouveaux services, c'est-à-dire de nouvelles règles, et de nouvelles données. Ces interventions de l'homme et les modifications au déroulement du processus décisionnel qu'elles entraînent seront prises en considération par les agents de structuration et mémorisées.

Le réseau d'agents en forme d'une pyramide d'agents représenté se compose de deux parties verticales dont la ligne de partage passe entre les agents piste P et les agents d'analyse A. Les boucles d'analyse comportant les agents d'analyse et leurs agents cognitifs associés ont pour fonction de créer des objets de connaissance alors que les agents des niveaux supérieurs enrichissent les objets de connaissance comme on le décrira plus loin. Ces agents sont appelés agents constructeurs. Le nombre des niveaux d'agents constructeurs est fonction du but global à réaliser.

Le réseau d'agents se compose également de N parties horizontales, selon des lignes de partages qui séparent les agents UM entre eux. Chaque agent UM et ses agents de service associés correspondent à un utilisateur et à une machine individuelle dite IKM. L'agent GM fédère, par exemple via l'Internet ou l'Intranet, plusieurs machines IKM, constituant une machine collective dite CKM, destinées à une collectivité d'utilisateurs en réseau.

Pour faire apparaître clairement les particularités de l'invention, on décrira ci-après à titre d'exemple non limitatif le processus de structuration des agents constructeurs et créateurs d'objets de connaissance, dont doit disposer une entreprise pour assurer un suivi budgétaire, la synthèse des décisions individuelles étant réalisées par chaque agent maître UM sur la figure 1, qui est également le gestionnaire de connaissances individuelles de chaque machine IKM, et la synthèse des décisions collectives étant réalisée par un agent maître GM sur la figure 1 qui est également le gestionnaire de connaissances collectives CKM. Les gestionnaires de connaissances UM et GM interagissent avec l'extérieur, par l'intermédiaire d'interfaces homme-machine IHM, une machine individuelle formant l'agent gestionnaire utilisateur maître UM sur la figure 1 et ses agents associés et une machine collective formant l'agent groupe maître GM et ses machines IKM associées. Le suivi budgétaire qui constitue le but global sus-mentionné comporte plusieurs étapes décisionnelles, appelées invariants à savoir ci-après la détection automatique indices d'alarme, la validation de ces indices, la recherche d'accidents, la fusion-connexion puis l'interprétation et la décision.

Lors de la formulation du but global, l'homme indique au gestionnaire de connaissances collectives CKM, par l'intermédiaire de son interface IHM, les modalités qui doivent être prises en considération, telles que dans le présent exemple la condition "rapide et faible coût" appelée ci-après cond.1, l'état de la machine, les indications concernant la structure source d'où seront extraites les données, et le profil du gestionnaire collectif. Chaque utilisateur individuel indique au gestionnaire de connaissances individuelles IKM, son profil, par l'intermédiaire de son interface IHM individuelle. L'état du système pourrait être l'état initial ou celui obtenu après reconfiguration en fonctionnement à la suite d'une intervention sur un gestionnaire CKM ou IKM.

Les règles de but et de stratégie selon lesquelles se déroule l'établissement du réseau sont données dans l'Annexe I, mais la description qui suit explicitera leurs applications dans le but choisi du suivi budgétaire.

La règle de but générique de l'agent GM détermine pour le but global formulé, avec les modalités assorties, la stratégie générique 1 qui se décompose en stratégies 1.0, 1.1 et 1.2. La stratégie 1.0 a pour fin la structuration des services, la stratégie 1.1 la structuration des données et la stratégie 1.2 la détection d'indices (invariant 1).

Il est à noter que les règles de but et de stratégie comportent toujours l'indication de l'invariant et des modalités pour que l'agent auquel le message est adressé puisse correctement accomplir sa fonction, comme on le voit à l'annexe I. Pour simplifier, les indications ne seront plus mentionnées ci-après sauf si cela apparaît nécessaire.

En application de la règle de stratégie 1.0, l'agent GM adresse à l'agent de structuration des services $COTS_s$ un message "but 1 = strate 1.0 (but global, GM) = structuration de services de GM pour réaliser le but global". Cet agent, en réponse au message, recherche dans sa mémoire, ou interroge un serveur externe, les services qui sont nécessaires et disponibles pour le but global.

Dans l'exemple de but choisi (suivi budgétaire), trois services sont disponibles, à savoir les services FINANCIER, MARKETING, TECHNIQUE. L'agent de structuration des services les envoie à l'agent GM qui doit alors créer les utilisateurs maîtres financier, marketing et technique appelés $UM_{fin}$, $UM_{mark}$, $UM_{tech}$, mettre fin à la stratégie 1.0 et mettre maintenant en oeuvre la stratégie 1.1. Selon cette règle définie par :

si strat = strat 1.1
si service = service 1 ($service_{fin}$;$service_{mark}$ ; $service_{tech}$), et si structure = DH

l'agent GM doit envoyer le message de but "but 1 = strat 1.1 (but global ; service 1)" à l'agent de structuration de données $COTS_D$ qui, en réponse, transmet les données sous forme de paquets de connaissances structurées correspondant aux services, à savoir les paquets de données structurés $DM_{fin}$, $DM_{mark}$, $DM_{tech}$ extraits de l'entrepôt de stockage des connaissances structurées DH. Dans l'exemple choisi, les connaissances sont structurées sous forme d'arbre de données ou de concepts. D'autres modes de structuration sont utilisables. Après la réception des paquets de données structurées, l'agent GM met fin à la stratégie 1.1 et met en oeuvre la stratégie 1.2.

Selon la règle de cette étape du processus définie par

si strat = strat 1.2
si structure = $DM_{fin}$, $DM_{mark}$, $DM_{tech}$

l'agent GM envoie à l'agent utilisateur $UM_{fin}$ le message de but "but = strat 1.2 = détection indices".

L'agent $UM_{fin}$ possède des règles de but et de stratégie qu'il met en oeuvre pour accomplir sa fonction dans le cadre défini par le but global. En application de sa règle de but

si but = détection indices et
si structure = $DM_{fin}$

il procède à la structuration de la boucle dont il est le maître.

Cette structuration se déroule à nouveau selon des règles de stratégie 1.0 ; 1.1 et 1.2 en trois étapes successives, comme cela a été décrit à l'occasion de la structuration de la boucle de l'agent GM.

Selon la règle de stratégie 1.0, l'agent $UM_{fin}$ envoie le message de but 1 = strat 1.0 à l'agent de structuration des services du gestionnaire de connaissances individuelles IKM qui constitue l'agent UM. L'agent de structuration établiera que, pour le but global avec les modalités assorties, l'agent $UM_{fin}$ peut disposer des services $C_{com}$, $C_{inv}$ et $C_{e-p}$, c'est-à-dire des services comptabilité, investissements et économie-politique. On constate qu'à ce niveau de la structuration s'ajoute aux deux services d'ordre financier, le service économie-politique, un service se situant hors du domaine purement financier, apportant donc un point de vue différent.

Bien entendu, l'ajout de ce nouveau service pourrait également s'effectuer par l'intermédiaire de l'homme agissant sur l'agent $UM_{fin}$ via l'interface IHM. Cette configuration de la boucle avec le service $C_{e-p}$ sera stockée dans la mémoire M et dans le $COTS_s$, ce qui constitue un enrichissement des $COTS_s$ par l'intervention humaine et illustre la flexibilité et l'adaptabilité du système.

Après la création des services sus-mentionnés dans la boucle pilotée par l'agent $UM_{fin}$ et après la fin de la stratégie 1.0, et en application de la règle de stratégie :

si strat = strat 1.1 (but global), et
si service = $C_{com}$, $C_{inv}$, $C_{e-p}$ = service 1, et
si structure = $DM_{fin}$
$\Rightarrow$ envoyer but 1 = strat 1.1 (but global, service 1) à $COTS_D$.

L'agent de structuration de données $COTS_D$ enverra à l'agent $UM_{fin}$ les paquets de données numériques, textuelles et images ou analogue correspondant au services sus-mentionnés, à savoir les $DM_{com}$, $DM_{inv}$ et $DM_{e-p}$, les $DM_{com}$ et $DM_{inv}$ étant extraits des $DM_{fin}$ et les $DM_{e-p}$ étant extraits de l'entrepôt de données DH. Puis, l'agent $UM_{fin}$ met fin à la stratégie 1.1. et met en oeuvre maintenant la stratégie 1.2 selon la règle de stratégie.

si strat = strat 1.2
si structure = $DM_{com}$, $DM_{inv}$, $DM_{e-p}$
$\Rightarrow$ envoyer but = strat 1.2 = détection indices par canal, à l'agent canal $C_{com}$ et à l'agent canal $C_{e-p}$.

Après la structuration de la boucle pilotée par l'agent $UM_{fin}$ et comportant les agents canal $C_{com}$, $C_{inv}$ et $C_{e-p}$ dont seulement les agents $C_{com}$ et $C_{e-p}$ seront utilisés pour l'invariant 1, il convient de structurer la boucle de chacun des deux agents $C_{com}$ et $C_{e-p}$.

Cette structuration se fait selon les règles de but et stratégies assorties à chacun des deux agents. Le but de chaque agent est la stratégie 1.2 de l'agent $UM_{fin}$, c'est-à-dire la détection d'indices par canal. Les règles de stratégie sont les trois règles de stratégies 1.0, 1.1 et 1.2. Comme auparavant, les stratégies 1.0 et 1.1 assurent la structuration des services et l'attribution à chaque service d'un paquet de données approprié.

Ainsi sont créés par l'agent canal $C_{com}$ les agents piste destinés aux états financiers, aux cycles d'exploitation et aux cycles de financement, appelés ci-après $P_{etat\ fin}$, $P_{cycl\ exp}$ et $P_{cycle\ fin}$, avec les paquets de données appropriés $DM_{etat\ fin}$, $DM_{cycl\ exp}$ et $DM_{cycle\ fin}$, qui ont été extraits par les agents $COTS_D$ du paquet $DM_{com}$. La règle de stratégie 1.2 amène l'agent $C_{com}$ à envoyer le message de stratégie strat 1.2 = détection d'indices par piste à l'agent $P_{état\ fin}$, à titre de but à mettre en oeuvre.

En application des règles de stratégie 1.0 et 1.1, l'agent canal $C_{e-p}$ créé les agents piste destinés aux USA et à l'Asie et appelés $P_{USA}$ et $P_{Asie}$. La règle 1.2 amène l'agent $C_{e-p}$ à envoyer le message de stratégie strat 1.2 = détection d'indice par piste, à l'agent $P_{Asie}$ à titre de but à mettre en oeuvre.

La prochaine étape est la structuration de la boucle de chaque agent piste selon des règles de but et de stratégie. La règle de but étant

si but = but local 1 = détection indices par piste avec les modalités assorties, il convient d'appliquer la règle de stratégie strat = strat 1.0 qui indique à l'agent-piste de choisir le nombre des agents d'analyse A et, selon la stratégie 1.1, celui-ci envoie aux agents d'analyse le but à réaliser, à savoir le message de but

but = strat 1.1 = recherche indices d'alarme.

En procédant ainsi, l'agent de piste $P_{\text{état fin}}$ crée des agents d'analyse compte-résultat $A_{cr}$ et bilan $A_{bilan}$ et les connaissances $DM_{CR} + DM_{bilan}$. L'agent piste$_{Asie}$ crée un seul agent analyseur, à savoir l'agent $A_{Asie}$ avec $DM_{Asie}$.

Chaque agent analyseur travaille en fonction de règles de but et de plan d'action. De façon générale, ces règles sont comme suit :

Règle de but :  si but = but local 1 = recherche indices d'alarme
⇒ appliquer plan = plan 1.

Règle de plan :  si plan = plan 1
⇒ créer N agents cognitifs (en fonction de la condition 1)
⇒ appliquer plan 1 aux agents cognitifs.

Dans l'exemple présent du suivi budgétaire comme but global, seulement l'agent $A_{CR}$ est utilisé et cet agent analyseur crée deux agents cognitifs, à savoir un agent de focalisation FOC qui est un détecteur de signaux numériques faibles dans la scène établie par $DM_{CR}$ et un agent de localisation LOC de détection de contours de branches de données. En application du plan 1, l'agent analyseur adresse à l'agent FOC la requête de rechercher des signaux numériques faibles dans la scène appropriée. Après la détection d'un signal faible à retenir, considéré comme objet de connaissance $O_i$, l'agent FOC adresse une requête à l'agent LOC pour que celui-ci établisse le contexte dans lequel se situe l'objet $O_i$, ce contexte constituant alors un autre objet de connaissance $O_j$. Après le retour de la requête à l'agent FOC avec le résultat, cet agent renvoie l'objet $O_i$ enrichi par la mise en contexte selon $O_j$ à l'agent analyseur.

Les objets de connaissances ont la structure prédéterminée présentée ci-après et comportent un certain nombre de champs. Chaque champ présente un aspect de l'objet de connaissance. Les termes figurant entre parenthèses sont quelques exemples donnés pour illustrer la nature du champ considéré.

→ ID (identité)
→ Type (Ex : indice, point d'appui, point de repère, objet reconnu...)
→ Contexte (Ex.: Sujet du paragraphe, environnement économique d'un objet dans un texte...)
→ Formes (par créateur de forme) (Ex.: Paragraphe, créateur LOC ; Mot, créateur FOC...)(type : élémentaire ou composite) (Ex.: arbre, branche, doc, éléments d'images, valeur numérique)
→ Propriété (Ex.: sujet à risque, sujet stratégique, sujet sous-surveillance, écart valeur numérique...)
→ Utilisation (Ex.: Nom de contenu, Nom d'une techno, d'un concurrent, d'un partenariat...)
→ Liens (par créateur de lien) (avec un type)
→ Média (Image, texte, son)
→ Alarme
→ Source
→ Créateur (FOC, LOC,...)

Les liens entre objets de connaissances sont de différents types :

→ Contenu dans
→ Issu de
→ Proche physiquement (dans un texte ou une image)
→ Proche sémantiquement (synonyme, expression identique...)
→ Associé logiquement.
→ Attraction forte, faible,...

Plus précisément, la génération des objets de connaissances par un agent cognitif se fait en application de règles de savoir-faire. Les règles de l'objet FOC sont les suivantes :

si but = recherche signaux numériques faibles, et

si structure = $DM_{CR}$, par exemple constituée de valeurs numériques issues d'un progiciel de gestion intégré de comptabilité

⇒ utiliser savoir faire 1 = calculer signaux du "tableau de bord"

⇒ utiliser savoir faire 2 = détection signaux d'alarme dans valeurs numériques sources

⇒ Si amplitude signaux supérieure à seuil créer $O_1$ tel que :

→ Id
→ Type (indice)
→ Créateur (FOC)
→ Forme (type squelette, créateur FOC, structure $DM_{CR}$ forme = valeur numérique $\Delta X$, média = valeurs numériques sources)
→ Propriété (écart Tableau de Bord)

⇒ envoyer message d'établissement de contexte de $O_1$ à agent LOC dans $DM_{CR}$.

Le calcul des signaux du tableau de bord consiste à établir les valeurs des paramètres actuels de l'activité économique de la société dans la structure de données $DM_{CR}$ et à les comparer aux paramètres de consigne qui doivent être respectés. Les résultats $\Delta X$ de cette comparaison forment les signaux sus-mentionnés. Si, parmi les signaux ainsi établis, certaines valeurs de signaux sont supérieures à un seuil prédéterminé, l'agent cognitif FOC crée l'objet de connaissance $O_1$ représentatif d'indice d'alerte.

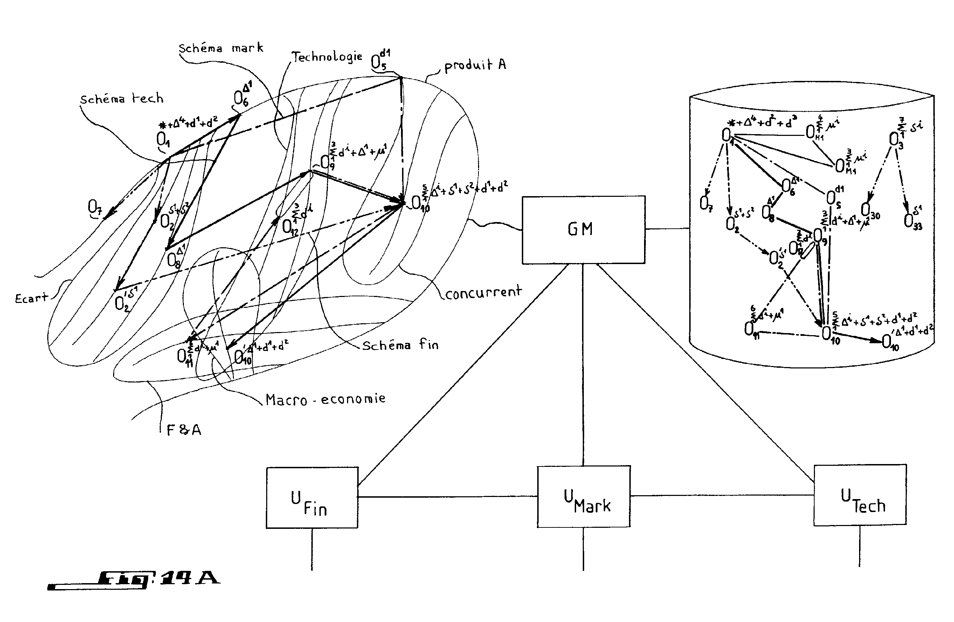

On expliquera ci-après la façon de procéder de l'agent cognitif FOC en se référant à la figure 2 qui montre la structure des connaissances contenues dans le paquet de connaissance $DM_{CR}$. La structure de ces données est représentée sous forme d'images dont la première représente les comptes de résultat sous forme d'un arbre de données. La structure sous forme d'un arbre de données est connue en soi. La figure 2 permet d'expliciter certains termes utilisés pour les objets de connaissance. L'arbre représenté comporte un certain nombre de branches dont trois sont indiquées et représentent les chiffres d'affaire ca, les charges ch et les résultats res. A chaque branche est rattaché un certain nombre de sous-branches dont seulement une est montrée. Celle-ci désignée par P concerne les produits commercialisés par la société procédant au suivi budgétaire. Ces produits sont représentés sur les sous-branches par des points PA, PB... . Il est à noter que sur l'image représentée, chaque produit est identifiable par les coordonnées du point qu'il représente sur l'image.

En appliquant les première et seconde règles de savoir-faire, l'agent FOC établit dans les données sources de la structure des connaissances $DM_{CR}$ les signaux d'alerte significatifs, se situant au-dessus du seuil de référence. Les points, qui dans l'arbre de concept $DM_{CR}$ sont représentatifs des signaux d'alerte retenus, seront différenciés de l'environnement, par exemple éclairés, par l'agent cognitif FOC. Sur la figure 2, un point est allumé sur la sous-branche P des branches ca, ch et res. Ce sont ces signaux retenus qui donnent lieu à la création par l'agent FOC de l'objet de connaissance $O_1$. Cet objet est du type indice, a été créé par l'agent FOC et présente une forme dite en "squelette", c'est-à-dire qu'il est formé par des points rares jusqu'à présent non reliés. Sa propriété est que les indices sont des écarts numériques dans les données sources des tableaux de bord. Dans la structure de l'objet de connaissance $O_1$, les champs type, créateur, forme et propriété sont donc définis lors de la création de l'objet.

Puis, conformément aux règles de l'agent FOC, lorsqu'un objet $O_1$ a été créé, l'agent adresse un message de demande d'établissement du contexte de l'objet $O_1$ à l'agent cognitif LOC. Pour exécuter cette requête, l'agent LOC applique les règles de savoir-faire et de création de contexte génériques suivantes :

Si but = établir contexte, si structure = $DM_{CR}$

⇒ utiliser savoir-faire 1 = Détection contour de branche de données par propriété commune (qui détecte une branche qui contient $O_1$)

⇒ S'il existe une propriété commune aux points définissant la forme de $O_1$, définir une branche comme étant le contexte de l'objet $O_1$ et créer $O_7$

→ Id
→ Type (contexte)
→ Créateur LOC $A_{CR}$
→ Forme (type = zone, créateur LOC, Structure = $DM_{CR}$, forme = branche de données, index, média = arbre de données)
→ Utilisation (produit A)
→ Relié à $O_1$ (créateur LOC, type = contenu dans)

⇒ Mettre à jour $O_1$ tel que
$\delta^1 O_1$

→ Contexte (produit A)

→ Relié à $O_7$ (créateur LOC, type = contexte de)

→ cat = 1 (un objet indice de catégorie 1 est contenu dans son contexte)

$\Rightarrow$ faire retour à FOC $(O_7, \delta^1 O_1)$

En application de ces règles, la fonction de l'agent LOC consiste à rechercher si les points différenciés sur la figure 2 présentent au moins une caractéristique commune. En se reportant aux données sous-jacentes à l'image de l'arbre, l'agent LOC constate que les trois points différenciés ou allumés sur la figure 2a sont représentatifs du produit PA. Ce produit se révèle ainsi constituer le contexte dans lequel se situe l'objet $O_1$. L'agent LOC crée par conséquent l'objet $O_7$ spécifié ci-dessus et met à jour l'objet $O_1$ en créant $\delta^1 O_1$. Puis l'agent LOC renvoie à l'agent FOC, les objets $O_7$ et $\delta^1 O_1$.

L'agent FOC applique alors la règle de création de signaux faibles suivant :

Si but = recherche de signaux numériques faibles (plan 1), si retour de demande d'établissement de contexte $(O_1)$ = $(\delta^1 O_1, O_7)$,

$\Rightarrow$ Réaliser l'inférence suivante : Si forme $(O_1)$ = valeur numérique $\Delta X >$ seuil 1, si contexte $(O_1)$ = Produit PA, alors mise à jour de $O_1$ tel que $\delta^2 O_1$

→ intérêt = 1

$\Rightarrow$ faire retour à agent $A_{CR}$ $(O_1^{\delta 1 + \delta 2}, O_7)$ et mettre fin à plan 1.

Autrement dit, l'agent FOC, après la réception de la réponse à sa requête d'établissement de contexte, met à jour l'objet $O_1$, dans les conditions spécifiées plus haut en ajoutant à l'objet $O_1^{\delta 1}$, c'est-à-dire mis à jour par l'agent LOC, l'élément $\delta^2$ qui indique que l'objet $O_1$ présente un intérêt = 1. Dans la structure de l'objet $O_1$ apparaît le champ intérêt = 1. Après cette mise à jour de l'objet $O_1$ par adjonction des éléments $\delta^1$ et $\delta^2$, celui-ci est renvoyé à l'agent analyseur $A_{CR}$ dans sa version enrichie $O_1^{\delta 1 + \delta 2}$, accompagné des objets qui ont été créés à cette occasion, c'est-à-dire $O_7$.

Le déplacement avec, le cas échéant, mise à jour des objets de connaissance, à l'agent GM au sommet de la pyramide se fait selon des règles de retour et de mise à jour, qui sont propres aux différents agents se trouvant sur le parcours des objets. Ces règles sont fonction bien entendu de l'invariant qui est mis en oeuvre dans le but global et les modalités assorties.

Ces règles dans l'exemple du suivi budgétaire se résument de la manière suivante :

Règle de l'agent analyseur : A

Si but = recherche indices d'alerte, si fin plan 1 $(O_1^{\delta 1 + \delta 2}, O_7)$,
si intérêt $(O_1^{\delta 1 + \delta 2})$ = 1, si type $(O_1^{\delta 1 + \delta 2})$ = indice

$\Rightarrow$ faire $\delta^3 O_1^{\delta 1 + \delta 2}$

→ alarme = 1

$\Rightarrow$ faire $O_1^{\delta 1 + \delta 2 + \delta 3}$
$\Rightarrow$ retour au père de $(O_1^{\delta 1 + \delta 2 + \delta 3}, O_7)$

Règle des agents P, C

Si but = détection indices par piste (ou par canal) et si retour de but = $(O_1^{\delta 1 + \delta 2 + \delta 3}, O_7)$

$\Rightarrow$ copie $(O_1^{\delta 1 + \delta 2 + \delta 3}, O_7)$
$\Rightarrow$ Retour au père de $(O_1^{\delta 1 + \delta 2 + \delta 3}, O_7)$

Règle de l'agent UM

Si but = détection indice, si retour but =
$(O_1^{\delta 1+\delta 2+\delta 3}, O_7)$

$\Rightarrow$ afficher $(O_1^{\delta 1+\delta 2+\delta 3}, O_7)$ à l'IHM de l'IKM dans structure qui se trouve dans le champ Forme

Règle de l'agent GM

Si but = but global, si retour de strat 1.2 =
$(O_1^{\delta 1+\delta 2+\delta 3}, O_7)$

$\Rightarrow$ faire copie $(O_1^{\delta 1+\delta 2+\delta 3}, O_7)$
$\Rightarrow$ afficher $(O_1^{\delta 1+\delta 2+\delta 3}, O_7)$ à l'IHM du CKM.

Conformément à ces règles, l'agent analyseur $A_{CR}$ associe à l'objet $O_1^{\delta 1+\delta 2}$ dont il a été reconnu qu'il présente un intérêt et qui est du type indice, l'élément $\delta^3$ qui indique que l'objet $O_1$ doit être considéré comme impliquant une alarme. L'agent analyseur met à jour l'objet $O_1$ en établissant $O_1^{\delta 1+\delta 2+\delta 3}$. L'agent analyseur a également reçu l'objet de connaissance $O_7$ et transmet les objets mis à jour $O_1^{\delta 1+\delta 2+\delta 3}$ et $O_7$ à l'agent piste $P_{\text{état-fin}}$.

Puis ces deux objets $O_1^{\delta 1+\delta 2+\delta 3}$ et $O_7$ remontent à l'agent GM sans autre modification en passant par les agents piste P puis canal C et utilisateur $UM_{\text{fin}}$. Dans l'agent utilisateur maître $UM_{\text{fin}}$, les objets de connaissance sont affichés à l'interface Homme-Machine IHM du gestionnaire de connaissances individuelles IKM. Dans l'agent groupe maître GM, les objets sont également affichés à l'interface Homme-Machine IHM du gestionnaire de connaissances collectives CKM.

Après avoir décrit la création et la construction des objets de connaissances $O_1$ et $O_7$ par les agents FOC et LOC de l'agent analyseur $A_{CR}$ et leur remontée à l'agent GM, on décrira ci-après le travail à effectuer par les agents de focalisation FOC et de localisation LOC de l'agent analyseur $A_{Asie}$ en application des règles de stratégie et de plan qui ont été exposées plus haut de façon générale. L'agent FOC est un agent de détection de densité d'informations textuelles dans un arbre de concept et il agit selon les règles suivantes :

Si but = recherche signaux faibles, si structure = $DM_{Asie}$, par exemple constituée de données textuelles issues d'un progiciel de gestion électronique de documents, connu en soi,

$\Rightarrow$ utiliser savoir faire 1 = [structuration par pays et créer $DM_{Asie}$ (pays)]
$\Rightarrow$ utiliser savoir-faire 2 = détection de signaux d'alerte par densité dans arbre primaire
$\Rightarrow$ si surface signal > seuil 1, créer $O_3$ tel que :

$\rightarrow$ ID
$\rightarrow$ Type (indice)
$\rightarrow$ Créateur FOC ($A_{Asie}$)
$\rightarrow$ Forme (type = zone, créateur FOC, structure = $DM_{Asie}$ (Japon) , index, forme = branche concept, média = arbre concept)
$\rightarrow$ Propriété (densité arbre concept)

$\Rightarrow$ demander établissement de contexte sur $O_3$ à LOC dans $DM_{Asie}$

Règle de création de signaux faibles

Si but = recherche signaux faibles (plan 1), si retour de demande d'établissement de contexte sur $O_3$ = $(\delta^1 O_3, O_{30})$

$\Rightarrow$ Réaliser l'inférence suivante : si $O_{30}$ lié à $O_3^{\delta 1}$ avec type lien = contexte connexe à, si contexte $(O_3^{\delta 1})$ = société à actions en baisse au Japon si type de forme $(O_1^{\delta 1})$ = zone, alors mettre à jour $O_3$ tel que

$$\delta^2 O_3{}^{\delta 1}$$

$\rightarrow$  intérêt = 1

$\rightarrow$  cat = 2 (un objet indice de catégorie 2 a son contexte à sa périphérie et l'information pertinente est dans le contexte plus que dans l'indice)

$\Rightarrow$  faire retour à $A_{Asie}$ de ($O_3{}^{\delta 1+\delta 2}$, $O_{30}$) et mettre fin à plan 1

L'agent LOC agit selon les règles suivantes :

Si but = demander établissement de contexte sur $O_3$, si structure = $DM_{Asie}$

$\Rightarrow$  utiliser savoir-faire 1 = détection branche contexte par densité de surface faible
$\Rightarrow$  si densité branche > seuil 1, si densité branche connexe à $O_3$, alors crée $O_{30}$ (contexte) tel que :

$\rightarrow$  Id
$\rightarrow$  Type (contexte)
$\rightarrow$  Créateur LOC ($A_{Asie}$)
$\rightarrow$  Forme (type = tâche, créateur LOC, structure $DM_{Asie}$, index, forme = branche concept, média = arbre concept)
$\rightarrow$  Utilisation = (société à actions en baisse au Japon)
$\rightarrow$  Relié à ($O_3$ : créateur LOC, type = contexte connexe à)

$\Rightarrow$  mettre à jour $O_3$ tel que
$$\delta^1 O_3$$

$\rightarrow$  Contexte = (société à actions en baisse au Japon)
$\rightarrow$  Relié à ($O_{30}$ : créateur LOC, type = contexte connexe à)

$\Rightarrow$  faire retour à FOC de ($O_{30}$, $\delta^1 O_3$).

La règle de savoir-faire 1 de l'agent FOC dans le but de la recherche de signaux faibles dans une structure de données textuelles consiste à accomplir une structuration par pays des données $DM_{Asie}$. Les données contenues dans ce paquet de données sont structurées de façon connue en soi sous forme d'un arbre de concept. La figure 3 montre une zone consacrée aux sociétés au Japon. Cette zone est formée par des points dont chacune représente un article de presse d'économie politique mentionnant une société de ce pays sans caractéristique particulière. Il faut donc regarder autour de cet objet ce qui peut être intéressant. Ceci définit les objets de catégorie 2. En application de la règle de savoir-faire 2, cette zone est détectée par l'agent, ce qui donne lieu à la création de l'objet de connaissance $O_3$ avec les champs indiqués ci-dessus.

Toujours en application de ces règles, l'agent FOC adresse une requête d'établissement de contexte de l'objet $O_3$ à l'agent LOC dans la structure de données $DM_{Asie}$. Il est à noter que le terme dans le champ propriété "densité d'arbre concept" signifie qu'on observe une zone mal définie mais identifiée à une densité particulière de l'arbre.

En réponse à la requête, l'agent LOC s'adresse dans l'arbre de concept à la tâche de faible surface mais de haute densité représentée à la périphérie de la zone formant l'objet de connaissance $O_3$, et qui représente des sociétés à actions en baisse au Japon. Si cette zone présente une densité dépassant une valeur de seuil, l'agent crée l'objet de connaissance $O_{30}$ qui possède la structure indiquée plus haut, qui est du type contexte et qui a inscrit dans son champ d'utilisation "société à actions en baisse au Japon". L'objet $O_{30}$ est relié à l'objet $O_3$.

Après la mise à jour de l'objet $O_3$ de façon qu'il se présente sous la forme $O_3{}^{\delta 1+\delta 2}$, cet objet et l'objet $O_{30}$ sont envoyés par l'agent FOC à l'agent analyseur $A_{Asie}$. Ce dernier ajoute à l'objet $O_3{}^{\delta 1+\delta 2}$ l'élément $\delta^3$ indiquant que l'objet $O_3$ constitue une cause d'alarme.

Puis, les objets de connaissance $O_3{}^{\delta 1+\delta 2+\delta 3}$ et $O_{30}$ sont transmis à l'agent GM au sommet de la pyramide selon les règles de transmission exposées plus haut lors de la remontée des objets $O_1{}^{\delta 1+\delta 2+\delta 3}$ et $O_7$.

Avec le retour à l'agent GM des objets $O_1{}^{\delta 1+\delta 2+\delta 3}$, $O_7$, $O_3{}^{\delta 1+\delta 2+\delta 3}$ et $O_{30}$ s'achève la mise en oeuvre de l'invariant 1 de la détection d'indices dans des conditions "rapidité et faible coût", dans le cadre du but global du suivi budgétaire, sur une durée de temps donné.

La figure 4 illustre la création et le déplacement des objets de connaissances lors de la mise en oeuvre de l'invariant 1 et leur affichage aux interfaces Homme-Machine IHM des gestionnaires de connaissances collectives et individuelles CKM et IKM, ce dernier étant associé à l'agent $UM_{fin}$. La figure montre les objets de connaissances tels que stockés dans les dispositifs de stockage DST des différents agents, avec les liens entre les objets. Les flèches symbolisent les déplacements des objets de connaissance qui sont associés aux flèches.

Le système selon l'invention met alors en oeuvre l'invariant 2 résidant dans la validation des objets de connaissance qui ont été créés et construits au cours de l'accomplissement de l'invariant 1.

L'exemple illustre un fonctionnement en un mode où l'invariant 2 sera réalisé dans le même IKM que celui de l'invariant 1 à savoir celui de l'utilisateur financier.

La mise en oeuvre de l'invariant 2 s'effectue selon des règles de but, de stratégie et de plan prédéterminés adaptables par l'utilisateur et définies en fonction de la manière selon laquelle l'invariant 1 a été mis en oeuvre et des objets de connaissance qui résultent de l'invariant 1. Les règles génériques de but, de stratégie et de structuration dans le cadre de l'invariant 2 des agents GM, UM, C et P sont données dans l'annexe II.

L'invariant 2 s'effectue de façon asynchrone vis-à-vis de l'invariant 1. Il peut être déclenché dès l'arrivée à l'agent GM d'un premier indice d'alarme et peut se dérouler en parallèle au déroulement de l'invariant 1.

Ainsi, comme on le constate dans l'annexe II, la règle de but de l'agent groupe maître GM dans le suivi budgétaire peut nécessiter lors de la mise en oeuvre de l'invariant 2 l'application conjointe de la stratégie 1.2 de la détection d'indices et de la stratégie 2 de la validation. La règle de stratégie 2 de la validation impose à l'agent GM :

Si strat = strat 2 ($O_1$, but global, condition 1, profil, état DH)
si service associé à agent = $UM_{fin}$, $UM_{mark}$, $UM_{tech}$ = service 1

de transmettre le message de stratégie = validation de $O_1$ à l'agent $UM_{fin}$ sur les données structurées qui ont été associées aux services sus-mentionnés lors de la mise en oeuvre de l'invariant 1, qui sont les données $DM_{fin}$, $DM_{mark}$ et $DM_{tech}$.

L'agent $UM_{fin}$, selon sa règle de but et en application de sa règle de stratégie envoie un message de but 1 = strat 2.2 = validation par canal à l'agent $C_{inv}$ qui a été établi lors de la mise en oeuvre de l'invariant 1. Mais, puisque lors du déroulement de l'invariant 1, la boucle de l'agent canal $C_{inv}$ n'a pas été formée, cet agent doit l'établir maintenant.

En effet, selon sa règle de but "si but = but local 1" dans les conditions des objets de connaissance établis et de contrainte "rapidité, coût faible", l'agent $C_{inv}$ doit appliquer la règle de stratégie strat = strat 2. L'accomplissement de cette stratégie implique la structuration des services selon la stratégie 1.0 déjà décrite plus haut lors de la description de la mise en oeuvre de l'invariant 1. Cette stratégie 1.0 demande à l'agent $C_{inv}$ d'envoyer un message de requête de structuration de services à l'agent de structuration de service $COTS_s$. L'agent de structuration en application de ses règles établit que, pour la mise en oeuvre du but global dans les conditions données, l'agent $C_{Inv}$ peut disposer des services "cycle-investissement" et "fusion - acquisition". L'agent $C_{inv}$ crée alors les deux services $P_{cycle\ inv}$ et $P_{fus-acq}$. L'agent de structuration des données $COTS_D$ envoie également des données structurées appropriées, à savoir les paquets de données $DM_{cycle\ inv}$ et $DM_{fus-acq}$. L'agent $C_{inv}$ est maintenant en mesure de mettre en oeuvre sa stratégie 2.2 de validation des objets de connaissance $O_1^{\delta1+\delta2+\delta3}$ et $O_3^{\delta1+\delta2+\delta3}$.

Selon la règle de stratégie de validation de l'objet $O_1$ dans sa version complétée $O_1^{\delta1+\delta2+\delta3}$ dans les conditions définies par

si forme $O_1$ extraite des données structurées $DM_{CR}$,
si propriété de $O_1$ = écart valeur numérique dans tableau de bord

l'agent $C_{inv}$ envoie un message de but 1 = strat 2.2 = validation par piste sur l'objet $O_1$ à l'agent piste $P_{cycle\ inv}$.

En application de ses règles de stratégie de validation de l'objet $O_3$ dans sa version enrichie $O_3^{\delta1+\delta2+\delta3}$, en mettant en oeuvre la stratégie 2.2 dans les conditions définies par

si forme de $O_3$ est extraite des données $DM_{Asie}$,
si propriété de $O_3$ = densite branche concept,

l'agent $C_{inv}$ envoie le message de but = strat 2.2 = validation par piste sur l'objet $O_3$ à l'agent piste $P_{fus-acq}$.

On constate que du fait que l'objet $O_1$ a été extrait dans le domaine de la comptabilité et est une alarme sur des valeurs numériques de tableau de bord, en stratégie rapide, il est validé sur les cycles d'investissement. Par contre l'objet $O_3$ qui a été extrait dans le domaine de l'économie - politique et est une alarme sur une densité de points dans l'arbre de connaissance, en stratégie rapide est validé dans le domaine "fusion - acquisition".

Selon des règles de but et de stratégie, qui ont déjà été exposées lors de la description du déroulement de l'invariant 1, les agents piste doivent choisir le nombre des agents analyseurs.

En application de ces règles de but = but local = validation par piste sur l'objet $O_1$, demandant la mise en oeuvre de la stratégie 1 = recherche point d'appui, l'agent piste $P_{cycle\ inv}$ crée un agent analyseur, à savoir l'agent $A_{cycle\ inv}$ et envoie le message but = strat 1 = recherche point d'appui à cet agent.

L'agent piste $P_{fus-acq}$ selon sa règle de but "si but = but local 1 = validation par piste sur $O_3$", en application

de la stratégie strat = strat 1 qui en découle, crée un agent analyseur, à savoir l'agent $A_{fus-acq}$ et envoie le message but 1 = strat 1 = recherche point d'appui sur $O_3$ à l'agent $A_{fus-acq}$.

Comme cela a été également expliqué plus haut, lors de la description du déroulement de l'invariant 1, les agents analyseurs, pour accomplir les opérations de validation mettent en oeuvre des règles de but et de plan d'action.

On expliquera ci-après plus en détail le travail des agents analyseurs en fonction de leur règle de but et de plan d'action.

L'agent analyseur $A_{cycle\ inv}$ met en oeuvre les règles de but et de plan en fonction du fait que l'indice $O_1$ est de catégorie 1 et que l'alarme est déclenché sur une propriété d'écart de valeur numérique dans le tableau de bord. Pour la mise en oeuvre du plan l'agent $A_{cycle\ inv}$ crée 3 agents cognitifs à savoir LOC = détecteur de contexte et de forme de point d'appui ; FOC = détecteur de signaux TB ; VAL = détecteur de corrélation.

L'agent analyseur $A_{cycle\ inv}$ envoie tout d'abord une requête à l'agent LOC de précision de contexte. L'agent LOC met en oeuvre la règle de but suivante :

Si but = préciser contexte de $O_1^{\delta1+\delta2+\delta3}$ (plan 1, but global, $DM_{cycle-inv}$, $DM_{CR}$), si forme $O_1$ extraite de $DM_{CR}$, si type forme = squelette, si contexte $O_1$ = produit A, si $O_1$ lié à $O_7$ de type = contexte de, si structure $DM_{cycleinv}$ = arbre de données numériques

$\Rightarrow$ utiliser savoir-faire 1 = détecter contour de branche de données sur critère décrivant le contexte de l'objet $O_1$ dans $DM_{cycle\ inv}$

$\Rightarrow$ créer $O_{20}$ (branche de données)

$\rightarrow$ ID
$\rightarrow$ Type (point repère)
$\rightarrow$ Créateur LOC ($A_{cycle\ inv}$)
$\rightarrow$ Forme (type = zone, créateur LOC, structure $DM_{cycle\ inv}$, index, forme = branche données, média = arbre données)
$\rightarrow$ Relier à ($O_1$ : créateur LOC, type = lié par le contexte ($O_1$), $O_7$ : créateur LOC, type = décrivant contexte)

$\Rightarrow$ mise à jour de $O_1^{\delta1+\delta2+\delta3}$

$\delta^4 O_1$

$\rightarrow$ Relié à ($O_{20}$ : créateur LOC, type-relié par le contexte ($O_1$))

$\Rightarrow$ faire requête d'établissement de forme-point d'appui sur $O_{20}$ dans $DM_{cycle-inv}$ à FOC
$\Rightarrow$ si retour de FOC = ($\delta^1 O_{20}$, $O_2$), faire mise à jour de $O_{20}$ dans LOC :

$\delta^1 O_{20}$

$\rightarrow$ Relié à ($O_2$ : créateur FOC, type = contient)

$\Rightarrow$ faire retour à agent père ($\delta^4 O_1^{\delta1+\delta2+\delta3}$, $O_{20}^{\delta1}$, $O_2$)

Il ressort des règles de plan, que l'agent $A_{cycle\ inv}$ a créé trois agents cognitifs, à savoir un agent de localisation LOC formé par un détecteur de contexte et de et de forme de point d'appui, un agent de focalisation FOC formé par un détecteur de signaux de tableau de bord (TB) et un agent de validation VAL formé par un détecteur de corrélation. L'agent analyseur $A_{cycle\ inv}$ adresse une requête de précision de contexte sur l'objet $O_1^{\delta1+\delta2+\delta3}$ à l'agent LOC dans un champ de connaissances de cycle d'investissement $DM_{cycle\ inv}$, alors que l'indice a été créé dans un champ de connaissances de comptabilité $DM_{com}$. Ceci met en oeuvre l'analyse multi-point de vue à l'intérieur d'une machine IKM. L'agent LOC est chargé de détecter dans l'arbre de données de connaissances structurées $DM_{cycle-inv}$ un contour, sur critère lié au contexte de l'indice. Ce critère concerne le produit PA. L'agent cognitif doit allumer dans l'arbre de données représenté schématiquement sur la figure 5 les points qui concernent le produit PA. L'arbre de données correspondant à l'arbre de connaissances structurées $DM_{CR}$ selon la figure 2 a pour branches le chiffre d'affaire ca, les charges ch, les résultats res. Mais, dans l'arbre $DM_{cycle-inv}$ les branches constituent les postes Recherche - Développement, R & D, Commercial, COC et Fabrication, FA. Sur la figure 5 l'agent LOC allumera les points, sur les sous-branches de produits P, qui représentent le produit PA. Le contour englobant le produit PA dans l'arbre de données $DM_{cycle-inv}$ constitue l'objet de connaissance que créé l'agent LOC. Cet objet est du type contexte, présente la forme type = zone, forme = branche données, média = arbre de données et est relié à $O_1$ par le contexte $O_7$. Ceci créé un nouvel élément de connaissance $\delta^4 O_1$ et l'agent LOC met à jour l'objet $O_1^{\delta1+\delta2+\delta3}$ qui devient alors $O_1^{\delta1+\delta2+\delta3+\delta4}$.

Puis l'agent LOC adresse une requête à l'agent FOC pour que celui-ci établisse des signaux faibles concer-

nant l'objet $O_{20}$ dans la structure $DM_{cycle\ inv}$. L'agent FOC met en oeuvre les règles de savoir faire telles que définies ci-après :

Si but = établir forme-point d'appui sur $O_{20}$, si structure = $DM_{cycle\ inv}$, si type forme $(O_{20})$= branche données

$\Rightarrow$ utiliser savoir-faire 1 = calcul de signaux de tableau de bord (TB) dans structure $DM_{cycle-inv}$ sur $O_{20}$

$\Rightarrow$ si amplitude signaux > seuil 1, si surface signaux valeurs sources > seuil 2, créer $O_2$ tel que

$\rightarrow$ ID
$\rightarrow$ Type (forme-point d'appui)
$\rightarrow$ Créateur FOC ($A_{cycle\ inv}$)
$\rightarrow$ Forme (type = squelette, créateur FOC, structure $DM_{cycle-inv}$, index, forme = valeurs numériques $\Delta U$, média = valeur numérique source dans $DM_{cycle-inv}$)
$\rightarrow$ Propriété (Ecart TB)
$\rightarrow$ Relié à ($O_{20}$ : créateur FOC, type = contenu dans)

$\Rightarrow$ faire mise à jour de $O_{20}$ :
$\qquad \delta^1 O_{20}$

$\rightarrow$ Relié à ($O_2$ : créateur FOC, type contient)

$\Rightarrow$ faire retour à LOC ($\delta^1 O_{20}$, $O_2$)

En application de ces règles, l'agent FOC établit des signaux faibles de tableau de bord dans la structure $DM_{cycle-inv}$ sur $O_{20}$. Si l'agent FOC détecte des signaux d'une amplitude supérieure au seuil 1, il créé l'objet $O_2$ indiqué plus haut qui est du type forme-point d'appui, de forme du type squelette et représente des valeurs numériques en étant relié à l'objet $O_{20}$ par une liaison du type "contenu dans". En se reportant à la figure 5, on constate en effet que l'objet $O_2$ se trouve à l'intérieur du contour $O_{20}$ sur la sous-branche de produits P de la branche R & D. Ce fait apporte un élément de connaissance $\delta^1 O_{20}$ à l'objet $O_{20}$ et permet à l'agent FOC de mettre à jour l'objet $O_{20}$ pour que celui-ci devienne $O_{20}{}^{\delta 1}$. Puis l'agent FOC renvoie à l'agent LOC les objets $\delta^1 O_{20}$ et $O_2$. Après le retour de $\delta^1 O_{20}$ et $O_2$ à l'agent LOC, ce dernier met à jour l'objet $O_1$ selon $\delta^4 O_1$ qui devient alors $O_1{}^{\delta 1+\delta 2+\delta 3+\delta 4}$. Puis les règles de l'agent LOC amènent celui-ci à envoyer les éléments $\delta^4 O_1{}^{\delta 1+\delta 2+\delta 3}$, $\delta^1 O_{20}$ et $O_2$ à l'agent $A_{cycle\ inv}$. Cet agent demande ensuite à l'agent cognitif de validation VAL de préciser les objets $O_1{}^{\delta 1+\delta 2+\delta 3+\delta 4}$, $O_{20}{}^{\delta 1}$, $O_2$ selon les règles de savoir-faire de validation suivantes

Si but = préciser ($O_1{}^{\delta 1+\delta 2+\delta 3+\delta 4}$, $O_{20}{}^{\delta 1}$, $O_2$) (plan 1, dans $DM_{cycle\ inv}$, $DM_{CR}$)
si type $O_2$ = forme-point d'appui, si propriété $O_2$ = écart TB, si $O_2$ lié à $O_{20}$ et du type = contenu dans,
si $O_1$ et $O_{20}$ lié par le contexte

$\Rightarrow$ utiliser savoir-faire 1 = recherche corrélation entre $O_1$, $O_2$, par caractéristique commune

$\Rightarrow$ si résultat de savoir-faire 1 = $\delta^5 O_1$, faire mises à jour $\qquad \delta^5 O_1$

$\rightarrow$ Relié à $O_2$ ( créateur VAL, type = corrélation par le contexte de $O_1$)

$\qquad \delta^1 O_2$

$\rightarrow$ Type = (forme point d'appui $\rightarrow$ point appui)
$\rightarrow$ Relié à $O_1$ (créateur VAL, type corrélation par le contexte de $O_1$)

$\Rightarrow$ faire retour au père ($\delta^5 O_1$, $\delta^1 O_2$).

Selon sa règle de précision d'indice de la catégorie 1 l'agent VAL en utilisant son savoir faire de recherche de corrélation établira que les objets $O_1$ et $O_2$ sont liés du fait qu'ils concernent tous les deux le produit PA. Les deux objets sont donc corrélés par le contexte PA, ce qui constitue le nouvel élément de connaissance $\delta^5 O_1$ relié à $O_2$ et du type corrélation indiqué plus haut, ainsi que le nouvel élément $\delta^1 O_2$ du type forme-point d'appui qui devient point d'appui relié à $O_1$. Après leur mise à jour les objets de connaissance $O_1{}^{\delta 1\ à\ \delta 5}$, $O_2{}^{\delta 1}$ sont renvoyés à l'agent analyseur $A_{cycle-inv}$, ce qui met fin à la validation de l'objet de connaissance $O_1$. La validation a permis d'établir l'objet $O_2$ constituant

un écart dans le domaine R & D des $DM_{cycle-inv}$ comme point d'appui de l'objet d'indice d'alerte $O_1$.

Pendant la validation avec recherche d'appui effectuée sur l'objet $O_1$, l'agent analyseur $A_{fus-acq}$ procède à la validation de l'objet $O_3$.

Pour accomplir cette fonction, l'agent $A_{fus-acq}$ agit selon les règles de but et de plan suivantes :

Règle de but

Si but = but local 1 = Recherche point d'appui ($O_3$, but global, Cat2), dans
$DM_{fus-acq}$, $DM_{Asie}$

$\Rightarrow$  plan = plan 1 ($O_3$, but global, cat 2, $DM_{fus-acq}$, $DM_{Asie}$)

Règle de plan

Si plan = plan 1 ($O_3$, but global, cat 2, $DM_{fus-acq}$, $DM_{Asie}$)

$\Rightarrow$  créer deux agents cognitifs : LOC = détecteur contexte et VAL = détecteur de corrélation
$\Rightarrow$  faire requête 1 à LOC = préciser contexte de $O_3$ (plan 1, $DM_{fus-acq}$, $DM_{Asie}$)
$\Rightarrow$  si retour de requête ($\delta^4 O_3$, $O_{31}$), faire requête 2 à VAL ($O_3$, $O_{31}$)
$\Rightarrow$  si fin requête 2 = ($\delta^5 O_3$, $O^{\delta 1}{}_{33}$, $\delta^1 O_{31}$), faire retour à $A_{Asie}$ ($\delta^5 O_3$, $\delta^1 O_{31}$, $O^{\delta 1}{}_{33}$)

Plus précisément, l'agent $A_{fus-acq}$ crée deux agents cognitifs, à savoir un agent de localisation LOC formé par un détecteur de contexte sur critère et un agent de validation VAL qui est un détecteur de corrélation. En mettant en oeuvre sa règle de plan, l'agent $A_{Asie}$ adresse une requête à l'agent LOC lui demandant de préciser le contexte de l'objet $O_3$ dans le domaine des connaissances structurées $DM_{fus-acq}$.qui peut être un tableau de données numériques et qualitatives dites alphanumériques.

L'agent LOC, en réponse à cette requête met en oeuvre sa règle de précision de contexte suivante

Si but = préciser contexte de $O_3{}^{\delta 1+\delta 2+\delta 3}$ (plan 1, but global, $DM_{fus-acq}$, $DM_{Asie}$), si contexte $O_3$ = société à actions en baisse au Japon, si forme $O_3$ extraite de $DM_{Asie}$, si $O_3$ lié à $O_{30}$ de type = contexte de

$\Rightarrow$  utiliser savoir-faire 1 = détecter contour de branche données sur critère décrivant le contexte de l'objet $O_3$ dans $DM_{fus-acq}$
$\Rightarrow$  créer $O_{31}$ (branche données)

$\rightarrow$  ID
$\rightarrow$  Type (contexte)
$\rightarrow$  Créateur LOC ($A_{fus-acq}$)
$\rightarrow$  Forme (type = zone, créateur LOC, structure $DM_{fus-acq}$, forme = branche données, média = BD alphanumé-riques)
$\rightarrow$  Relié à $O_3$ (créateur LOC, type lié par le contexte de $O_3$, $O_{30}$ : créateur LOC, type = décrivant contexte)

$\Rightarrow$  mise à jour de $O_3{}^{\delta 1+\delta 2+\delta 3}$
$\delta^4 O_3$

$\rightarrow$  Relié à $O_{31}$ (créateur LOC, type = lié par le contexte de $O_3$)

$\Rightarrow$  faire retour à agent père ($\delta^4 O_3{}^{\delta+\delta 2+\delta 3}$, $O_{31}$)

Concrètement, pour mettre en oeuvre cette règle de précision de contexte, l'agent LOC utilise le savoir-faire 1 de détection de contour de branche de données sur critère décrivant le contexte de l'objet $O_3$ dans le domaine $DM_{fus-acq}$ et organisé de façon connue en soi sous forme de branche de données du domaine $DM_{fus-acq}$. L'objet à considérer est une zone "acquisition des sociétés à actions en baisse au Japon". Cette zone donne lieu à la création de l'objet $O_{31}$ qui est du type contexte et de forme du type zone dans l'arbre de données. L'objet $O_{31}$ est d'autre part

relié à $O_3$ par le contexte de $O_3$ et à $O_{30}$ qui décrit le contexte de $O_3$ dans le domaine $DM_{Asie}$. Le lien entre $O_{31}$ et $O_{30}$ est virtuel dans l'agent LOC. Puis ce dernier effectue une mise à jour de $O_3{}^{\delta1+\delta2+\delta3}$ ce qui permet d'obtenir $\delta^4O_3$ qui est relié à $O_{31}$ par une liaison du type lié par contexte de $O_3$. Ensuite l'agent LOC renvoie $\delta^4O_3{}^{\delta1+\delta2+\delta3}$ et $O_{31}$ à l'agent père, à savoir l'agent $A_{fus-acq}$.

La règle de plan de l'agent $A_{fus-acq}$ amène celui-ci après le retour de la requête adressée à l'agent LOC, à adresser une requête 2 à l'agent VAL pour que celui-ci recherche une corrélation entre les objets $O_{31}$ et $O_3$ sous la condition qu'il doit s'agir de sociétés concurrentes sur le même type de produit. Il s'agit donc d'une sélection d'un contour sous critère. La contrainte de sociétés concurrentes imposée par VAL vient du fait que l'indice $O_3$ a été détecté par des agents de veille d'économie politique. Il convient donc d'étudier les éléments de cet indice qui sont liés à la concurrence. Le contour ainsi obtenu amène l'agent VAL à créer l'objet $O_{33}$ du type forme-point d'appui. $O_{33}$ est contenu dans $O_3$ et dans $O_{31}$. L'agent VAL crée donc les mises à jour suivantes :

$\delta^5O_3$
$\rightarrow$ Relié à $O_{33}$ (créateur VAL, type = contient)
$\delta^1O_{31}$
$\rightarrow$ Relié à $O_{33}$ (créateur VAL, type = contient)

L'agent recherche encore s'il existe entre les sociétés de la zone $O_{33}$ une caractéristique commune. Dans le présent exemple il s'avère que ces sociétés ont en commun leur mode d'acquisition qui est du type OPA, à savoir "offre public d'achat". Ceci apporte comme élément supplémentaire $\delta^1O_{33}$ qui devient du type point d'appui, d'utilisation OPA concurrente et a la propriété d'être stratégique. L'agent VAL envoie ensuite à l'agent analyseur $A_{fus-acq}$ les objets $\delta^5O_3{}^{\delta1+\delta2+\delta3+\delta4}$, $\delta^1O_{31}$ et $O_{33}{}^{\delta1}$. L'agent $A_{fus-acq}$ met à jour les éléments et renvoie à l'agent piste $P_{fus-acq}$ les objets $O_3{}^{\delta1 \text{ à } \delta5}$, $O_{31}{}^{\delta1}$ et $O_{33}{}^{\delta1}$. Ces objets sont alors envoyés à l'agent canal $C_{inv}$ qui les transmet de même que les objets $O_1{}^{\delta1 \text{ à } \delta5}$, $O_{20}{}^{\delta1}$ et $O_2{}^{\delta1}$ en provenance de l'agent piste $P_{cycleinv}$ à l'agent $UM_{fin}$ qui à son tour les transmet à l'agent maître GM. La figure 4 illustre pour l'invariant 2, la création, la construction et le déplacement des objets de connaissance et les objets tels qu'ils sont stockés dans les différents dispositifs de stockage DST des différents agents constituant le réseau selon l'invention.

L'agent GM dispose ainsi des résultats des deux procédures d'invariant 1 et 2 qui ont été établies automatiquement par un réseau d'agents fonctionnant chacun selon des règles de but, de stratégie et de plan d'action, spécifiques en fonction d'un but global à atteindre et modifiables par l'homme. Dans le cas présent, l'objet $O_2$ est corrélé à l'indice $O_1$. Ce sont deux objets qui ont la propriété d'avoir des écarts dans les tableaux de bord de comptabilité et d'investissement, et ceci en relation avec le produit PA. Ces deux observations fournissent donc une visibilité à l'utilisateur financier sur le type de difficultés financières que génère systématiquement le produit PA. D'autre part, l'objet de connaissance $O_{33}$ s'avère être un élément stratégique qui permet à l'agent GM d'apprécier l'incident formé par l'objet $O_3$ qui a déclenché le processus de validation qui vient d'être décrit. Cette caractéristique stratégique qui génère l'élément $\delta^6O_3$ pourra être réutilisée ultérieurement par le système ou par l'utilisateur. En fonction de cette appréciation, le gestionnaire de connaissance collectif CKM peut prendre des décisions appropriées, en particulier celles d'utiliser ses agents Marketing et Technique pour approfondir davantage l'analyse de la problématique concernant $O_1$ et $O_3$, aussi selon des règles de but, de stratégie et de plan. Il est à noter que le système de l'invention assure un contrôle qui peut être permanent et se déclencher dès l'apparition d'un faible indice, en mettant en corrélation plusieurs points de vue différents, ou plusieurs compétences.

En se référant aux figures 7 à 14 on décrira ci-après les étapes du procédé selon l'invention, destinées à approfondir l'étude concernant les objets $O_1$ et $O_3$. A cette fin l'agent GM demande la mise en oeuvre d'invariants supplémentaires, à savoir un invariant 3 lancé de façon concomittante au lancement de l'invariant 2 sur un autre agent utilisateur, constituant une étape de reconnaissance 1 ayant pour but de rechercher des événements importants, appelés accidents, qui pourraient concerner les objets $O_1$ et $O_3$, un invariant 4 constituant une étape de reconnaissance 2 au cours de laquelle on tente de faire des fusions/connexions entre des points d'appui établis dans le cadre de l'invariant 2 et des accidents reconnus au cours de l'invariant 3, ceci conduisant à l'établissement de présomptions dans le raisonnement, et enfin un invariant 5 constituant une troisième étape de reconnaissance comportant une analyse technique des présomptions constatées auparavant et un dialogue homme/machine en vue d'aboutir à une décision de la machine prise collectivement entre différents agents utilisateurs.

Invariant 3 : Recherche d'Accidents

De façon générale, au cours de la mise en oeuvre de l'invariant 3 on vérifiera à chaque niveau n de la pyramide des agents si le niveau n-1 a déjà été créé au cours des invariants 1 et 2 éventuellement. Si la réponse est négative, l'agent père du niveau n crée les agents fils du niveau n-1, dont il a besoin pour réaliser le but qui lui est octroyé. Ces phases de structuration éventuelles des services et des données sont exécutée en appliquant des règles de but et de stratégie correspondant à celles déjà décrites précédemment. Il est à noter que lors de la mise en oeuvre de chaque règle de but et de stratégie on précise les modalités et les paramètres qui ont déjà été déterminés. Le rappel de ces informations permet au système de pouvoir, à tout moment et à tout emplacement de la structure des agents, d'accomplir sa tâche en fonction de ce qui a déjà été fait auparavant. On précise que les invariants 3, 4 et 5 portent comme l'invariant 2 sur des objets élémentaires détectés en indice, soit dans l'exemple $O_1$ et $O_3$.

Plus précisément, l'agent GM, dans le cadre du but de suivi budgétaire et de restructuration et dans la condition de rapidité et coût faible pour le retour de sélection rapide de $O_1{}^{\delta 1 + \delta 2 + \delta 3}$ par $U_{fin}$ après la stratégie 1 de détection d'indices et de façon concomittante à la stratégie 2 de validation pour trouver des points d'appui dans $U_{fin}$, applique la stratégie 3 sur les agents $U_{tech}$ et $U_{mark}$ de la reconnaissance 1 sur l'objet $O_1$ assorti de ses éléments de connaissance $O_1{}^{\delta 1 + \delta 2 + \delta 3}$, tel que reçu de l'agent $U_{fin}$.

Il est à noter que suite au premier invariant qui a mis en évidence un problème sur le produit A concernant le suivi budgétaire, le but global a évolué et a été précisé pour devenir "suivi budgétaire et restructuration", une décision stratégique de restructuration marketing pouvant être prise sur le produit A.

Selon la règle de stratégie

Si strat = strat 3 et si service associé à agent = $U_{fin}$, $U_{mark}$, $U_{tech}$ = service 1, si structure associée à agent est DH = k(n),

$\Rightarrow$ rechercher structure k (n-1) associé à DH et à service 1
$\Rightarrow$ si résultat de recherche = $DM_{fin}$, $DM_{mark}$, $DM_{tech}$, et si conditions 1 = rapidité et coût faible, envoyer :
but 1 ($O_1$) = RECO 1 ($O_1$, $DM_{tech}$,...) à $U_{tech}$
but 1 ($O_1$) = RECO 1 ($O_1$, $DM_{mark}$...) à $U_{mark}$

L'agent GM doit donc s'adresser à ses deux agents fils $U_{tech}$ et $U_{mark}$. On décrira tout d'abord comment $U_{tech}$ accomplit sa mission en se référant à la figure 7.

$U_{tech}$, selon la règle de but si but 1 = RECO 1, doit mettre en oeuvre la stratégie = strat 3 concernant l'objet $O_1{}^{\delta 1 + \delta 2 + \delta 3}$ dans le domaine des connaissances $DM_{tech}$. La stratégie 3 se décompose de la manière déjà décrite précédemment, en trois phases de stratégie strat 3.0, strat 3.1 et strat 3.2 au cours desquelles l'agent $U_{tech}$ après s'être adressé à l'agent de structuration de service COTS reçoit l'ordre de créer les agents Canal "GESTION-PROJET" et "VEILLE-TECHNOLOGIE", appelés ci-après $C_{gs-proj}$ et $C_{v-tech}$. La stratégie strat 3.1 aboutit à l'envoi à l'agent $U_{tech}$ de la part de l'agent de structuration des services de données $COTS_D$ des données $DM_{gs-proj}$ et $DM_{v-tech}$ qui sont extraits de $DM_{tech}$. Conformément à la règle si strat = strat 3.2, $U_{tech}$ envoie le message de but 1 = strat 3.2 = RECO 1 par Canal à son agent fils $C_{gs-proj}$. L'agent $U_{tech}$ demande la RECO 1 sur $O_1$ plus particulièrement à l'agent $C_{gs-proj}$ parce que, lorsque la recherche dans le domaine de la comptabilité, $DM_{com}$, ne permet pas d'atteindre des prévisions sur un produit, il faut vérifier dans la gestion de projet des programmes de développement, s'il y a un problème. De plus, $U_{tech}$ demande la RECO 1 uniquement à son fils $C_{gs-proj}$, car le système travaille en conditions de rapidité et faible coût.

L'agent Canal $C_{gs-proj}$ en fonction du but 1 = RECO 1 par Canal sur $O_1{}^{\delta 1 + \delta 2 + \delta 3}$ en application de la stratégie 3, comportant à nouveau les phases de stratégie strat 3.0, strat 3.1 et strat 3.2, crée les agents de piste $P_{plan-dev}$ et $P_{RH}$ suivant strat 3.0, reçoit conformément à la stratégie strat 3.1 les paquets de données $DM_{plan-dev}$ et $DM_{RH}$, plan-dev signifiant "Plan de Développement" et RH signifiant "Ressources Humaines". La structure des services et des données qui vient d'être construite est stockée dans la mémoire M.

Puis, en application de la règle de stratégie, si strat = strat 3.2, si le but global est le suivi budgétaire et la restructuration, si la condition est "rapidité et faible coût", si la forme de $O_1$ est extraite de $DM_{CR}$, si la propriété de $O_1$ = écart T.B. (tableau de bord), l'agent Canal $C_{gs-proj}$ envoie le message but 1 = strat 3.2 = RECO 1 par piste, à l'agent $P_{plan-dev}$, pour la raison qui a été donnée plus haut lors de l'exposition de règle de stratégie 3.2 de l'agent $U_{tech}$ qui a motivé de faire exécuter la stratégie 3.2 = RECO 1 par canal, à l'agent $C_{gs-proj}$. Il est à noter que, dans les conditions déterminées par le processus décisionnel tel qu'il a été effectué jusqu'à présent et les résultats obtenus, l'agent $P_{plan-dev}$ est chargé de créer un agent analyseur $A_{plan-dev}$.

Ce dernier a pour règle de but de mettre en oeuvre le plan 3 de recherche d'accidents dans la structure numérique des données $DM_{plan-dev}$ de l'étape RECO 1 qui consiste à créer trois agents cognitifs, à savoir un agent de focalisation FOC qui est un détecteur de signaux numériques faibles, un agent de localisation LOC de détection de contexte et de forme de point d'appui et un agent SCAN qui est un analyseur fin de caractéristiques, dont la fonction apparaîtra ci-après.

La règle de plan amène l'agent d'analyse $A_{plan-dev}$ à faire la requête 1 à l'agent LOC de préciser en coopération avec l'agent FOC le contexte de $O_1{}^{\delta 1 + \delta 2 + \delta 3}$ dans le domaine $DM_{plan-dev}$ et, après le retour de la requête 1, à faire une requête 2 à l'agent SCAN demandant à ce dernier de donner des précisions sur les nouveaux éléments de $O_1$ et les nouveaux objets de connaissance créés par l'agent LOC.

Plus précisément, l'agent LOC au cours de l'invariant 3 doit préciser le contexte de $O_1$, dans la structure de données $DM_{plan-dev}$ selon les règles suivantes :

si but = préciser le contexte de $O_1{}^{\delta1 + \delta2 + \delta3}$ (plan 3, but global, $DM_{plan-dev}$), si contexte de $O_1$ = produit A, si $O_1$ lié à $O_7$ de type lié par le contexte,

$\Rightarrow$ utiliser savoir faire 1 = détecter branche données par le contexte dans $DM_{plan-dev}$, appliqué à produit A ;
$\Rightarrow$ créer $O_6$ (branche de données) :

$\rightarrow$ Id
$\rightarrow$ Type (contexte)
$\rightarrow$ Créateur LOC ($A_{plan-dev}$)
$\rightarrow$ Forme (type = zone, créateur LOC, structure $DM_{plan-dev}$, index, forme = branche données, média = BD)
$\rightarrow$ Relié à ($O_1{}^{\delta1 + \delta2 + \delta3}$ : créateur LOC, type = lié par contexte, $O_7$ : créateur LOC, type = décrivant l'objet contexte)
$\rightarrow$ Utilisation (plan développement produit A)

$\Rightarrow$ Mise à jour de $O_1{}^{\delta1 + \delta2 + \delta3}$ :
$\Delta^1 O_1{}^{\delta1 + \delta2 + \delta3}$

$\rightarrow$ Relié à ($O_6$ : créateur LOC, type = relié par contexte)

$\Rightarrow$ Faire "obtenir forme-point d'appui ($O_6$, $DM_{plan-dev}$) " à FOC
$\Rightarrow$ si retour de FOC = ($\Delta^1 O_6$, $O_8$), faire mise à jour de $O_6$ dans LOC ($\Delta^1 O_6$)
$\Rightarrow$ faire retour à père de ($\Delta^1 O_1{}^{\delta1 + \delta2 + \delta3}$, $O_6{}^{\Delta1}$, $O_8$)

L'agent FOC est programmé pour agir selon la règle de but suivante pour réaliser la détection de signaux numériques :

si but = obtenir forme-point d'appui ($O_6$, $DM_{plan-dev}$) reçu de LOC, si $DM_{plan-dev}$ = structure numérique :

$\Rightarrow$ utiliser savoir faire 1 = calculer signaux "tableau de bord TB" de $O_6$ dans $DM_{plan-dev}$
$\Rightarrow$ utiliser savoir faire 2 = détecter signaux TB
$\Rightarrow$ si amplitude signaux calculés > seuil 1, si surface signaux < seuil 2, créer $O_8$ tel que :
$O_8$

$\rightarrow$ ID
$\rightarrow$ Type (forme point d'appui
$\rightarrow$ Créateur FOC ($A_{plan-dev}$)
$\rightarrow$ Forme (type = squelette, créateur FOC, structure $DM_{plan-dev}$, index, forme = valeur numérique $\Delta R$, média = valeurs numériques sources)
$\rightarrow$ Propriété (écart TB)
$\rightarrow$ Relié à ($O_6$ : créateur FOC, type = contenu dans)
$\rightarrow$ Utilisation (plan dev produit A)

$\Rightarrow$ faire mise à jour de $O_6$ :
$\Delta^1 O_6$

$\rightarrow$ Relié à ($O_8$ : créateur FOC, type = contexte)

$\Rightarrow$ faire retour à LOC de ($\Delta^1 O_6$, $O_8$).

L'agent d'analyse $A_{plan-dev}$, après la réception des objets $\Delta^1 O_1{}^{\delta1 + \delta2 + \delta3}$, $O_6{}^{\Delta1}$, $O_8$ de provenance de l'agent LOC, envoie à l'agent cognitif SCAN la requête 2 demandant à cet agent de fournir des précisions sur ces objets.
L'agent SCAN met en oeuvre les règles suivantes :

si but = préciser ($O_1{}^{\delta1 + \delta2 + \delta3 + \Delta1}$) étant données $O_6{}^{\Delta1}$, $O_8$, dans $DM_{plan-dev}$, s'il existe forme point d'appui $O_8$, si propriété de $O_8$ = écart TB, si forme de $O_8$ extraite de $DM_{plan-dev}$, si but = suivi budgétaire et restructuration, si

propriété de $O_1$ = écart TB dans $DM_{CR}$

⇒ utiliser savoir faire 1 = détection d'une caractéristique cognitive commune ou exceptionnelle dans l'objet $O_8$ dans $DM_{plan-dev}$

⇒ s'il existe une telle caractéristique, créer $O_9$

→ ID
→ Type (repère point d'appui)
→ Créateur SCAN ($A_{plan-dev}$)
→ Forme (type colonne, créateur SCAN, structure $DM_{plan-dev}$, index, forme = caractéristique commune, média = tableau BD)
→ Relié à ($O_8$ : créateur SCAN, type = contenu dans)
→ Utilisation (technologie, nom = $X_1$)
→ Propriété (risque)

⇒ Si utilisation ($O_9$) = technologie, faire mise à jour
$\Delta^1 O_8$

→ Type (forme-point d'appui → point d'appui)
→ Relié à $O_9$ : créateur SCAN, type contient)

⇒ faire retour à agent père ($\Delta^1 O_8$, $O_9$)

Concernant la recherche d'une caractéristique cognitive, l'agent SCAN peut détecter soit des accidents, soit des points de repère. Par exemple si l'indice est un écart dans le domaine des comptes des résultats, si le point d'appui est un écart dans le développement d'un produit, SCAN cherche s'il existe une technologie commune dans les paramètres du point d'appui. Si oui, c'est un point de repère.

Il ressort de ce qui précède, que dans le cas d'espèce aucun accident n'a été retrouvé. Dans cette situation où l'agent $C_{gs-proj}$ constate qui n'y a en retour aucun accident, il adresse à son agent frère $C_{v-tech}$ une requête de précision de reconnaissance 1.

Selon la règle de but, si but = préciser RECO 1 sur $O_1^{\delta 1 + \delta 2 + \delta 3}$, étant donné $O_6^{\Delta 1}$, $O_8^{\Delta 1}$, $O_9$, envoyé par $C_{gs-proj}$, l'agent $C_{v-tech}$ doit appliquer la stratégie 3 se décomposant dans trois stratégies 3.0, 3.1 et 3.2 pour, selon la stratégie 3.0, créer les agents piste $P_{conc}$, $P_{conc}$ signifiant agent piste "CONCURRENTS" et $P_{presse}$, selon la stratégie 3.1, assurer que les agents piste soient pourvus des données $DM_{conc}$ et $DM_{presse}$ extrait de $DM_{v-tech}$ et, selon la stratégie 3.2, envoyer la requête préciser RECO 1 par piste à l'agent $P_{conc}$. En effet, l'agent canal $C_{v-tech}$ choisit en stratégie rapide d'envoyer le but de préciser RECO 1 par piste à l'agent piste qui surveille les concurrents en relation avec la technologie critique. La structure $DM_{conc}$ est un tableau de données alphanumériques.

L'agent piste $P_{conc}$ selon la règle de but "si but = préciser RECO 1 par piste sur $O_1^{\Delta 1 + \Delta 2 + \delta 1 + \delta 2 + \delta 3}$ avec $O_6^{\Delta 1}$, $O_8^{\Delta 1}$, $O_9$, appliquer strat = strat 3", choisit un agent analyseur, à savoir l'agent $A_{conc}$ et envoie le but = recherche-précise accident à cet agent $A_{conc}$.

L'agent $A_{conc}$ crée dans l'exemple choisi de l'invention un agent cognitif, à savoir un agent SCAN, dont la fonction est adaptée pour effectuer la surveillance d'une structure sur critère (fonction SCAN de type 2).

L'agent SCAN agit selon la règle :

si but = préciser RECO 1 sur $O_1^{\Delta 1 + \Delta 2 + \delta 1 + \delta 2 + \delta 3}$ avec $O_6^{\Delta 1}$, $O_8^{\Delta 1}$, $O_9$, si propriété de $O_1$ = écart TB dans $DM_{CR}$, s'il existe un point d'appui $O_8$ tel que propriété $O_8$ = écart TB et utilisation $O_8$ = investissement produit A, s'il existe un point de repère $O_9$ tel que utilisation $O_9$ = technologie, si DM = $DM_{conc}$, si but global = suivi budgétaire et restructuration,

⇒ utiliser savoir faire 2 = détection d'une caractéristique exceptionnelle dans la structure $DM_{conc}$ selon l'utilisation de $O_9$ et

⇒ si le résultat est positif, créer $O_{10}$

→ ID
→ Type (accident)
→ Créateur (SCAN $A_{conc}$)
→ Forme (type axe, créateur SCAN, structure $DM_{Conc}$, index, forme induite = vecteurs ; média = BD alphanu-

mérique)

→ Relié à ($O_9$ : créateur SCAN, type = possède)

→ Utilisation (nouvel entrant)

→ Propriété (stratégique)

⇒ faire la mise à jour :

$$\Delta^1 O_9$$

→ Relié à ($O_{10}$ : créateur SCAN, type = possédé par)

⇒ faire retour au père de ($\Delta^1 O_9$, $O_{10}$)

Autrement dit, pour l'exécution de sa tâche, l'agent SCAN sait qu'il doit examiner tous les concurrents de l'arbre $DM_{conc}$ qui possèdent le point de repère, c'est-à-dire la technologie critique, et détecter s'il y a de nouveaux concurrents. Dans l'affirmative il crée un objet, à savoir l'objet $O_{10}$ qui représente un nouvel entrant. Or un nouvel entrant, par définition constitue un accident. Il est à noter que tous les objets concernant les nouveaux entrants sont qualifiés de stratégiques.

Le domaine $DM_{conc}$ peut être structuré sous forme d'un tableau. Dans ce tableau les différents concurrents occupent une ligne dans laquelle sont indiquées toutes les informations disponibles, telles que les technologiques, $X_1$ à $X_n$, utilisées par le concurrent, sa date d'entrée, les brevets qu'il possède, son capital etc. En examinant ce tableau, l'agent SCAN constate qu'un concurrent a une date d'entrée récente et qu'il utilise la technologie $X_1$ constituant l'objet $O_9$. Ce concurrent devient l'objet sus-mentionné $O_{10}$. Le fait que le concurrent nouvel entrant constaté utilise la technologie $X_1$ donne naissance à l'élément de connaissance $\Delta^1 O_9$ avec le champ "relié à $O_{10}$".

Selon les règles de retour, l'agent $A_{conc}$, dans les conditions qu'il y a un objet, à savoir $O_{10}$ qui est lié à $O_1$ et est de propriété stratégique et que $O_{10}$ constitue un accident, crée $\Delta^3 O_1^{\Delta^1 + \Delta^2 + \delta^1 + \delta^2 + \delta^3}$, tel que

$$\Delta^3 O_1^{\Delta^1 + \Delta^2 + \delta^1 + \delta^2 + \delta^3}$$

→ intérêt : 2 (1) (contient un objet stratégique)

→ alarme :2 (1) (contient un accident)

Dans cette représentation le nombre indiqué entre parenthèse donne le nombre respectivement d'objets stratégiques et d'accidents des champs intérêt et alarme. L'objet est d'intérêt et d'alarme niveau 2 puisqu'il contient un objet stratégique et un accident.

Comme le montre la figure 7, en réponse à la requête "préciser RECO 1" en provenance de l'agent $C_{gs\text{-}proj}$, l'agent $C_{v\text{-}tech}$ envoie à celui-ci les objets qu'il a créés et ce dernier remonte à l'agent $U_{tech}$ les éléments de connaissance et objets de connaissance $(\Delta^1 + \Delta^2 + \Delta^3) O_1^{\delta^1 + \delta^2 + \delta^3}$, $O_6^{\Delta^1}$, $O_8^{\Delta^1}$, $O_9^{\Delta^1}$ et $O_{10}$.

Les résultats obtenus à la fin de la reconnaissance 1 sur l'objet $O_1$ sont structurés dans l'IKM formé par l'agent $U_{tech}$ d'une façon permettant une représentation sur l'écran de l'interface Homme/Machine, aisément lisible.

La figure 7 montre une représentation avantageuse de ces résultats sous forme d'arbre de connaissances structurées, organisées en catégorie de connaissances. A chaque objet d'indice détecté et analysé correspond un arbre de connaissances structurées construites à partir de l'indice. Sur la figure 7 une ligne extérieure, d'enveloppe, représente le contexte de l'indice $O_1$, à savoir le produit A. L'espace délimité par cette ligne est divisé en un certains nombres de zones en forme de lobes, chacune attribuée à une catégorie de connaissances. Des lignes à l'intérieur d'un lobe de catégorie désignent des sous-catégories. Chacun des domaine, écarts, fusions-acquisitions, concurrents et technologies, constituent une catégorie. Les domaines sont choisis car ils correspondent à des catégories de connaissances structurantes vis-à-vis du processus de décision pour la réalisation d'un but global. La catégorie des écarts a pour sous-catégorie le domaine des écarts sur des comptes de résultats, des investissements et des plans de développements. Le domaine des OPA constitue une sous-catégorie de la catégorie des fusions et acquisitions. Les nouveaux entrants sont une sous-catégorie de la catégorie des concurrents et la liste des technologies et la liste des brevets constituent chacune une sous-catégorie de la catégorie des technologies.

Les résultats qui ont été obtenus lors de la reconnaissance 1 sont placés dans l'image d'écran selon la figure 7 d'après leur appartenance aux catégories et sous-catégories telles qu'elles viennent d'être définies. Le placement des objets se fait en fonction des contenus de leurs champs "propriété" et "utilisation". L'agent lit les champs par ordre de priorité. Tout d'abord il lit le champs type. Si un objet est de type contexte il est placé sur l'enveloppe de l'arbre de connaissances.Puis l'agent lit le champs "propriété" des objets et si le contenu de ce champ est structurant il crée la catégorie correspondante, si celle-ci n'existe pas déjà, et place l'objet.Puis il lit le champs utilisation.S'il est structurant et qu'il correspond à une sous-catégorie de la propriété structurante,l'agent y place l'objet. Si le champ propriété n'est pas structurant, il lit le champ "utilisation". Si ce champ est structurant, l'agent crée la catégorie, si celle-ci n'existe pas déjà, et place l'objet.

Dans le cas présent, concernant l'objet $O_1$, il est de la propriété "écart" qui est structurante. Par conséquent on place l'objet $O_1$ sur la ligne d'enveloppe représentative du produit A, contexte de $O_1$. Concernant l'objet $O_6$, l'agent constate que $O_6$ est de type contexte et l'agent place l'objet $O_6$ sur la ligne d'enveloppe, entre deux catégories car ni le champ propriété de $O_6$ ni utilisation de $O_6$ sont structurants. L'objet $O_8$ dont la propriété est "écart" et l'utilisation est "plan-développement", est placé dans la catégorie structurante "écart" et est également disposé sur la ligne de sous-catégorie "écart plan-développement". L'objet $O_9$ a la propriété "risque" qui est non structurante et comme son utilisation est "technologie $X_1$", il a sa place sur la ligne de sous-catégorie "liste des technologies" à l'intérieur de la catégorie technologie. Enfin l'objet $O_{10}$ dont la propriété "stratégique" n'est pas structurante et dont l'utilisation est "nouvel entrant", est placé sur la ligne de sous-catégorie "nouvel entrant" de la catégorie concurrent. Puis on établit les liens de ces objets en fonction de leur champ "relié à". Par conséquent on relie $O_1$ par une flèche à $O_6$, $O_6$ à $O_8$, $O_8$ à $O_9$ et $O_9$ à $O_{10}$. Pour faire clairement apparaître que l'objet $O_{10}$ est du type accident, on le met en relief en pointant sur lui une flèche épaisse. Puisque l'objet $O_8$ est du type point d'appui, lui est associé également une flèche épaisse. Les lignes fléchées qui lient les différents objets constituent le chemin ou le schéma décisionnel qui a été suivi au cours de l'étape de reconnaissance 1 sur l'objet $O_1$.

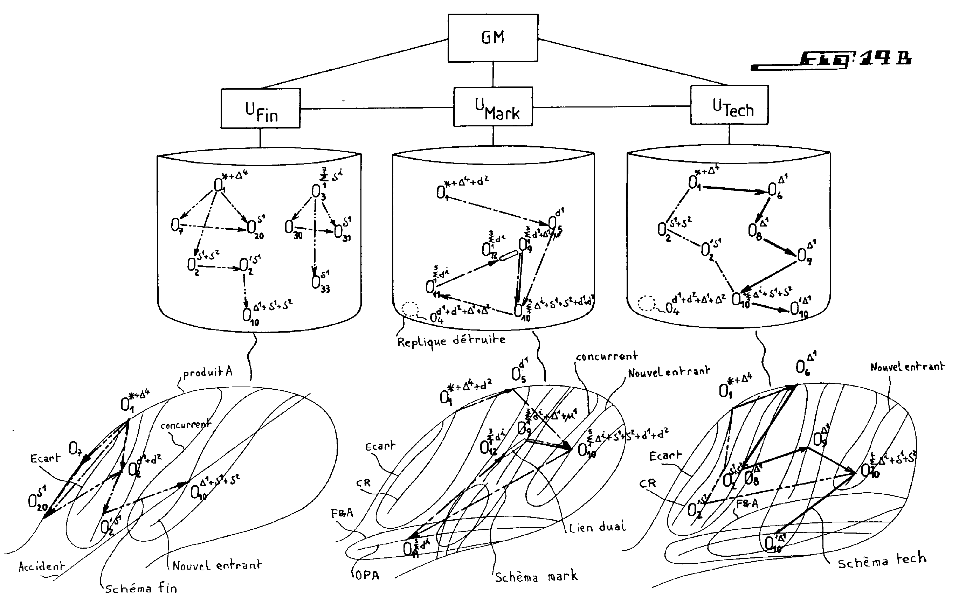

On décrira ci-après comment $U_{mark}$ exécute sa mission de reconnaissance 1 en se référant à la figure 8.

En effet, conformément à la règle de stratégie de l'agent GM, celui-ci a envoyé également une requête de reconnaissance sur $O_1$ à l'agent $UM_{mark}$.

Comme on le constate en se référant à la figure 6, cet agent n'a pas encore été structuré. Ceci doit donc être fait pour pouvoir effectuer le processus de la reconnaissance RECO 1 sur l'objet $O_1$.

Etant donné que l'établissement de la structure dont doit disposer l'agent $U_{mark}$, avec la structuration des services et l'attribution des paquets de connaissances à l'aide des agents de structuration $COTS_S$ et $COTS_D$, se fait selon des règles de but et de stratégie à chaque niveau de la pyramide, de la manière qui a été décrite de façon détaillée précédemment à propos de l'établissement de la structure de l'agent $U_{tech}$, il suffit maintenant d'indiquer que l'agent $U_{mark}$ aura comme agent canal un agent "Veille-Marketing", $C_{v\text{-}mark}$, et un agent "Gestion de la Relation Client", $C_{GRE}$. Le dernier agent canal n'est cependant pas utilisé pour la reconnaissance sur l'objet $O_1$ par $U_{mark}$, compte tenu de la Condition 1, de rapidité et de faible coût. A l'agent canal $C_{v\text{-}mark}$ sont attribués un agent piste "Produits", $P_{prod}$ et un agent piste "Sociétés", $P_{soc}$.

L'agent d'analyse $A_{prod}$ donné à l'agent $P_{prod}$ disposera de deux agents cognitifs, à savoir un agent du type LOC et un agent du type SCAN. L'agent analyseur $A_{soc}$ de l'agent piste $P_{soc}$ disposera d'un agent du type FOC et d'un agent du type SCAN, les agents LOC, FOC et SCAN se construisant au fur et à mesure du déroulement au processus décisionnel.

Concernant les données envoyées par l'agent de structuration des données $COTS_D$, l'agent $C_{v\text{-}mark}$ reçoit des données $DM_{v\text{-}mark}$. Les agents piste $P_{prod}$ et $P_{soc}$ ont à leur disposition les données $DM_{prod}$ et $DM_{soc}$.

L'agent $A_{prod}$ qui, après avoir construit les agents FOC et SCAN, doit, selon une règle de but, chercher des accidents lors de la reconnaissance 1 sur l'objet $O_1^{\delta1 + \delta2 + \delta3}$ dans le domaine des données $DM_{prod}$, fait à l'agent LOC la requête de préciser le contexte de $O_1^{\delta1 + \delta2 + \delta3}$ dans $DM_{prod}$ qui pourrait être structuré sous forme d'un tableau de données alphanumériques. Ainsi le tableau donne la liste de tous les produits commercialisés par la société pour laquelle le suivi budgétaire est effectué et les produits des concurrents. Pour chaque produit on indique, dans les colonnes spécifiées, les sociétés qui produisent le produit en question, leurs dates d'entrée sur le marché, les technologies utilisées, les brevets s'y rapportant etc.

Il est à noter que tous les agents d'analyse agissent selon des règles de but qui mettent en oeuvre des plans d'action, choisis par l'agent d'analyse en fonction des paramètres qu'il reçoit de son père.

La structure $DM_{prod}$ étant alphanumérique, l'agent LOC est un détecteur simple de contexte qui fonctionne selon les règles de requête suivantes :

Si but = préciser simple contexte de $O_1^{\delta1 + \delta2 + \delta3}$ dans $DM_{prod}$, si contexte $O_1$ = produit A, si $O_1$ est lié à $O_7$ du type lié par le contexte,

⇒ utiliser savoir faire 3 = détection branche par contexte de l'indice dans $DM_{prod}$ et l'appliquer à produit A
⇒ créer $O_5$ (branche données) tel que

→ ID
→ Type (contexte)
→ Créateur local ($A_{prod}$)
→ Forme (type = zone, créateur LOC, structure $DM_{prod}$, index, forme = branche données, média = BD alphanumériques)
→ Relié à ($O_1$ : créateur LOC, type = relié par le contexte,

(O$_7$ : créateur LOC de A$_{CR}$, type = décrivant l'objet lié)

→ Utilisation (concurrent sur produit A)

⇒ Mise à jour :
d$_1$ O$_1$$^{\delta1 + \delta2 + \delta3}$

→ Relié à (O$_5$ : créateur LOC, type = relié par contexte)

⇒ faire retour à père de (d$^1$ O$_1$$^{\delta1 + \delta2 + \delta3}$, O$_5$)

En appliquant ces règles, LOC a trouvé un ensemble de concurrents sur le produit A, qui devient l'objet O$_5$. O$_5$ et d$^1$O$_1$ $^{\delta1 + \delta2 + \delta3}$ remontent alors à l'agent A$_{prod}$.

L'agent A$_{prod}$ après la réception de tels résultats de son agent LOC doit faire effectuer par son agent SCAN une opération du type "analyse fine" d'un objet. L'agent SCAN agit selon les règles suivantes :

Si but = précise (O$_1$$^{d1 + \delta1 + \delta2 + \delta3}$), étant donné O$_5$, s'il n'existe pas de forme point d'appui, s'il existe O$_5$ de type contexte, si propriété O$_1$ = écart TB dans DM$_{CR}$, si contexte O$_1$ = produit A, si but global = suivi budgétaire et restructuration

⇒ utiliser savoir faire 1 = détection d'une caractéristique cognitive commune ou exceptionnelle dans l'objet O$_5$, dans DM$_{prod}$,
⇒ s'il existe une caractéristique exceptionnelle, alors créer :
O$_4$

→ ID
→ Type (accident)
→ Créateur SCAN (A$_{prod}$)
→ Forme (type = point, créateur SCAN, structure DM$_{prod}$, index, forme = caractéristique ponctuelle, média = BD alphanumérique)
→ Relié à (O$_5$ : créateur SCAN, type contenu dans)
→ Utilisation (nouvel entrant, nom = y)
→ Propriété (stratégique)

⇒ faire mise à jour
d$^1$O$_5$

→ Relié à (O$_4$ : créateur SCAN, type = contenant)

⇒ faire retour à père (d$^1$O$_5$, O$_4$)

En d'autres termes, pour exécuter sa mission définie ci-dessus, SCAN va scruter O$_5$, c'est-à-dire les inscriptions dans le tableau représentant la liste des concurrents sur le produit A. Il sait que, dans les données DM$_{prod}$, un nouvel entrant est à considérer comme constituant une caractéristique exceptionnelle. Il va donc scruter plus particulièrement la colonne "date d'entrée" de chaque société concurrente produisant le produit A. SCAN détecte un nouvel entrant qui constitue l'objet O$_4$. Les objets indiqués dans la règle de retour sont envoyés à l'agent P$_{prod}$.

L'agent piste P$_{prod}$ en raison des objets stratégiques qu'il a reçu de l'agent A$_{prod}$ doit s'adresser à son frère, à savoir l'agent P$_{soc}$, pour que celui-ci fasse exécuter par son agent SCAN une fonction du type 3 = exploration fine d'un objet par itération dans la même catégorie, en vue de préciser les objets reçus. L'agent SCAN va appliquer les règles suivantes :

Si but = préciser O$_1$$^{d1 + d2 + \delta1 + \delta2 + \delta3}$, étant donné O$_5$$^{d1}$, O$_4$,

si la fonction "précise" est de type 3
si type de O$_4$ = accident,

⇒ faire requête à FOC = retrouver O$_4$ dans DM$_{SOC}$
⇒ si retour de requête = d$^1$O$_4$, faire mise à jour de d$^1$O$_4$ et utilisé savoir faire 1 = détection de caractéristique exceptionnnelle dans l'objet O$_4$$^{d1}$ dans DM$_{soc}$

⇒ si résultat positif dans la colonne "prise de participation" ($O_4{}^{d1}$), créer $O_{11}$

→ ID
→ Type (repère - accident)
→ Créateur (SCAN ($A_{SOC}$)
→ Forme (type = point, créateur SCAN, structure $DM_{SOC}$, index, forme = caractéristique de point, média = axe de BD)
→ Relié à ($O_4{}^{d1}$ : créateur SCAN, type = contenu dans)
→ Utilisation (OPA société japonaise, nom = Z)
→ Propriété (stratégique)

⇒ faire mise à jour
$d^2O_4{}^{d1}$

→ Relié à ($O_4$ : créateur SCAN, type = contient)

⇒ si résultat de savoir faire 1 = ($O_{11}$, $d^2O_4{}^{d1}$), si propriété de $O_{11}$ = stratégique, si utilisation de $O_{11}$ = OPA société, si structure = $DM_{soc}$, poursuivre itération et faire requête à FOC = retrouver $O_{11}$ dans $DM_{soc}$
⇒ si retour requête = $d^1O_{11}$, faire mise à jour $d^1O_{11}$ et utiliser savoir faire 1 de détection de caractéristique exceptionnelle sur $O_{11}{}^{d1}$ dans $DM_{soc}$
⇒ si résultat positif dans la colonne "brevet", créer $O_{12}$

→ ID
→ Type (accident)
→ Créateur (SCAN ($A_{SOC}$))
→ Forme (type = point, créateur SCAN, structure $DM_{SOC}$, index, forme = caractéristique de point, média = axe BD alphanumérique)
→ Relié à ($O_{11}{}^{d1}$ : créateur SCAN, type = contenu dans)
→ Utilisation (brevet concurrent, nom = B)
→ Propriété (risque)

⇒ faire mise au point
$d^2O_{11}{}^{d1}$

→ relié à ($O_{12}$ : créateur SCAN, type = contient)

⇒ Si utilisation ($O_{12}$) = brevet et si structure = $DM_{soc}$, arrêter l'itération
⇒ faire retour au père de (($d^1$ + $d^2$) $O_4$ $O_{11}{}^{d1 + d2}$, $O_{12}$)

En application de ces règles, l'agent SCAN fait une requête à FOC de retrouver $O_4$ dans le domaine $DM_{soc}$ car il sait que $O_4$ concerne une société. Donc $DM_{soc}$ doit contenir les informations sur cette société.
L'agent FOC est programmé pour commencer par une recherche par le nom. Si le nom n'existe pas dans le champ d'utilisation de $O_4$, il faut faire une recherche par la forme. FOC cherche alors toutes les informations disponibles, telles que la date d'entrée et le fait que cette société commercialise le produit A. FOC inscrit les informations dans une ligne vierge d'un tableau, représentant la structure des données $DM_{SOC}$. Ce tableau présente les sociétés chacune sur une ligne, contenant toutes les informations disponibles sur cette société. Puis en faisant le produit scalaire, c'est-à-dire en comparant terme à terme les informations se trouvant dans la ligne que l'agent vient d'écrire aux informations déjà contenues dans les lignes des sociétés listées, la société recherchée s'avère être la société dont au moins un grand nombre d'informations correspond à celle figurant dans la ligne écrite.
Ainsi la société $O_4$ qui représente un point dans la structure des connaissances $DM_{prod}$ devient du type axe dans $DM_{soc}$. En effet dans le tableau $DM_{soc}$, $O_4$ figure sous forme d'une ligne. Sachant que $O_4$ est une ligne dans le tableau $DM_{soc}$, en première itération l'agent SCAN scrutant cette ligne peut trouver d'autres informations et ainsi connaître les filiales de $O_4$. Il s'avère qu'une des filiales est une société japonaise qui vient d'être achetée par OPA. Ce fait a pour conséquence la création de l'objet $O_{11}$ indiqué plus haut, du type point de repère d'accident, de forme de type point et d'utilisation "OPA au Japon". Il s'agit d'une société Z.
Puis, en deuxième itération, l'agent SCAN s'adresse à l'agent FOC et lui demande d'identifier $O_{11}$, c'est-à-dire la société Z dans la structure $DM_{soc}$. L'agent FOC trouve l'axe correspondant qui constitue l'élément de connaissance $d^1O_{11}$ qui devient type axe et est renvoyé à SCAN pour que cet agent regarde les informations inscrites dans l'axe Z et trouve dans la colonne brevet un nouveau brevet concernant le produit A. Cette découverte donne lieu à la création de l'objet $O_{12}$, qui a été indiquée plus haut et est du type accident, de la forme point et d'utilisation "brevet concurrent". En effet, grâce à la découverte du brevet d'un concurrent concernant le produit A l'objet $O_{12}$ constitue une information importante et est qualifiée d'être du type accident. L'agent SCAN arrête ses itérations car l'objet $O_{12}$ n'est plus défini dans la structure $DM_{soc}$.

L'agent SCAN fait remonter $O_4$ qui a changé, sous la forme $(d^1 + d^2) O_4$ accompagné de $O_{11}^{d1 + d2}$ et $O_{12}$, à l'agent analyseur $A_{SOC}$. Les objets $O_1$ et $O_5$ n'ont pas changé et ne sont donc pas remontés. Puis les objets remontent à l'agent GM.

Il est évident que le retour des objets de la base à la tête de la pyramide, constituée par l'agent GM se fait selon des règles pré-établies, qui ont été données à chaque agent. Celui-ci applique les règles appropriées en fonction de la nature et la configuration des objets de connaissance reçus.

Ainsi l'agent $A_{prod}$ de l'agent $U_{mark}$ avait déjà agi, en renvoyant les objets créés dans sa structure, à $P_{prod}$, selon des règles :

Si but = recherche accident de $O_1^{\delta1 + \delta2 + \delta3}$, dans $DM_{prod}$, si fin recherche = $d^1 O_1^{\delta1 + \delta2 + \delta3}$, $O_5^{d1}$, $O_4$, s'il existe $O_4$ lié à $O_1$ de propriété stratégique et de type accident,

$\Rightarrow$ faire $d^2 O_1^{d1 + \delta1 + \delta2 + \delta3}$,

$\rightarrow$ intérêt = 2
$\rightarrow$ alarme = 2

$\Rightarrow$ faire retour à père $((d^1 + d^2) O_1^{\delta1 + \delta2 + \delta3}, O_5^{d1}, O_4)$

Cette mise à jour incrémente de 1 les champs intérêts et alarme, ce qui signifie que $O_1$ contient un objet stratégique et un accident. Il s'agit d'une fusion du type 1 de niveau 1.

L'agent $P_{prod}$ agit selon la règle suivante :

Si but = RECO1 $(O_1^{\delta1 + \delta2 + \delta3})$, dans $DM_{prod}$, si retour but = $(d^1 + d^2) O_1^{\delta1 + \delta2 + \delta3}$, $O_5^{d1}$, $O_4$, s'il existe $O_4$ de type accident et de propriété stratégique, si utilisation $O_4$ = nouvel entrant

$\Rightarrow$ faire mise à jour à l'arrivée des objets $(d^1 + d^2) O_1^{\delta1 + \delta2 + \delta3}$, $O_5^{d1}$, $O_4$

$\Rightarrow$ s'il existe $P_{SOC}$, envoyer but 1 = préciser-RECO1 $(O_1^{d1 + d2 + \delta1 + \delta2 + \delta3})$ $(O_5^{d1}, O_4)$ à $P_{SOC}$.

C'est cette règle qui avait amené l'agent $P_{prod}$ à s'adresser à son frère $P_{soc}$ dont l'action a été décrite plus haut. En effet, l'agent $P_{prod}$ ayant constaté qu'il y a un accident stratégique concernant un nouvel entrant doit demander à un frère de lui donner des précisions sur cet accident.

L'agent $A_{soc}$, après la réception des résultats que ses agents cognitifs lui ont renvoyés dans le cadre de cette mission, agit selon la règle suivante :

Si but = précise - accident $(O_1^{d1 + d2 + \delta1 + \delta2 + \delta3})$ $(O_5^{\delta1}, O_4)$, si fin but = $(d^1 + d^2) O_4$, $O_{11}^{d1 + d2}$, $O_{12}$, s'il existe $O_{11}$ de propriété stratégique, $O_{12}$ de propriété risque et de type = accident, si intérêt de $O_1$ = 2 et alarme de $O_1$ = 2

$\Rightarrow$ faire $d^3 O_1^{d1 + d2 + \delta1 + \delta2 + \delta3}$

$\rightarrow$ Intérêt = 2 (2) (contient deux objets stratégiques)
$\rightarrow$ Facteur risque = 1
$\rightarrow$ Alarme = 2 (2) (contient deux accidents)

$\Rightarrow$ faire mise à jour à l'arrivée des objets $(d^1 + d^2) O_4$, $O_{11}^{d1 + d2}$, $O_{12}$,

$\Rightarrow$ faire retour à père de $(d^3 O_1^{d1 + d2 + \delta1 + \delta2 + \delta3}, (d^1 + d^2) O_4)$ ; $O_{11}^{d1 + d2}, O_{12})$

Ces mêmes objets sont envoyés par $P_{soc}$ à $P_{prod}$.

L'agent $P_{prod}$ fait une fusion des éléments des objets qu'il reçoit de son agent frère avec ceux qui sont stockés dans sa propre structure.

Si but = RECO 1 par piste ($O_1^{\delta1 + \delta2 + \delta3}$) si retour de but envoyé à $P_{SOC}$ = ($d^3O_1^{d1 + d2 + \delta1 + \delta2 + \delta3}$, ($d^1 + d^2$) $O_4$, $O_{11}^{d1 + d2}$, $O_{12}$)

⇒ Mise à jour à l'arrivée des objets

⇒ Si $d^1$, $d^2$, $d^3$ sont des éléments de connaissance de retour à père, si $d^2$ et $d^3$ portent sur des champs communs, si les changements les plus avancés des champs communs sont dans $d^3$, et si les champs différents sont aussi dans $d^3$, alors détruire simplement $d^2$ et faire retour à père de (($d^1 + d^3$) $O_1^{\delta1 + \delta2 + \delta3}$, $O_5^{d1}$, $O_4^{d1 + d2}$, $O_{11}^{d1 + d2}$, $O_{12}$)

En effet $P_{prod}$ avait reçu de son agent $A_{prod}$ les objets ($d_1 + d_2$) $O_1$, $O_5^{d1}$ et $O_4$, et il reçoit de son frère $P_{SOC}$ les objets $d^3O_1$, ($d^1 + d^2$) $O_4$, $O_{11}^{d1 + d2}$ et $O_{12}$. Les éléments $d^2 O_1$ et $d^3 O_1$ sont structurés de la manière suivante :

$d^2O_1$
→ intérêt = 2 (1)
→ alarme = 2 (1)
$d^3O_1$
→ intérêt = 2 (2)
→ alarme = 2 (1)
→ facteur risque = 1.

Dans cette situation $d^3O_1$ est prioritaire et $d^2O_1$ devient caduc et peut être supprimé. IL s'agit là d'une fusion de type 1 de niveau 2, c'est-à-dire avec contraction d'élément de connaissance avant la remontée au père.
Par conséquent l'agent $P_{prod}$ renvoie à son agent canal $C_{v-mark}$ l'objet ($d^1 + d^3$) $O_1^{\delta1 + \delta2 + \delta3}$ en plus de $O_5^{d1}$, $O_4^{d1 + d2}$, $O_{11}^{d1 + d2}$ et $O_{12}$. Ces objets sont transmis dans cette configuration à l'agent $U_{mark}$. Cet agent structure le résultat obtenu au cours de l'étape RECO1, met les objets reçus dans sa base de connaissances en les plaçant dans son paysage de connaissances, structuré en catégories Les objets seront affichés sur l'écran de la manière montrée sur la figure 8.
La structuration se fait de la manière déjà décrite plus haut à propos de l'agent $U_{tech}$. L'agent lit d'abord le type de l'objet. S'il est du type "indice" ou "contexte" il place l'objet sur l'enveloppe du paysage de connaissances. Puis il lit les champs "propriété" des objets. Si le contenu de ces champs est structurant il crée la catégorie correspondante, si celle-ci n'existe pas déjà, et place l'objet. Si le champ n'est pas structurant il lit le champ "utilisation". Si ce champ est structurant l'agent crée la catégorie, si elle n'existe pas déjà et place l'objet. Dans le cas présent, concernant l'objet $O_1$, il est de type indice et de propriété "écart", qui est structurante. Par conséquent on place l'objet $O_1$ sur la ligne d'enveloppe représentant le contexte de $O_1$, c'est-à-dire le produit A et dans la catégorie "Ecarts". Concernant l'objet $O_5$, l'agent constate qu'il est de type contexte et que le champ propriété est vide. Par contre dans le champ d'utilisation il est écrit "concurrent sur produit A". Ce champ est par conséquent structurant et l'agent crée la catégorie concurrent et place dans la zone de cette catégorie l'objet $O_5$, sur la ligne d'enveloppe. Au sujet de l'objet $O_4$, il est de propriété stratégique, c'est-à-dire non structurante et d'utilisation "nouvel entrant", ce qui est une sous-catégorie de la catégorie concurrent. Par conséquent $O_4$ sera placé sur la ligne de sous-catégorie nouvel entrant à l'intérieur de la zone catégorie "concurrent". Objet $O_{11}$ est, selon sa propriété stratégique, ce qui n'est pas structurant et est d'utilisation "OPA société japonaise". Cette utilisation est une sous-catégorie de la catégorie "Fusion et Acquisition (F & A)", ce qui amène l'agent à créer la catégorie F & A et à placer l'objet $O_{11}$ sur la ligne de sous-catégorie à l'intérieur de la zone catégorie. Enfin l'objet $O_{12}$ est de la propriété risque et donc non structurante, mais son champ "utilisation" indique qu'il s'agit d'un brevet concurrent. Or cette utilisation est une sous-catégorie de la catégorie "technologie" qui sera alors crée par l'agent $U_{mark}$ et l'objet $O_{12}$ sera placé sur la ligne de sous-catégorie "brevet" à l'intérieur de la catégorie "technologie".
De plus, l'agent attire l'attention sur les objets $O_4$ et $O_{12}$ parce qu'ils sont du type "accident", par des courtes flèches grasses. Enfin l'agent illustre par des lignes flèchées le chemin ou schéma décisionnel qui a permis la création des objets de connaissance indiqués. Ce chemin lie également les objets dans la base de connaissance de l'agent.
Après que les agents $U_{tech}$ et $U_{mark}$ ont accompli leur travail en vue du but de la reconnaissance 1 sur l'objet $O_1$, ils remontent à l'agent GM seulement les éléments de connaissance de l'objet $O_1$, qui représentent le résultat de la mission accomplie. Par conséquent l'agent GM reçoit de l'agent $U_{tech}$ les éléments ($\Delta^1 + \Delta^2 + \Delta^3$) $O_1^{\delta1 + \delta2 + \delta3}$ (figure 7) et de l'agent $U_{mark}$ les éléments ($d^1 + d^3$) $O_1^{\delta1 + \delta2 + \delta3}$ (figure 8). L'agent GM reçoit par ailleurs à la fin de l'invariant 2, l'objet $O_1$ avec d'autres éléments de connaissance.
L'agent, dans cette situation effectue une mise à jour avec des fusions du type 1 de niveau 1 ou 2 selon l'ordre des retours des buts et déclenche un dialogue avec l'opérateur, c'est-à-dire avec l'homme.
On décrira ci-après les règles qui déterminent cette opération pour le cas où le retour de l'agent $U_{mark}$ est postérieur au retour de l'agent $U_{tech}$ de l'étape RECO 1 et celui-ci, postérieur au retour de $U_{fin}$ de l'étape de la validation. Si les objets arrivent dans un autre ordre, l'opération se déroulera selon d'autres règles de fusion de type 1. Dans le cas présent l'agent GM doit faire une mise à jour avec une fusion de type 1 du niveau 2 s'il voit, en regardant les

champs de $O_1$, la possibilité de faire une contraction. L'élément $d^1$ étant indépendant des éléments de

$$O_1^{\Delta 1 + \Delta 2 + \Delta 3 + \sum_1^6 \delta i}$$

qui sont le résultat du retour de $U_{tech}$ et $U_{fin}$, les éléments $d^3O_1$, $\Delta^2O_1$, résultat du retour de $U_{tech}$ et $U_{fin}$, et $\Delta^3O_1$ offrent cette possibilité. En effet, ces éléments se présentent comme suit

$d^3O_1$
$\rightarrow$ intérêt 2 (2)
$\rightarrow$ alarme 2 (2)
$\rightarrow$ risque 1 (1)
$\Delta^2O_1$
$\rightarrow$ risque = 1 (1)
$\Delta^3O_1$
$\rightarrow$ intérêt 2 (1)
$\rightarrow$ alarme 2 (1).

Puisqu'aucun des trois éléments n'est prioritaire, on peut faire une contraction et amener GM à créer un nouveau champ sur $O_1$

$\mu^1O_1$
$\rightarrow$ intérêt 2 (3)
$\rightarrow$ alarme 2 (3)
$\rightarrow$ risque 1 (2)

On constate que dans l'élément $\mu^1O_1$ les arguments, à savoir les chiffres qui sont entre parenthèses, constituent la somme algébrique des arguments des champs des éléments $d^3O_1$, $\Delta^2O_1$ et $\Delta^3O_1$.
Au retour du but de $U_{mark}$ l'élément $d^3$ peut être détruit car $\mu^1$ le remplace.
Puis, selon la règle "si retour strat 3 de tous les agents UM est achevé", l'agent GM doit afficher sur l'écran de son interface Homme/Machine IHM le résultat de l'étape de reconnaissance 1, c'est-à-dire l'objet $O_1$ dans sa configuration maintenant établie :

$$O_1^{\mu 1 + d 1 + \Delta 1 + \Delta 2 + \Delta 3 + \sum_1^6 \delta i}$$

avec tous les signaux d'alarme, intérêt, présomption et risque. En effet, au retour de l'invariant 2 dans $U_{fin}$ $O_1$ est devenu une présomption, créant ainsi l'élément $\delta^6O_1$, car c'était un indice avec des points d'appui ce qui est une des règles d'évolution du type indice vers le type présomption. La présomption est que le produit A est critique car l'indice et le point d'appui sont des écarts budgétaires sur le produit A. La figure 9 illustre la situation à la fin de RECO 1.
L'affichage constitue un appel fait à l'opérateur, c'est-à-dire à l'homme, signalant que la reconnaissance 1 sur l'objet $O_1$ est terminée, que $O_1$ est une présomption, qu'il y a des points d'appui, des accidents détectés, des objets stratétiques et des facteurs de risque. Si l'homme souhaite plus de détail sur les points d'appui et les accidents, le système fait remonter à l'agent GM de l'agent $U_{mark}$ les objets $O_4$ et $O_{12}$, de l'agent $U_{tech}$ des objets $O_8$ et $O_{10}$ et de l'agent $U_{fin}$ l'objet $O_2$. L'agent GM met ses objets dans sa base de connaissance structurée en les plaçant dans son paysage de connaissance structurée en catégories, présentées sur la figure 9. Cette structuration se fait de la manière déjà décrite auparavent d'après les inscriptions dans les champs "propriété" et "utilisation" et selon que les contenus de ces champs sont structurants ou non. Puis l'agent trace le chemin décisionnel en regardant dans les champs de l'objet $O_1$ les liens directs avec les objets remontés. Il s'avère qu'il y a un lien direct seulement avec l'objet $O_2$. Par conséquent l'agent ajoute au chemin déjà existant de $O_1$ à $O_7$ un deuxième chemin de $O_1$ à $O_2$.
C'est selon les mêmes règles que le paysage de connaissances construites par $U_{fin}$ a été représenté sur la figure 9 avec une catégorie "Ecart" et 3 chemins décisionnels. Il faut noter que les chemins décisionnels sont tracés avec un ordre de préséance entre les objets, fonction de leur ordre de création.

Puis on fait une appréciation des résultats obtenus pour déterminer s'il se dessine déjà une tendance qui pourrait permettre d'orienter la décision à faire dans un certain sens, une telle tendance étant appelée bifurcation de type 1. Etant donné que l'objet $O_1$ est du type présomption, il signifie une première bifurcation. En regardant dans les deux chemins décisionnels, les champs "type" des nouveaux objets, l'agent GM vérifie s'il y a d'autres tendances, c'est-à-dire d'autres bifurcations de type 1. Dans le cas présent il n'y en a pas. On constate notamment que l'objet $O_2$ est du type point d'appui. Par conséquent il n'existe qu'une seule bifurcation, celle de $O_1$ qui est présomption parce qu'il concerne le produit A qui est critique.

Ainsi la reconnaissance du type 1 sur l'objet $O_1$ est terminée. Or, l'invariant 3 devrait, comme cela a été spécifié au début de cet invariant, comprendre également une reconnaissance du type 1 sur l'objet $O_3$ pour retrouver des accidents éventuels liés à cet objet. La reconnaissance sur $O_3$ aurait pu se dérouler simultanément à la reconnaissance sur l'objet $O_1$. Mais, dans le cadre du but global du suivi budgétaire, choisi à titre d'exemple pour décrire la présente invention, le suivi budgétaire doit être fait dans des conditions de rapidité et de faible coût. Or, ces conditions pourraient impliquer automatiquement l'abandon de la reconnaissance sur l'objet $O_3$ ou la décision sur l'opportunité de faire cette reconnaissance pourrait être laissé à l'appréciation de l'homme opérateur à la fin de la reconnaissance sur l'objet $O_1$. Il est cependant à noter, que le type de $O_3$ est passé d'indice à présomption, pour la même raison que $O_1$. La nature de la présomption est "concurrence active", car $O_3$ a pour contexte les sociétés à actions en baisse au Japon, toutes achetées par OPA par la concurrence. L'élément $\delta^7 O_3$ est ainsi créé par ce changement de type. La figure 9 montre également 3 chemins décisionnels associés à $O_3$. Dans le présent cas, il s'avère que l'homme estime pouvoir se contenter de la reconnaissance sur l'objet $O_1$.

Le dialogue homme/machine qui va avoir lieu reste donc dans le cadre de la RECO1 sur l'objet $O_1$.

Selon les règles qui régissent le fonctionnement de l'agent GM, celui-ci doit faire appel à l'opérateur homme :

Si fin RECO1, si $O_1$ est une présomption (produit A critique), s'il y a des points d'appui, des accidents détectés, des objets stratégiques et des facteurs de risque,

$\Rightarrow$ faire appel à homme opérateur : voulez-vous plus d'informations ?

Il se déroule sur l'écran de l'interface IHM un menu indiquant les choix possibles proposés à l'opérateur, tels que point appui, accident,..., rien.

L'homme en regardant le paysage des connaissances structurées sur l'écran de l'interface IHM de l'agent GM constate qu'il y a quatre catégories, à savoir les catégories "écart", "concurrent", "technologie" et "fusion et acquisition". Il souhaite qu'une recherche soit effectuée sur les liens qui pourraient exister entre ces catégories. Il répond alors, en fonction de ses propres connaissances et compétences à la machine qu'il souhaite plus d'informations sur les points d'appui et les accidents.

Ce dialogue Homme/Machine donne lieu à la création d'objets portables de dialogue Homme/Machine, tels que

$O_{M1}$
$\rightarrow$ Type "interopérabilité"
$\rightarrow$ Créateur GM
$\rightarrow$ Relié à ($O_{H1}$ : créateur GM, type = dialogue $O_1$ : créateur GM, type associé à)
$\rightarrow$ Propriété (question)
$\rightarrow$ Utilisation (plus d'informations ?)
$O_{H1}$
$\rightarrow$ Type (interopérabilité)
$\rightarrow$ Créateur (Homme)
$\rightarrow$ Relié à ($O_{M1}$ : créateur GM, type = dialogue, $O_1$ : créateur GM, type associé à)
$\rightarrow$ Propriété (réponse)
$\rightarrow$ Utilisation (points d'appui et accidents)

$\Rightarrow$ faire mise à jour :

$$\mu^2 O_1 {}^{\mu 1} + d1 + \Delta 1 + \Delta 2 + \Delta 3 + \sum_1^6 \delta^i$$

→ Relié à (O$M_1$ : créateur GM, type associé à, O$_{H1}$ : créateur GM, type = associé à).

L'objet O$_{H1}$ comporte donc la réponse de l'homme. Par l'intermédiaire d'un dialogue plus avancé qui se traduit par l'élément $\mu^1$O$_{H1}$, l'homme exprime qu'il souhaite que l'on approfondisse les points d'appui qui ont le champ d'utilisation, "investissement produit A" et les accidents qui ont le champs d'utilisation, "nouvel entrant".

En exécution de ces ordres donnés par l'homme, l'agent GM va mettre en oeuvre une nouvelle étape décisionnelle appelée invariant 4 qui constitue une reconnaissance du type 2 visant à faire des fusions-connexions entre les points d'appui et les accidents qui ont été détectés précédemment.

Invariant 4 : Fusion-connexion

En suivant les règles prévues à cette fin, l'agent GM s'adresse à l'agent qu'il considère le plus concerné par le problème. Dans la mesure où l'objet à examiner est une présomption indiquant que le produit A est critique, c'est-à-dire qu'il s'agit d'un problème plutôt technique, l'agent GM s'adresse à l'agent U$_{tech}$. U$_{tech}$ devient ainsi l'agent maître de l'étape RECO2.

Pour exécuter cette mission, l'agent U$_{tech}$, en appliquant la règle de but "si but = RECO2 (O$_1$, O$_H$1)", la stratégie est définie, de la manière analogue à ce qui a été décrit ci-avant, par des règles précises. On décrira la mise en oeuvre de cette stratégie en se reportant aux figures 10 à 12.

L'agent U$_{tech}$ doit appliquer une première règle de stratégie 4.1 de recherche du type connexion-fusion, suivante :

Si strat = strat 4.1 = rechercher type connexion-fusion (O$_1$, O$_{H1}$, but global, condition rapide et faible coût,...),

⇒ faire "établir connaissance à distance des liens de O$_1$, type = accident, utilisation = nouvel entrant ou type = point d'appui, utilisation = investissement produit A", à U$_{fin}$ et U$_{mark}$

⇒ faire "établir connaissance des liens de O$_1$" dans U$_{tech}$

⇒ si retour de "établir connaissance à distance de lien" = O$_2$ de U$_{fin}$ et O$_4$ de U$_{mark}$ et si retour "établissement de lien de O$_1$" = O$_{10}$ de U$_{tech}$,

- faire fusion type 2 sur accidents ;
- faire connexion délocalisée entre point d'appui et accident.

Dans l'accomplissement de cette règle, l'agent U$_{tech}$ demande à ces agents frères U$_{fin}$ et U$_{mark}$ de lui envoyer les objets qui sont du type "accident" et d'utilisation "nouvel entrant" ou qui sont du type "point d'appui" et d'utilisation "investissement produit A". Il s'avère que dans la base de connaissance de l'agent U$_{fin}$ seulement l'objet O$_2$ répond à ces exigences. En effet, O$_2$ est un point d'appui et son utilisation est "investissement produit A". Par conséquent U$_{fin}$ envoie à U$_{tech}$ l'objet O$_2$. L'agent U$_{mark}$ envoie à U$_{tech}$ l'objet O$_4$ qui est le seul objet répondant aux exigences. En effet, O$_4$ est du type "accident" et d'utilisation "nouvel entrant". U$_{tech}$ lui-même possède comme objet ayant un lien avec O$_1$ et ayant le type et l'utilisation en question, l'objet O$_{10}$ qui est du type "accident" et d'utilisation "nouvel entrant". Il possède encore O$_8$ qui est du type "point d'appui" mais est d'utilisation "développement produit A". Ce point d'appui, en raison de son utilisation différente, ne sera pas pris en compte.

Etant donné que les objets O$_4$ et O$_{10}$ sont tous les deux du type "accident" et ont la même utilisation "nouvel entrant", U$_{tech}$ va, en application des règles qui lui ont été octroyées dans le cadre de la stratégie 4.2, chercher à établir si les deux objets sont fusionnables. U$_{tech}$ pourrait faire cette fusion s'il pouvait établir que O$_4$ et O$_{10}$ sont la même société. Il s'agit de fusionner deux objets différents, à savoir les objets O$_2$ et O$_{10}$, qui pourraient correspondre au même objet du monde. Une telle fusion est appelée fusion du type 2. Il est rappelé que la fusion du type 1 concerne la fusion de deux versions du même objet mis à jour par deux agents différents. Dans ce cas on fusionne leurs éléments de connaissance δ, Δ ou d.

L'établissement de la fusion du type 2 des objets O$_4$ et O$_{10}$ présuppose la connaissance de l'identité de la société "nouvel entrant" qui constitue l'objet O$_{10}$, le nom du nouvel entrant constituant l'objet O$_4$ étant connu.

L'agent U$_{tech}$ sait que l'objet O$_{10}$ a été créé dans la structure de son agent canal C$_{v\text{-}tech}$. Cet agent canal dispose de deux agents piste, à savoir P$_{conc}$ qui a dans sa base DM tous les concurrents et de l'agent piste P$_{presse}$ qui a à sa disposition un arbre de connaissance où sont rangés les articles de presse concernant les entreprises et les événements du monde de l'économie et de la politique. Il est à noter que le nouvel entrant constituant l'objet O$_{10}$ a été trouvé en enquêtant pour savoir si un concurrent possédait la technologie que constitue l'objet O$_9$.

Comme le montre la figure 10, la mise en oeuvre de la stratégie 4.2 va se faire dans la boucle d'analyse pilotée par A$_{conc}$ qui est la boucle créatrice de l'objet O$_{10}$. Cette stratégie implique la création de deux agents cognitifs FOC et VAL par l'agent analyseur A$_{conc}$ selon un plan d'action prédéterminé. Puis l'agent A$_{conc}$ fait une requête à l'agent VAL pour que celui-ci entreprenne une recherche d'égalité des objets $O_{10}$ et $O_4^{d1 + d2}$ dans les données $DM_{conc}$. Or l'objet $O_4$ a été créée dans $DM_{SOC}$. Dans son champ "utilisation" est indiqué qu'il s'agit de la société y.

L'agent VAL fait une requête à l'agent FOC de retrouver $O_4$ dans $DM_{conc}$ ce qui donne lieu à la création de l'objet $\Delta^1 O_4^{d1 + d2}$. Après réception de cet objet, VAL utilise la règle de savoir faire prévu à cette fin pour faire une recherche d'égalité dans $DM_{conc}$ par le nom.

Si cette recherche n'aboutit pas, il formule une nouvelle requête à FOC pour pouvoir faire une recherche d'égalité par la forme. FOC va à cette fin inscrire dans une ligne vierge de $DM_{conc}$ toutes les informations qu'il possède sur la société Y et crée l'objet $\Delta^1 O_4^{d1 + d2}$ tel que

$$\Delta^1 O_4^{d1 + d2}$$

$\rightarrow$   Forme (type = axe, créateur FOC de $A_{conc}$, $DM_{conc}$)

Cet objet est renvoyé à VAL qui va établir le produit scalaire par comparaison terme à terme dans toutes les lignes de $DM_{conc}$. Etant donné que le nouvel entrant $O_{10}$ doit normalement figurer dans le $DM_{conc}$ bien qu'il ne puisse pas être identifié par son nom, VAL va désigner le concurrent recherché comme étant celui pour lequel la comparaison terme à terme donne le maximum de correspondance avec les termes de la ligne écrite par FOC.

$O_{10}$ étant ainsi identifié comme étant l'entreprise Y, on peut faire la fusion des objets $O_4$ et $O_{10}$, considérés comme des répliques, ce qui entraîne la création de l'objet $\Delta^1 O_{10}$.

$\Delta^1 O_{10}$ (fusion des connaissances)

$\rightarrow$   créateur ($SCAN_{prod}$ et $SCAN_{conc}$)
$\rightarrow$   Forme 1 = fusion des formes $O_{10}$ et $O_4^{d1 + d2 + \Delta 1}$
$\rightarrow$   Forme 2 = forme originale ($O_4$ dans $DM_{prod}$)
$\rightarrow$   Forme 3 = forme dans $DM_{soc}$ ($d^1 O_4$)
$\rightarrow$   Relié à ($O_5$ : créateur SCAN de $A_{prod}$, type = contenu dans, lien de $O_4$), ($O_{11}$ : créateur SCAN de $A_{SOC}$, type = contient, lien de $O_4$),
($O_4$ : créateur VALID de $A_{CONC}$, type = réplique)
$\rightarrow$   Utilisation (nouvel entrant, nom = Y) (hérité du nom de $O_4$)

L'objet $\Delta^1 O_{10}$ a hérité de toutes les formes de $O_4$, en particulier des cases de $O_{10}$ qui étaient vides sont remplies par les champs de $O_4$.

On a également créé

$$\Delta^2 O_4^{d1 + d2 + \Delta 1}$$

$\rightarrow$   Type : (nil, fantôme)
$\rightarrow$   Relié à ($O_{10}$ : créateur VALID de $A_{CONC}$, type = réplique).

Puis on remonte $\Delta^1 O_{10}$ et aussi $(\Delta^1 + \Delta^2) O_4$ à l'agent $U_{tech}$, bien que $O_4$ ait cessé d'exister et ne soit plus qu'un "fantôme". Sur son chemin l'objet $O_{10}$ hérite dans les agents qu'il traverse des connaissances de sa réplique $O_4$ puis l'agent la détruit.

La fusion du type 2, telle qu'elle a été décrite ci-avant en prenant comme exemple les objets $O_{10}$ et $O_4$ implique la mise en oeuvre de deux règles lors de la remontée à l'agent maître de la fusion, à savoir, d'une part, la destruction de la réplique, dans le cas d'exemple de l'objet $O_4$, et, d'autre part, le changement des liens. Les liens initialement à $O_4$ deviennent liens à $O_{10}$. Il est cependant à noter que dans la base de connaissance des agents, l'objet réplique, dans le cas présent $O_4$, bien qu'il soit détruit, est conservé comme objet "fantôme", comme cela est illustré schématiquement par un cercle en traits interrompus dans les bases de connaissance respectives. Ce maintien est nécessaire pour permettre le changement des liens dans tout objet qui arrive en étant lié à une réplique qui a été détruite. En effet, chaque fois qu'un nouvel objet arrive dans un agent, on vérifie si son champ "Relié à" contient un objet fantôme, qu'il faut remplacer par son objet réplique.

Après la fusion des objets $O_{10}$ et $O_4$, qui sont des accidents de la même utilité, l'agent maître de l'opération fusion-connexion RECO2 doit traiter l'objet $O_2$ à l'égard de l'objet $O_{10}$, l'objet $O_2$ étant un point d'appui. Ce point d'appui ne se trouvant pas dans sa propre base de connaissance, mais dans la base de l'agent distant $U_{fin}$, l'agent $U_{tech}$ doit initier deux traitements, à savoir un premier traitement local sur l'objet $O_{10}^{\Delta 1}$ et un deuxième traitement délocalisé sur l'objet $O_{10}^{\Delta 1}$ et $O_2^{\delta 1}$. Le dernier traitement pour établir éventuellement la fusion-connexion pour le point d'appui que constitue $O_2$ doit être effectué, selon une règle, dans l'agent qui a créé le point d'appui. Dans le cas présent le créateur de $O_2$ est l'agent $U_{fin}$. L'agent $U_{tech}$ envoie donc à $U_{fin}$ les objets $O_{10}^{\Delta 1}$ et $O_2^{\delta 1}$, que $U_{fin}$ lui avait initialement transmis.

Bien que l'opération RECO 2 de connexion de $O_{10}$ et $O_2$, exécutée de façon délocalisée par $U_{fin}$, se déroulera en même temps que le traitement local qui a pour but d'obtenir des précisions sur l'objet $O_{10}^{\Delta 1}$, on décrira tout d'abord ci-après le traitement local sur l'objet $O_{10}{}^{\Delta 1}$ en se référant à la figure 11.

L'objet $O_{10}{}^{\Delta 1}$ est identifié comme étant une société concurrente dont le nom est maintenant connu. Il convient alors de regarder de plus près cette société. Le processus d'enquête se déroule selon des règles de but et de stratégie spécifique, qui sont préétablies mais choisies parmi les règles de but et de stratégie possibles pour chaque agent, en fonction des résultats obtenus auparavent. Etant donné que le principe de l'application des règles de but et de stratégie a déjà été décrit ci-avant, le mécanisme de ces règles et leur application pour la mise en oeuvre du but = préciser $O_{10}$ ne sera pas exposé à nouveau de façon détaillée. Ce mécanisme ressort de la figure.

Les précisions sur les objets ont été obtenues jusqu'à présent en scrutant les informations qui sont internes à la société en question. Or, dans la mesure où l'objet $O_{10}$ représente une autre société, aux données spécifiques, auxquelles la société qui effectue le suivi budgétaire n'a pas d'accès, il convient de chercher les précisions dans les données qui sont accessibles et qui sont extérieures à la société. Ces données seront recherchées dans les publications qui ont été faites dans le domaine de l'économie et de la politique au sujet de la société concurrente "nouvel entrant". Dans la mesure où lors de la structuration des services de l'agent $U_{tech}$, l'agent Canal $C_{v\text{-}tech}$ de celui-ci avait déjà créé un agent Piste "PRESSE", $P_{presse}$, on continue la structuration par la création par $P_{presse}$ de l'agent analyseur $A_{presse}$ et par la création par ce dernier des trois agents cognitifs FOC, VAL et RECO.

La base des connaissances structurées est la base de données textuelles $DM_{presse}$ en forme d'un arbre de concept structuré en catégories telles que les catégories concurrents, technologie, fusion-acquisition, forte croissance, délocalisation etc, comme le montre schématiquement la figure 12. L'agent $A_{presse}$ passe une requête à FOC de retrouver $O_{10}{}^{\Delta 1}$ dans $DM_{presse}$. D'où la création de l'élément $\Delta^2 O_{10}{}^{\Delta 1}$.

L'agent VAL est un agent cognitif d'un type adapté pour positionner des objets les uns par rapport aux autres, pour établir des corrélations telles que des produits scalaires. Dans le cas présent, sur la requête de $A_{presse}$ il détermine le cône d'observation dans le domaine $DM_{presse}$, dans lequel l'agent RECO doit observer $O_{10}{}^{\Delta 1 + \Delta 2}$, comme cela est illustré schématiquement sur la figure. RECO détermine dans les catégories se trouvant à l'intérieur du cône d'observation les zones correspondant à des articles de presse où il est question de la société Y que constitue l'objet $O_{10}$. Ainsi VALID demande à RECO de faire une veille dite "veille active grand angle", à propos de $O_{10}$ dans les catégories se trouvant dans le cône indiqué. L'agent RECO crée l'objet

$O'_{10}$ (création)

$\rightarrow$ Type (point repère)
$\rightarrow$ Créateur (RECO)
$\rightarrow$ Forme (type = zone, créateur = RECO, $DM_{presse}$, index = position dans arbre de concept, forme = références sur textes de presse, média = textes source)
$\rightarrow$ Utilisation (F & A, technologie, forte croissance).

Au retour de l'objet à VAL, celui-ci crée :

$\Delta^1 O'_{10}$

$\rightarrow$ Type (zone d'intérêt)
$\rightarrow$ Relié à ($O_{10}$, type = associé à)
$\quad \Delta^3 O_{10}$
$\rightarrow$ Relié à ($O'_{10}$, type = associé à)

L'agent FOC a pour fonction de retrouver l'objet $O_{10}{}^{\Delta 1}$ dans la presse. Il crée l'objet :

$\Delta^2 O_{10}$

$\rightarrow$ Forme (type = tâche, créateur = FOC, $DM_{presse}$, index, forme = branche concept, média = arbre concept)

Ces objets sont remontés à l'agent $A_{presse}$ qui au passage de $O_{10}{}^{\Delta 1 + \Delta 2 + \Delta 3}$ crée

$\Delta^4 O_{10}$

$\rightarrow$ type (présomption : situation importante)

Cette nouvelle présomption est créée car $O_{10}$ a changé de forme, passant du type axe au type tâche, et de plus il est associé à une zone d'intérêt. Cette présomption signifie qu'il y a maintenant une deuxième bifurcation dans le raisonnement de l'agent $U_{tech}$.

On décrira ci-après la mise en oeuvre de RECO2 fusion-connexion entre les objets $O_{10}{}^{\Delta 1}$ et $O_2$ qui est effectuée par l'agent $U_{fin}$ qui est créateur de l'objet $O_2{}^{\delta 1}$.

L'agent $U_{fin}$ est chargé de rechercher les connexions entre les objets $O_2{}^{\delta 1}$ qui est un écart aux investissements du produit A de la société pour lequel le suivi budgétaire est fait et $O_{10}{}^{\Delta 1}$ qui est le nouvel entrant Y.

L'agent $U_{fin}$ est l'agent créateur de l'objet $O_2$ qui est un point d'appui. Dans le cadre de RECO2 connexion $O_2$ et $O_{10}$, $U_{fin}$ doit chercher un agent qui est capable d'obtenir et traiter des données externes concernant la société "nouvel entrant" $O_{10}$. $U_{fin}$ ayant déjà crée auparavent un agent canal $C_{eco\text{-}pol}$ dans le cadre de l'invariant 1, il demande à l'agent COTS de donner à celui-ci des règles de but et de stratégie et les données lui permettant de traiter les données externes, c'est-à-dire toutes les informations qui ont été publiées notamment dans la presse. L'agent $C_{eco\text{-}pol}$ choisit parmi les deux agents piste qu'il avait déjà crée l'agent $P_{Asie}$ parce que la concurrence est plus forte en Asie et puisqu'on doit travailler dans des conditions de rapidité et coût faible. L'agent piste est en mesure de faire une veille de la presse en Asie. Le domaine de la presse en Asie est structuré sous forme d'un arbre de concept $DM_{Asie}$. De tels arbres de concept sont connus en soi. Dans de tels arbres on range les articles de presse par catégories structurantes de la manière déjà illustrée sur la figure 12.

Comme le montre la figure 13, en application des règles de but et de stratégie à utiliser dans le cas présent, à l'agent piste $P_{Asie}$ est associé l'agent analyseur $A_{Asie}$ qui crée les trois agent cognitifs FOC, RECO et VAL.

L'agent $A_{Asie}$ demande à FOC de retrouver $O_{10}{}^{\Delta 1}$ dans $DM_{Asie}$ créant ainsi $\delta^1 O_{10}{}^{\Delta 1}$. Puis il demande à VAL de faire la connexion entre $O_{10}{}^{\Delta + \delta 1}$ et $O_2{}^{\delta 1}$.

L'agent VAL demande à l'agent RECO de faire une veille active dirigée à l'intérieur de $O_{10}$ puisqu'il s'agit de rechercher la connexion entre $O_{10}$ et $O_2$. Pour la veille active, VAL définit comme critère, l'investissement dans le produit A du nouvel entrant $O_{10}$. Il convient de regarder tous les articles de presse qui parlent des investissements du produit A chez $O_{10}$. Après l'exécution de cette requête, l'agent RECO crée l'objet $O_2'$ tel que

$O_2'$ (créateur)

→ type (point de repère)
→ créateur RECO ($DM_{Asie}$)
→ Forme (type = tâche, structure $DM_{Asie}$, créateur RECO, index, forme = référence N textes, média = textes source)
→ utilisation (investissement produit A)
→ propriété (écart).

Il faut qu'un nombre N de textes pertinents soit atteint pour la création de $O'_2$.

Au retour de l'objet $O_2'$, VAL décide de transformer cet objet en point d'appui puisqu'il a la même utilisation (investissement produit A) que $O_2$ qui est point d'appui et la même propriété "écart". L'agent VAL crée :

$\delta^2 O_2{}^{\delta 1}$

→ Relié à ($O_2'$ : créateur VAL, type = associé à)

$\delta^1 O_2'$

→ Type (point repère → point d'appui)
→ Créateur VAL
→ Relié à ($O_2$ : créateur VAL, type = associé à)
→ Relié à ($O_{10}$ : créateur VAL, type = connecté à

$\delta^2 O_{10}{}^{\Delta 1 + \delta 1}$

→ Relié à ($O_2'$ : créateur VAL, type : connecté à)

L'agent FOC, en réponse à la requête "retrouver par le nom dans données structurées" a créé l'objet
$\delta^1 O_{10}{}^{\Delta 1}$

→ Forme (type = zone, créateur $FOC_{Asie}$, $DM_{Asie}$, index, forme = référence sur textes, média = textes sources)

L'agent $U_{fin}$, à la fin de cette opération renvoie à l'agent $U_{tech}$ les éléments $\delta^2 O_2{}^{\delta 1}$ avec un lien à $O_2'$, ($\delta^1 + \delta^2$) $O_{10}{}^{\Delta 1}$ avec un lien à $O_2'$ et $O'_2{}^{\delta 1}$ avec un lien à $O_{10}$.

A la réception de ces éléments, l'agent $U_{tech}$ procède à une fusion de type 1 sur l'objet $O_{10}$ puis trace le chemin décisionnel correspondant. En effet, il a pour règle de tracer un tel chemin décisionnel chaque fois qu'un objet arrive. On constate qu'il y a maintenant deux chemins décisionnels au niveau de $U_{tech}$ pour aller de l'objet $O_1$ à l'objet $O_{10}$. De plus, les chemins décisionnels contiennent maintenant deux bifurcations de type 1 sur $O_1$ et $O_{10}$, créant ainsi $\Delta^4 O_1$ et $\Delta^5 O_{10}$.

Ainsi $U_{tech}$ remonte à l'agent père GM deux chemins ou schémas décisionnels. A la fin de RECO1 l'agent GM avait deux chemins décisionnels pour $O_1$ et une présomption. Maintenant à la fin de la phase RECO2 on passe à trois chemins décisionnels et deux présomptions. Il est à noter que, pour qu'il soit établi que les chemins décisionnels ont pour point de destination l'objet $O_{10}$, on prévoit dans tous les objets un champ précisant le type de préséance qui donne l'ordre dans lequel les objets sont créés. Ceci assure qu'on ne se déplace que dans le sens descendant. Par exemple, lors de la création de l'objet $O_{10}$, il est précisé qu'il a été créé après $O_9$.

Après l'étape de l'invariant 4 qui avait pour but les fusion-connexion des points d'appui et des accidents, on peut prévoir une étape d'invariant 5 d'interprétation technique des présomptions impliquant un dialogue homme/machine et une prise de décision par la machine.

Invariant 5 : Analyse Technique et décision

L'invariant 5 qui constitue une étape de reconnaissance supplémentaire appelée RECO3 fait l'analyse technique des présomptions pour conduire à des étapes décisionnelles correspondant à des bifurcations fortes, conduisant à la décision finale. Le choix des présomptions qui vont être analysées est fait par l'homme au travers du dialogue homme/machine. Ce nouvel invariant se déroule aussi selon des règles spécifiques de but et de stratégie que doivent impliquer davantage des agents à de haut niveau dans la structure décisionnelle.

Ainsi à titre d'exemple, pour l'agent GM les règles de but de déclenchement de l'opération RECO 3 et de stratégie sont les suivantes :

Règle de but (déclenchement RECO 3)

Si but = suivi budgétaire et retrusturation, si retour RECO1 ($O_1{}^{\delta 1 + \delta 2 + \delta 3}$) de $U_{tech}$, si $O_{H1}$ relié à $O_1$, type $O_{H1}$ = interopérabilité, si propriété de ($O_{H1}$) = réponse, si utilisation $O_{H1}$ = analyse présomption (situation importante)

$\Rightarrow$ faire strat = strat 1.2 + strat 5 ($O_1$) ($O_{H1}$)

Règle de stratégie

Si strat = strat 5 ($O_1$) ($O_{H1}$) (but global, ...), si type ($O_{H1}$) = interopérabilité, si utilisation ($O_{H1}$) = analyse présomption (situation importante)

$\Rightarrow$ faire "établir lien" ($O_1$) type = présomption (situation importante), (retour $O_{10}$)
$\Rightarrow$ faire "établir lien" ($O_{10}$) (type = zone d'intérêt) (retour $O_{10}'$)
$\Rightarrow$ si utilisation ($O_{10}$) = nouvel entrant et si créateur ($O_{10}$) = $A_{soc}$ dans branche $U_{mark}$ envoyer but 3 = RECO-étape 3 ($O_1$) ($O_{H1}$, $O_{10}$, $O_{10}'$) (but global, $DM_{mark}$) à $U_{mark}$.

Ces règles qui n'ont été données que pour illustrer leur structure indiquent que l'agent $U_{mark}$ doit être utilisé pour apporter des éléments décisionnels supplémentaires. Pour la compréhension de l'étape $RECO_3$ il n'est pas nécessaire de décrire comment se créent dans la structure de $U_{mark}$ les éléments de connaissance supplémentaires. Il suffit de savoir que le processus de traitement des objets dans cette structure se termine par la constatation qu'il est possible de faire aussi une fusion des objets $O_9$ et $O_{12}$, appelé fusion du type dual. En effet l'objet $O_9$ concerne la technologie critique $X_1$ qui fait problème dans le produit A. L'objet $O_{12}$ constitue le brevet qui appartient au concurrent nouvel entrant $O_{10}$ et concerne la technologie $X_1$. Sur les schémas, la fusion duale est indiquée par une ligne double. Or, cette fusion constitue une contradiction forte mise en évidence par les types contradictoires-accident et repère point appui - des objets $O_{12}$ et $O_9$, dans la mesure où elle signifie que la société concurrent objet $O_{10}$, investit dans le produit A bien que la technologie $X_1$ soit difficile. Cette contradiction conduit à attribuer à $O_{10}$ le type "étape décisionnelle" ou "bifurcation forte", à $O_9$ et $O_{12}$, le type "genèse de bifurcation forte" et à $O'_{10}$, qui est la zone d'intérêt associée à $O_{10}$, le type "objectif opérationnel sous haute surveillance". De ce fait, l'objet $O_{11}$ qui est relié à $O'_{10}$ devient de type présomption (OPA importante), l'utilisation de $O_{11}$ étant OPA. La figure 14A donne les schémas décisionnels de l'agent GM à la fin de RECO3 avant le dialogue final homme/machine.

Le processus décisionnel final avec dialogue homme/machine comporte plusieurs étapes, une première étape d'interprétation des chemins, une deuxième d'interprétation des étapes décisionnelles avec fusion des schémas et une troisième étape de fusion des interprétations et de décision machine.

Les règles d'interprétation des schémas sont les suivantes :

si but global = suivi budgétaire et restructuration, si retour RECO3 fait et si schéma dans GM = ($O_1$, $O_7$ ; $O_1$, $O_2$, $O_2'$, $O_{10}$, cycle ($O_{11}$, $O_{12} \equiv O_9$, $O_{10}$), $O_{10}'$ ; $O_1$, $O_6$, $O_8$, $O_{10}$, idem ; $O_1$, $O_5$, $O_{10}$, idem) :

⇒ rechercher les créateurs de chacun des schémas (retour branche $U_{fin}$, $U_{tech}$, $U_{mark}$) pour qualifier les schémas. Puis mémoriser les schémas

⇒ interpréter les schémas en utilisant les points d'appui

⇒ interpréter chemin finance : faire rechercher lien de $O_1$ (type = point d'appui, créateur = branche $U_{fin}$), si propriété de $O_2$ = écart TB et si utilisation de $O_2$, $O_2'$ = investissement produit A, si $O_2'$ relié à $O_{10}$, si utilisation $O_{10}$ = nouvel entrant et si type $O_1$ = présomption produit A critique, alors mémoriser l'interprétation : "le produit A critique a des écarts budgétaires dans les investissement, en interne et chez un nouvel entrant (fusion schéma$_{fin}$ et schéma $_{tech}$)"

Puis l'agent GM procède d'une manière analogue à l'interprétation du chemin technique en demandant des liens de l'objet $O_1$ du type = point d'appui, dont le créateur est la branche $U_{tech}$ dans le schéma$_{tech}$. Ceci implique le retour de l'objet $O_8$. Dans les conditions, si propriété $O_8$ = écart TB, si utilisation de $O_8$ = plan développement produit A, si $O_8$ est relié à $O_9$ qui est la technologie $X_1$, si la propriété de $O_9$ = risque et difficile, il convient alors de mémoriser l'interprétation du chemin technique :

"il y a des écarts budgétaires dans le plan de développement du produit A, qui sont reliés à une technologie difficile $X_1$".

Puis l'agent GM doit interpréter le chemin marketing demandant les liens de $O_1$ du schéma marketing. Il n'y a aucun objet en retour. Alors on mémorise l'interprétation du chemin marketing : néant.

La deuxième étape, d'interprétation d'étape décisionnelle avec fusion des schémas, se déroule en application de règles d'interprétation d'étape décisionnelle, qui impliquent la recherche des bifurcations fortes dans les liens de $O_1$ et la recherche de la genèse de cette bifurcation forte dans les liens de l'objet $O_{10}$.

Dans les conditions, si type ($O_{10}$) = étape décisionnelle (contradiction forte), si utilisation de $O_{12}$ = brevet concurrent, si utilisation ($O_9$) = technologie et si propriété $O_9$ = difficile, si utilisation de $O_{10}$ = nouvel entrant = sous-catégorie de concurrent, il faut mémoriser l'interprétation :

"Une bifurcation forte concerne le nouvel entrant Y. C'est une contradiction forte car la technologie difficile X a été brevetée récemment par le nouvel entrant. On procède ainsi à la fusion du schéma mark et schéma tech".

La troisième étape des fusions des interprétations et de décision machine, impliquant un premier dialogue homme/machine a lieu selon des règles pré-établies selon lesquelles dans le but suivi budgétaire et restructuration, en fonction des interprétations des schémas et de l'étape décisionnelle, l'agent GM doit faire l'interprétation finale suivante :

"Le produit A est critique, avec des écarts budgétaires dans les investissements, en interne et chez un nouvel entrant Y. Il y a des écarts budgétaires dans le plan de développement du produit A, reliés à une technologie difficile $X_1$. Une bifurcation forte concerne le nouvel entrant Y. C'est une contradiction forte car la technologie difficile $X_1$ a été brevetée récemment par le nouvel entrant".

L'agent GM doit maintenant prononcer la décision machine selon la règle : si des écarts budgétaires sur un produit A sont reliés à une technologie difficile brevetée par la concurrence, mémoriser décision machine :

Tendance décision machine = continuer produit A.

Il convient de mettre à jour l'objet de dialogue représentant la machine:

$\mu^2 O_{M1}$

→ propriété (tendance décision machine)

→ utilisation (continuer produit A).

Il est à noter que l'interprétation finale est la concaténation des interprétations des schémas et de l'étape décisionnelle et que la machine prend sa décision sur l'association de trois faits, à savoir les écarts budgétaires concernant le produit A, la technologie difficile et le brevet concurrent.

L'agent GM demande selon des règles de dialogue 1 la confirmation humaine :

si but global = suivi budgétaire et restructuration, si retour RECO3, si interprétation faite, s'il existe $O_{M1}$, type = interopérabilité, lié à $O_1$, et si propriété $O_{M1}$ = tendance décision machine, si utilisation $O_{M1}$ = continuer produit A, si présomption $O_1$ = produit A critique,

⇒ appel opérateur : la présomption de l'indice $O_1$ est : produit A critique. La tendance de la décision machine est : continuer produit A. Décision humaine sur $O_1$ ? choix :

- continuer produit A

- demander plus d'informations
- arrêter produit A
- analyse en cours (réponse par défaut)

⇒ faire mise à jour :

$\mu^3 O_{M1}$

→ Propriété (question)
→ Utilisation (quelle est la décision humaine sur $O_1$?) $\mu^3 O_{H1}$
→ Propriété (réponse)
→ Utilisation (analyse en cours)

En d'autres termes, la décision humaine demandée porte sur l'indice $O_1$. Une autre décision humaine demandée portera sur d'autres objets, par exemple $O_{11}$, pour mesurer l'importance de l'OPA que représente $O_{11}$. La conclusion de ce dialogue sera que $O_{11}$ est de type "présomption", de nature "OPA dangereuse".

Il est à noter également que le dialogue homme-machine est souple grâce à la réponse par défaut "analyse en cours" qui permet à la machine de continuer même si l'homme n'a pas encore répondu.

On met encore en oeuvre une règle de relance de l'opérateur et de décision sur $O_1$ qui aboutit à la mise à jour, si la décision humaine est "continuer le produit A"

$\mu^4 O_{H1}{}^{\mu 1 + \mu 2 + \mu 3}$

→ utilisation (continuer produit A).

A la suite de l'appel opérateur "avez-vous d'autres informations à fournir", et le retour "écarts budgétaires sont dus à la technlogie difficile et stratégique", GM fait la mise à jour sur l'objet $O_1$ en affirmant la décision de la machine :

$d^3 O_1$

→ Type (décision : continuer produit A)
→ Créateur (machine confirmée par homme)
→ Propriété (écart TB dû à la technologie stratégique).

A ce stade, le type de l'objet $O_1$ est passé de "présomption" à "décison". Des synergies entre les indices $O_1$ et $O_3$ sont établies, montrant l'importance des OPA concurrentes. C'est cette information qui fera basculer la décision des actionnaires qui confirmeront la décision machine.

Après cette mise à jour, l'agent GM arrête l'invariant 5. Bien entendu si l'homme souhaite des précisions sur les objets qui ont été créés et connaître d'autres aspects qui n'ont pas encore été approfondis jusqu'à présent, le système continue en fonction des règles de but et de stratégie et de dialogue homme-machine préétabli.

La Figure 14 illustre les résultats du processus décisionnel à la fin de l'invariant 5, c'est-à-dire de décision et du dialogue homme-machine, qui vient d'être décrit. Ces résultats sont présentés sous forme des chemins décisionnels dans la base de données des objets de connaissances portables et base des connaissances structurées, pour chaque agent, à savoir l'agent GM et les agents fils $U_{fin}$, $U_{mark}$ et $U_{tech}$, qui représentent respectivement un système collectif CKM et des systèmes individuels IKM. Dans les bases de données et de connaissances structurées, les objets de connaissance sont reliés dans l'ordre de leur création. La configuration des objets de connaissance ainsi reliés constitue un chemin ou schéma décisionnel qui représente le point de départ et le point d'arrivée du raisonnement qui a été fait, avec des microdécisions intermédiaires constituées par les objets se trouvant entre les points de départ et d'arrivée. Les différents chemins décisionnels codent le raisonnement, c'est-à-dire un processus dynamique, par une structure d'objets statique.

On constate que les bases de stockage et des connaissances structurées de l'agent GM comportent les trois chemins décisionnels des agents $U_{fin}$, $U_{mark}$ et $U_{tech}$, chacun des agents illustrant le chemin décisionnel entre les objets $O_1$ et $O_{10}$ parcouru dans leur domaine de compétence spécifique. L'agent GM fusionnant les trois chemins ou schémas décisionnels fait ainsi une fusion des connaissances individuelles reflétant des raisonnements faits par des personnes différentes ayant étudié le même problème, sous des points de vue différents du monde réel, et chacun dans son domaine.

Le procédé de pilotage d'un processus décisionnel, selon l'invention, aboutit ainsi à la réalisation et au stockage d'une structure compacte et simple pour des chemins décisionnels à dynamique complexe. Le procédé devient un procédé de pilotage de multiples processus décisionnels établissant l'intelligence collective.

Il est à noter que le processus décisionnel par la détection d'événements survenus dans le monde réel qualifiés d'indices, de points d'appui et d'accidents arrive au stade final de la décision en passant par une première phase appelée présomption constituant une bifurcation de niveau 1 qui est faible dans le raisonnement, reflétant une simple tendance et une étape décisionnelle, appelée bifurcation de niveau 2, qui est une bifurcation forte indiquant clairement la direction dans laquelle le raisonnement doit progresser.

L'étape de présomption ou bifurcation faible se constate par exemple par induction lorsque deux objets présentent un certain type de lien, par exemple lorsqu'un indice est relié à un point d'appui, comme l'objet $O_1$ du type "indice" qui est relié à l'objet $O_2$ du type "point d'appui". On est également en face d'une présomption lorsqu'un objet est relié à un objectif opérationnel comme par exemple l'objet $O_{11}$ qui est relié à l'objet $O'_{10}$ ("OPA critique") en devenant ainsi une présomption d'être un objet critique. On est aussi en face d'une présomption si on constate un changement de forme, c'est-à-dire si un objet prend de plus en plus d'importance, par exemple lorsqu'un objet détecté sous forme d'un axe devient une tâche ou une zone, la présomption se présente alors sous forme d'une situation importante. Tel fut le cas de l'objet $O_{10}$.

Une étape décisionnelle ou bifurcation forte est constatée sous forme d'une contradiction forte comme dans le présent exemple d'une technologie difficile qui est pourtant brevetée par un concurrent.

La présente invention réalise une prise de décision collective de plusieurs machines, chacune en coopération avec son utilisateur, représentant une prise de décision collective selon plusieurs schémas décisionnels humains.

Le mode de représentation des schémas décisionnels sous forme de liens successifs entre des objets portables distribués entre plusieurs utilisateurs permet de capitaliser et stocker, de façon compacte et flexible les schémas décisionnels humains et ainsi d'optimiser la capitalisation des connaissance et du capital immatériel collectif.

L'invention vient d'être décrite dans l'application du suivi budgétaire et restructuration. Bien entendu, l'invention est utilisable dans d'autres domaines et se déroulera selon des règles de but, de stratégie et de plan analogues à celles qui viennent d'être décrites, selon le principe qui ressort de la présente description.

Il est encore à noter que le système de l'invention est un système à auto-apprentissage. En effet, si le système pilotant les machines selon les règles établies, arrive à une situation non prévue, le système s'arrête et signale cet arrêt à l'homme. Celui-ci a la possibilité d'entreprendre lui-même le pilotage de la suite du processus décisionnel, bien entendu selon des règles correspondant à celles selon lesquelles fonctionnent les machines. Le système mémorisera le pilotage fait par homme et sera ainsi en mesure de piloter la prochaine fois lui-même le processus qu'il était obligé d'arrêter la première fois.

En résumé, l'invention porte sur un procédé d'intelligence artificielle collective et distribuée entre plusieurs utilisateurs. Elle automatise l'intelligence humaine. Le procédé s'appuie sur la standardisation des raisonnements humains, par l'intermédiaire des invariants cognitifs, tels que montrés dans l'exemple du suivi budgétaire et restructuration. Cette standardisation permet de ne pas définir tous les cas possibles de raisonnements humains, et de ne stocker dans les machines que les grands invariants du raisonnement. Ainsi, le procédé peut s'adapter à différentes applications et à l'apprentissage par généralisation d'une connaissance standard vers une connaissance adaptative.

L'invention est en particulier transposable de l'application à la gestion intégrée d'entreprise à l'analyse et la décision collective dans le domaine des marchés boursiers.

**Annexe I**         **Règles Spécifiques de But et de Stratégie d'Invariant 1 de GM, UM, C à l'Initialisation**

## GM

Règle de But
[si But = Suivi Budget & Restruct (d°1, Cond1, Profil CKM, Etat, Structure K), si Cond1 = (Rapide, Coût faible), si Profil = Standard, si Etat = Init, si Structure K = DH,
→ Strat = Strat1 (But Global, Cond1, Profil, Etat, DH)  = strat 1.0 + strat 1.1 + strat 1.2]

Règle de Strat 1.0 (structuration de services)
[Si Strat = Strat 1.0 (But Global, Cond1, Profil, Etat, GM), si But Global = Suivi Budget & Restruct, si Cond1= (Rapide, Coût faible), si Profil = Standard, si Etat = Init,
→ Envoyer But1 = Strat 1.0 (But Global, Cond1, Profil, GM) à COTS Services CKM
→ Si retour COTS Services = Services 1, Services 1 = $(U_{Fin}, U_{Mark}, U_{Tech})$, créer les agents utilisateurs maître (UM) = Services 1 et faire fin Strat 1.0 (Services 1)]

Règle de Strat 1.1 (structuration de données)
[Si Strat = Strat 1.1 (But Global, Cond1, Profil CKM, Etat, Services 1, Structure K), si But Global = Suivi Budget & Restruct, si Cond1= (Rapide, Coût faible), si Profil = Standard, si Etat = Init, si Services 1 = $(U_{Fin}, U_{Mark}, U_{Tech})$, si Structure K = DH
→ Envoyer But1 = Strat 1.1 (But Global, Cond1, Services 1, DH) à COTS Données CKM
→ Si retour COTS Données = Données 1, Données 1 = $(DM_{Fin}, DM_{Mark}, DM_{Tech})$ extrait de DH, faire structure k(n-1) = Données 1 et faire fin Strat 1.1 (Données 1)]

Règle de Strat 1.2 (invariant 1)
[Si Strat = Strat 1.2 (But Global, Cond1, Profil, Etat, Structure K, si But Global = Suivi Budget & Restruct, si Cond1= (Rapide, Coût faible), si Profil = Standard, si Etat = Init, si Structure K = $(DM_{Fin}, DM_{Mark}, DM_{Tech})$,
→ Envoyer But = Strat 1.2 = Détection indices (But Global, Cond1, Etat, $DM_{Fin}$ ) à $U_{Fin}$]

EP 1 199 678 A1

**Annexe I**    **Règles Spécifiques de But et de Stratégie d'Invariant 1 de GM, UM, C à l'Initialisation**

$U_{Fin}$

Règle de But
[si But = Détection indice (But Global, Cond1, Profil $IKM_{Fin}$, Etat, $DM_{Fin}$), si But Global = Suivi Budget & Restruct, si Cond1 = (Rapide, Coût faible), si Profil = Standard, si Etat = Init,
→ Strat = Strat1 (But Global, Cond1, Profil $IKM_{Fin}$, Etat, $DM_{Fin}$)]

Règle de Strat 1.0
[Si Strat = Strat 1.0 (But Global, Cond1, Profil, Etat, $U_{Fin}$), si But Global = Suivi Budget & Restruct, si Cond1= (Rapide, Coût faible), si Profil = Standard, si Etat = Init,
→ Envoyer But1 = Strat 1.0 (But Global, Cond1, Profil, Etat) à COTS Services $IKM_{Fin}$
→ Si retour COTS Services = Services 1, Services 1 = ($C_{Compta}$, $C_{Invest}$, $C_{eco-Pol}$), créer les agents Canal = Services 1 et faire fin Strat 1.0 (Services 1)]

Règle de Strat 1.1
[Si Strat = Strat 1.1 (But Global, Cond1, Profil, Etat, Services 1, Structure K(n)), si But Global = Suivi Budget & Restruct, si Cond1= (Rapide, Coût faible), si Profil = Standard, si Etat = Init, si Services 1 = ($C_{Compta}$, $C_{Invest}$, $C_{eco-Pol}$), si Structure K(n) = $DM_{Fin}$,
→ Envoyer But1 = Strat 1.1 (But Global, Cond1, Profil, Etat, Services 1, $DM_{Fin}$) à COTS Données $IKM_{Fin}$
→ Si retour COTS Données = Données 1, Données 1 = (($DM_{Compta}$, $DM_{Invest}$) extrait de $DM_{Fin}$ et $DM_{Eco-Pol}$ extraits de DH), faire structure K (n-1) = Données 1 et faire fin Strat 1.1 (Données 1)]

Règle de Strat 1.2
[Si Strat = Strat 1.2 (But Global, Cond1, Profil, Etat, Structure K), si But Global = Suivi Budget & Restruct, si Cond1= (Rapide, Coût faible), si Structure K = ($DM_{Compta}$, $DM_{Invest}$, $DM_{Eco-Pol}$),
→ Envoyer But = Strat 1.2 = Détection indice par canal (But Global, Cond1, Profil, Etat, $DM_{Compta}$ ) à $C_{Compta}$,
→ Envoyer But = Strat 1.2 = Détection indice par canal (But Global, Cond1, Profil, Etat, $DM_{Eco-Pol}$ ) à $C_{eco-Pol}$]

EP 1 199 678 A1

**Annexe I**    **Règles Spécifiques de But et de Stratégie d'Invariant 1 de GM, UM, C à l'Initialisation**

**$C_i$ pour i = Compta et i = Eco-Pol**

<u>Règle de But</u>
[si But = Détection indice par canal (But Global, Cond1, Profil, Etat, $DM_i$), si But Global = Suivi Budget & Restruct, si Cond1 = (Rapide, Coût faible),
→ Strat = Strat1 (But Global, Cond1, Profil, $DM_i$)]

<u>Règle de Strat 1.0</u>
[Si Strat = Strat 1.0 (But Global, Cond1, Profil, Etat) appliquée à $CM_i$, si But Global = Suivi Budget & Restruct, si Cond1= (Rapide, Coût faible), si Profil = Standard, si Etat = Init,
→ Envoyer But1 = Strat 1.0 (But Global, Cond1, Profil, Etat) à COTS Services $IKM_{Fin}$
→ Si $CM_i$ = $CM_{Compta}$, et si retour COTS Services = Services 1, Services 1 = ($P_{Etats Fin}$, $P_{Cycle Inv}$, $P_{Cycle Fin}$), créer les agents Pistes = Services 1 et faire fin Strat 1.0 (Services 1)
→ Si $CM_i$ = $CM_{Eco-Pol}$, et si retour COTS Services = Services 1, Services 1 = ($P_{Irak}$, $P_{Asie}$), créer les agents Pistes = Services 1 et faire fin Strat 1.0 (Services 1)]

<u>Règle de Strat 1.1</u>
[Si Strat = Strat 1.1 (But Global, Cond1, Profil, Etat, Services 1, Structure K(n)) appliquée à $CM_{Compta}$, si But Global = Suivi Budget & Restruct, si Cond1= (Rapide, Coût faible), si Services 1 = ($P_{Etats Fin}$, $P_{Cycle Inv}$, $P_{Cycle Fin}$), si Structure K(n) = $DM_{Compta}$,
→ Envoyer But1 = Strat 1.1 (But Global, Cond1, Services 1, $DM_{Compta}$) à COTS Données $IKM_{Fin}$
→ Si retour COTS Données = Données 1, Données 1 = ($DM_{Etats Fin}$, $DM_{Cycle Inv}$, $DM_{Cycle Fin}$) extrait de $DM_{Compta}$, faire structure K (n-1) = Données 1 et faire fin Strat 1.1 (Données 1)]

[Si Strat = Strat 1.1 (But Global, Cond1, Profil, Etat, Services 1, Structure K(n)) appliquée à $CM_{Eco-Pol}$, si But Global = Suivi Budget & Restruct, si Cond1= (Rapide, Coût faible), si Services 1 = ($P_{Irak}$, $P_{Asie}$), si Structure K(n) = $DM_{Eco-Pol}$,
→ Envoyer But1 = Strat 1.1 (But Global, Cond1, Services 1, $DM_{Eco-Pol}$) à COTS Données $IKM_{Fin}$
→ Si retour COTS Données = Données 1, Données 1 = ($DM_{Irak}$, $DM_{Asie}$) extrait de $DM_{Eco-Pol}$, faire structure K(n-1) = Données 1, et faire fin Strat 1.1 (Données 1)]

EP 1 199 678 A1

**Annexe I**      **Règles Spécifiques de But et de Stratégie d'Invariant 1 de GM, UM, C à l'Initialisation**

<u>Règle de Strat 1.2</u>

[Si Strat = Strat 1.2 (But Global, Cond1, Profil, Etat, Structure K) appliquée à $CM_{Compta}$,, si But Global = Suivi Budget & Restruct, si Cond1= (Rapide, Coût faible), si Structure K = ($DM_{Etats\ Fin}$, $DM_{Cycle\ Inv}$, $DM_{Cycle\ Fin}$),

→ Envoyer But = Strat 1.2 = Détection indice par piste (But Global, Cond1, Profil, Etat, $DM_{Etats\ Fin}$ ) à $P_{Etats\ Fin}$]

[Si Strat = Strat 1.2 (But Global, Cond1, Profil, Etat, Structure K) appliquée à $CM_{Eco\text{-}Pol}$,, si But Global = Suivi Budget & Restruct, si Cond1= (Rapide, Coût faible), si Structure K = ($DM_{Irak}$, $DM_{Asie}$),

→ Envoyer But = Strat 1.2 = Détection indice par piste (But Global, Cond1, Profil, Etat, $DM_{Asie}$ ) à $P_{asie}$]

EP 1 199 678 A1

## Annexe II

**Règles Génériques de Buts et Stratégies et d'Invariant 2 de GM, UM, C**

<u>Règle de But Générique de GM</u>

[Si But = But Global (d°1, Cond1, Profil CKM, Structure K, Etat) et si retour de Détection Indice = $O_i$ de $UM_i$, si retour appel Op1

$(O_i)$ = oui), si retour appel Op2 = $(O_i)$ = non

..> Strat – Strat 1.2 et Strat2 $(O_i)$]

<u>Règle de Stratégie Générique de GM (Validation) (Strat 2)</u>

[Si Strat = Strat 2 $(O_i)$ (But Global, Cond1, Profil, Etat, Structure K(n)), si Services Associés à l'Agent n = Services 1,

$\Rightarrow$ Rechercher Structure K(n-1) associée à Structure K(n) et à Services 1

$\Rightarrow$ Envoyer But 1 = Strat 2 $(O_i$, But Global, Cond1, Profil CKM, Etat, Structure K(n-1) à $UM_i$ selon Cond1]

EP 1 199 678 A1

**Règles Génériques de Buts et Stratégies d' Invariant 2 de GM, UM, C**

Règle de But Générique de UM, C (Validation)

[Si But = But Local 2 ($O_i$, But Global, Cond1, Profil CKM ou IKM, Etat, Structure K)

⇒ Strat = Strat 2 ($O_i$, But Global, Cond1, Profil CKM ou IKM, Etat, Structure K)]

Remarque : *Les Agents en dessous de UM transmettent Profil IKM. Seuls GM et UM reçoivent Profil CKM.*

Règle de Stratégie Générique UM, C(Structuration et Invariant 2) (Ensemble de Stratégies)

[Si Strat = Strat 2 ($O_i$) (But Global, Cond1, Profil, Etat, Structure K(n)), si Etat = INIT

⇒ Rechercher si Agent (n-1) existent ; s'ils n'existent pas :

⇒ Faire Strat = Strat 1.0 (But Global, Cond1, Profil, Agent) (Structuration Services) (*voir Règles de Structuration d'Invariant 1*)

⇒ Si Fin Strat 1.0 = Services 1, faire Strat = Strat 1.1 (But Global Cond1, Profil, Services 1 Structure K(n)) (*Structuration Données*)

⇒ Si Fin Strat 1.1 = Données 1, faire Structure K(n-1) = Données 1, stocker dans mémoire M Structure K(n-1) associée à Structure K(n) et à Services 1, et faire Strat = Strat 2.2 ($O_i$, But Global, Cond1, Profil, Etat, Structure K(n)) (*Invariant 2*)

⇒ Si Agent (n-1) existent, faire Strat = Strat 2.2 (Invariant 2)]

## Règles Génériques de Buts et Stratégies et d'Invariant 2 de GM, UM, C

### Règle de Stratégie Générique de UM (Strat 2.2)

[Si Strat = Strat 2.2 ($O_i$, But Global, Cond1, Profil IKM, Etat, Structure K(n)), si Agent (n-1) = Services 1,

$\Rightarrow$ Rechercher dans M Structure K(n-1) associée à Structure K(n) et à Services 1

$\Rightarrow$ Envoyer But = Strat 2.2 = Validation-Canal ($O_i$, But Global, Cond1, Profil, Etat, Structure K(n-1)) à $CM_i$ selon Cond1]

### Règle de stratégie Générique de C (Strat 2.2)

[Si Strat = Strat 2.2 ($O_i$, But Global, Cond1, Profil IKM, Etat, Structure K(n)), si Agent (n-1) = Services 1, si Forme ($O_i$) extraite de Structure K',

$\Rightarrow$ Rechercher Structure K' dans Serveur de Données Structurées M

$\Rightarrow$ Rechercher Structure K(n-1) associée à Structure K(n) et à Services 1

$\Rightarrow$ Si Réponse Recherche = Structure K(n-1) et K', envoyer But = Strat 2.2 = Validation-Piste ($O_i$, But Global, Cond1, Profil, Etat, Structure K(n-1), K') à $PM_i$ selon Cond 1 et Propriété ($O_i$)]

Remarque : *La stratégie de validation du Maître Canal dépend des conditions de fonctionnement Cond1 et de certains champs de $O_i$, notamment l'origine de sa forme (qui donne le domaine auquel l'indice appartient) et le champ Propriété (qui donne le type de connaissance qu'on a de l'indice).*

EP 1 199 678 A1

**Revendications**

1. Procédé de pilotage de processus décisionnel lors de la poursuite d'un but global dans un domaine d'application déterminé, tel qu'économique, technique, organisationnel ou analogue, **caractérisé en ce que** l'on crée un système d'agents comportant des agents cognitifs créateurs d'objets de connaissances portables et des agents constructeurs d'objets de connaissances par ajout aux objets de connaissances créés, d'éléments de connaissances supplémentaires, on fait déclencher par le système le processus décisionnel à la suite de la constatation d'une anormalité dans des données réelles dudit domaine d'application par la création d'un premier objet de connaissance représentatif d'un indice d'alarme et fait établir plusieurs chemins décisionnels liés à cet objet, sous des points de vue différents par des agents différents, chacun dans son domaine, et on fait prendre la décision à la suite d'une fusion des chemins décisionnels.

2. Procédé selon la revendication 1, **caractérisé en ce que** l'on crée un système décisionnel comprenant un agent de groupe constituant un gestionnaire de connaissances collectif appelé CKM et plusieurs agents constituant des gestionnaires de connaissances individuels IKM, chacun dans un domaine de connaissance spécifique établi en fonction du but global poursuivi, qui sont associés à l'agent CKM et dont chacun dispose d'une structure d'agents créateurs et d'agents constructeurs d'objets de connaissances portables.

3. Procédé selon la revendication 2, **caractérisé en ce que** l'on fait établir par au moins certains des agents individuels IKM des chemins décisionnels individuels précités.

4. Procédé selon la revendication 3, **caractérisé en ce que** l'agent CKM est adapté pour fusionner les chemins décisionnels individuels précités établis par les agents IKM, créant ainsi un chemin décisionnel collectif.

5. Procédé selon l'une des revendications précédentes, **caractérisé en ce que** les chemins décisionnels sont établis au cours de plusieurs phases décisionnelles appelées invariants.

6. Procédé selon l'une des revendications 2 à 5, **caractérisé en ce qu'**après la recherche d'objets de connaissance représentatifs d'indices d'alarme et d'objets de connaissance représentant des points d'appui corrélés à ceux-ci, on recherche des événements importants constituant des accidents, qui sont liés à un objet d'indice d'alarme et crée pour chaque accident un objet de connaissance portable.

7. Procédé selon la revendication 6, **caractérisé en ce que** l'on reconnaît si deux objets portables différents, créés par deux agents différents selon deux points de vue, sont le même objet du monde.

8. Procédé selon la revendication 6, **caractérisé en ce que** l'on reconnaît si deux objets portables différents ont une proximité de caractéristiques telle qu'ils sont considérés comme duaux l'un de l'autre.

9. Procédé selon la revendication 6, **caractérisé en ce que** l'on met en oeuvre un invariant de recherche de fusion-connexion des objets de connaissance représentant des points d'appui et des accidents.

10. Procédé selon l'une des revendications 6 à 9, **caractérisé en ce que** l'on fusionne des objets de connaissance différents qui correspondent au même objet du monde.

11. Procédé selon l'une des revendications 1 à 10, **caractérisé en ce que** le processus décisionnel arrive au stade final de la décision en passant par une première phase appelée présomption constituant une bifurcation faible dans le raisonnement, reflétant une simple tendance, et une étape décisionnelle de bifurcation forte, qui indique clairement la direction dans laquelle le raisonnement doit progresser.

12. Procédé selon la revendication 11, **caractérisé en ce que** l'on conclu sur l'existence d'une présomption ou bifurcation faible lorsque deux objets de connaissance présentent un certain type de lien, notamment lorsqu'un objet d'indice est relié à un objet de point d'appui ou lorsqu'un objet est relié à un objectif opérationnel.

13. Procédé selon l'une des revendications 8 ou 12, **caractérisé en ce qu'**une bifurcation forte existe lorsque deux objets sont duaux et lorsque ces objets impliquent une contradiction au niveau du raisonnement.

14. Procédé selon l'une des revendications 8 à 13, **caractérisé en ce que** l'on met en oeuvre un invariant comportant la recherche de possibilités de fusion d'objets duaux.

**15.** Procédé selon l'une des revendications 9 à 14, **caractérisé en ce que** l'on prévoit dans un même objet de connaissance une fusion des éléments de connaissance, permettant de fusionner deux versions d'un même objet, crées par des agents différents et à des moments différents.

**16.** Procédé selon l'une des revendications précédentes, **caractérisé en ce que** l'on relie dans les agents CKM et IKM les objets de connaissance portables qui sont stockés dans une base de stockage associée à l'agent dans l'ordre de leur création, la configuration des objets ainsi obtenus constitue un chemin décisionnel précité représentant le point de départ et le point d'arrivée du raisonnement suivi au cours du processus décisionnel individuellement ou collectivement, avec des microdécisions intermédiaires constituées par les objets se trouvant entre les points de départ et d'arrivée.

**17.** Procédé selon la revendication 14, **caractérisé en ce que** les objets de connaissance construits au cours du processus décisionnel qui sont stokées dans un agent CKM ou IKM, sont placés avec indication de leur ordre de création, dans une base de connaissances structurées, avantageusement en catégories et sous-catégories.

**18.** Procédé selon l'une des revendications précédentes, **caractérisé en ce que** la prise de décision par le système implique avantageusement un dialogue homme/machine.

**19.** Procédé selon l'une des revendications précédentes, **caractérisé en ce qu'**il réalise la fusion de différents points de vue d'utilisateurs créant ainsi une intelligence collective qui pilote de multiples processus décisionnels.

**20.** Procédé selon l'une des revendications 1 à 19, **caractérisé en ce que** l'on stocke et capitalise les processus décisionnels qui deviennent réutilisables par différents utilisateurs et modifiables en vue d'apprentissage.

Fig. 1

_Fig. 2_  DM$_{CR}$

_Fig. 3_  DM$_{Asie}$

_Fig. 5_  DM$_{cycle\_inv}$

Fig. 4

Fig. 6

_Fig: 7_

Fig. 8

Fig. 9

Fig. 10

$O_1^*$

$O_6^{\Delta 1}$

$O_8^{\Delta 1}$

$O_9^{\Delta 1}$

$O_{10}'^{\Delta 1}$   $O_{10}^{\sum \Delta i}$

$U_{Tech}$

$C_{gs\text{-}proj}$   $C_{v\text{-}tech}$

$P_{conc}$   $P_{Presse}$

$\left(\Delta^2 + \Delta^3 + \Delta^4\right) O_{10}^{\Delta 1}, O_{10}'^{\Delta 1}$

**Fig. 11**

$A_{Presse}$

$\Delta^2 O_{10}^{\Delta 1}$

$\Delta^3 O_{10}^{\Delta 1 + \Delta 2}, O_{10}'^{\Delta 1}$

FOC   VAL   RECO

$O_{10}^{\Delta 1 + \Delta 2}$

$O_{10}'$

$O_{10}^{\Delta 1 + \Delta 2}$

$O_{10}^{\Delta 1 + \Delta 2 + \Delta 3}$

$O_{10}'^{\Delta 1}$

$O_{10}^{\Delta 1 + \Delta 2}$

$O_{10}'$

$\gamma$

Technologie

F&A   DM$_{press}$

$O_{10}'$

$O_{10}^{\Delta 1 + \Delta 2}$

Concurrents

**Fig. 12**

Délocalisation

Forte Croissance

$\gamma$

EP 1 199 678 A1

FIG. 13

Fig. 14 A

EP 1 199 678 A1

**Fig. 19 B**

**Office européen**
**des brevets**

**RAPPORT DE RECHERCHE EUROPEENNE**

Numéro de la demande

EP 00 40 2875

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | MAC INTOSH D J ET AL: "DISTRIBUTED AUTOMATED REASONING: ISSUES IN COORDINATION, COOPERATION, AND PERFORMANCE" IEEE TRANSACTIONS ON SYSTEMS, MAN AND CYBERNETICS,US,IEEE INC. NEW YORK, vol. 21, no. 6, 1 novembre 1991 (1991-11-01), pages 1307-1316, XP000271247 ISSN: 0018-9472 | 1-5 | G06N5/04 |
| A | * abrégé * * page 1307, colonne de droite, ligne 15 - ligne 28 * * page 1309, colonne de droite, ligne 53 - page 1311, colonne de gauche, ligne 5 * | 11 | |
| X | WONG S T C: "PREFERENCE-BASED DECISION MAKING FOR COOPERATIVE KNOWLEDGE-BASED SYSTEMS" ACM TRANSACTIONS ON INFORMATION SYSTEMS,US,ASSOCIATION FOR COMPUTING MACHINERY, NEW YORK, vol. 12, no. 4, 1 octobre 1994 (1994-10-01), pages 407-435, XP000498551 ISSN: 1046-8188 | 1-5 | DOMAINES TECHNIQUES RECHERCHES (Int.Cl.7) G06N |
| A | * abrégé * * page 409, ligne 18 - ligne 28; figures 1,2 * * page 424, ligne 12 - page 425, ligne 7 * | 11 | |

-/--

Le présent rapport a été établi pour toutes les revendications

| Lieu de la recherche | Date d'achèvement de la recherche | Examinateur |
|---|---|---|
| LA HAYE | 2 avril 2001 | Kingma, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 199 678 A1**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | ADLER R M ET AL: "A DEVELOPMENT FRAMEWORK FOR DISTRIBUTED ARTIFICIAL INTELLIGENCE", PROCEEDINGS OF THE CONFERENCE ON ARTIFICIAL INTELLIGENCE APPLICATIONS,US,WASHINGTON, IEEE COMP. SOC. PRESS, VOL. CONF. 5, PAGE(S) 115-121 XP000090972 ISBN: 0-8186-1902-3 * abrégé * * page 120, colonne de gauche, ligne 5 - ligne 18; figure 3 * ----- | 1 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 2 avril 2001 | Kingma, Y |